(19) Europäisches Patentamt
European Patent Office
Office européen des brevets

(11) Numéro de publication: **0 027 563**
**B1**

# (12) FASCICULE DE BREVET EUROPEEN

(45) Date de publication du fascicule du brevet: **09.03.88**

(51) Int. Cl.$^4$: **B 41 J 3/02,** B 41 J 3/00

(21) Numéro de dépôt: **80105786.0**

(22) Date de dépôt: **25.09.80**

## (54) Générateur de signaux pour imprimante à matrice de fils.

(30) Priorité: **19.10.79 US 86493**

(43) Date de publication de la demande:
**29.04.81 Bulletin 81/17**

(45) Mention de la délivrance du brevet:
**09.03.88 Bulletin 88/10**

(84) Etats contractants désignés:
**BE CH DE FR GB IT LI NL**

(56) Documents cités:
**US-A-4 024 506**
**US-A-4 169 684**

(73) Titulaire: **International Business Machines Corporation**
**Old Orchard Road**
**Armonk, N.Y. 10504 (US)**

(72) Inventeur: **Leontiades, Kyriakos Leonidas**
**353 NW 22nd Street**
**Boca Raton Florida 33431 (US)**

(74) Mandataire: **Colas, Alain**
**Compagnie IBM France Département de Propriété Intellectuelle**
**F-06610 La Gaude (FR)**

**EP 0 027 563 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention concerne les imprimantes à matrice de fils et plus particulièrement, un générateur de signaux à appliquer aux éléments d'impression d'une imprimante à matrice de fils à têtes obliques pour provoquer l'impression de caractères définis.

Les imprimantes à matrice et plus particulièrement les imprimantes à matrice de fils sont conçues pour imprimer des types différents de caractères. Il est particulièrement intéressant de noter que ces machines peuvent imprimer des caractères couramment utilisés en Extrême-Orient tel que les caractères japonais classiques connus sous le nom de caractères Kanji. Ces caractères peuvent être imprimés par un matrice de 18 points sur 18 points avec deux colonnes de points supplémentaires entre les caractères si bien que chaque caractère requiert une distance horizontale de 20 points et une distance verticale de 18 points. Les têtes d'impression à matrice de fils classiques du type comportant une seule rangée verticale de fils peuvent être facilement commandées pour imprimer les matrices de 20 points sur 18 points requises pour l'impression des caractères Kanji en envoyant des données à chacun des fils de la tête d'impression lorsque celle-ci se déplace sur le papier. Cependant, dans le cas d'une imprimante à matrice de fils à têtes d'impression obliques dans laquelle chaque fil se trouve sur un caractère différent, il devient très compliqué de commander les données appliquées aux têtes d'impression pour que le fils appropriés soient déclenchés à l'instant approprié pour former les caractères désirés.

Les documents US—A.4.024.506 et 4.169,684 décrivent des dispositifs d'impression dans lesquels les données d'image de tête sont fournies aux fils d'impression d'une façon complexe et lente. Plus particulièrement, un tel dispositif d'impression comporte un registre à décalage permettant d'emmagasiner les données d'image de tête pour tous les fils d'impression et ce, à un instant donné. Avant de fournir les données à la tête d'impression, pour actionner les fils d'impression désirés, il faut que pour chaque caractère à imprimer, ce caractère, contenu dans un générateur de caractères (ROM), soit lu et qu'un bit de données soit isolé et emmagasiné dans une position du registre à décalage. Cette opération doit être effectuée pour chaque colonne de chaque matrice de caractères à imprimer sur une ligne. Un tel registre à décalage ne peut emmagasiner, à un instant donné, qu'un seul bit de donnée pour chacun des différents caractères.

La présente invention concerne un générateur de signaux pour imprimante à matrice pour l'impression de caractères sur un milieu d'enregistrement. L'imprimante comprend au moins une tête d'impression qui se déplace devant le milieu d'enregistrement. La tête d'impression comprend plusieurs éléments d'impression, chacun de ces éléments d'impression pouvant être commandé pour provoquer l'impression d'un symbole. Les éléments d'impression sont disposées les uns par rapport aux autres le long d'un axe oblique par rapport à la trajectoire de la tête d'impression de sorte que, à un instant donné, les différents éléments d'impression sont respectivement positionnés sur différents caractères. Le générateur de signaux comprend: des premiers moyens délivrant des données qui représentent des configurations de symboles constitutifs de caractères, chaque configuration de symboles étant inclue dans une matrice de caractère; un élément supplémentaire de mémoire dans lequel les données, provenant dudit générateur de signaux et correspondants à tous les caractères à imprimer dans une ligne donnée, peuvent être emmagasinées et duquel les données emmagasinées définissant un caractère entier peuvent être lues; des seconds moyens pour emmagasiner dans l'élément de mémoire les données de configuration de symboles pour un caractère entier et ce, selon une disposition semblable à la configuration de la position des éléments d'impression, et des troisièmes moyens pour lire les données emmagasinées dans l'élément de mémoire colonne par colonne ou rangée par rangée et pour commander le déclenchement des éléments d'impression.

Le dispositif selon la présente invention permet de simplifier énormément les circuits ou les temps de traitement de données, en utilisant une mémoire de lecture/écriture supplémentaire et indépendante, dans laquelle les données, provenant du générateur de caractères et correspondant à tous les caractères à imprimer dans une ligne donnée, sont emmagasinées selon une disposition semblable à la configuration des fils d'impression de la tête d'impression.

Les données ayant été ainsi emmagasinées dans la mémoire supplémentaire, peuvent en être facilement extraites selon un format facilement adressables (tel que par colonnes de bits) et envoyées pour contrôler les différents fils d'impression. Le dispositif de la présente invention est beaucoup plus rapide et requiert beaucoup moins de circuits que les dispositifs de l'art antérieur, notamment ceux cités par l'examinateur.

D'autres objets, caractéristiques et avantages de la présente invention ressortiront mieux de l'exposé qui suit, fait en référence aux dessins annexés à ce texte, qui représentent un mode de réalisation préféré de celle-ci.

La Figure 1 est une représentation schématique simplifiée du système d'impression de la présente invention.

La Figure 2 est une représentation de la console et d'un certain nombre d'éléments composant l'imprimante de la présente invention.

La Figure 3 est une vue de l'avant de l'imprimante disposée dans la console de la figure 2.

La Figure 4 représente un bloc d'impression de setp têtes à neuf fils par tête qui se déplace latéralement entre les positions représentées.

La Figure 5 représente trois caractères de type Kanji imprimés par la tête d'impression de la Figure 4.

La Figure 6 représente un bloc d'impression comportant quatre têtes à neuf fils.

La Figure 7 est une représentation schématique de l'unité de commande d'impression.

La Figure 8 est une représentation schématique plus détaillée de la mémoire d'image de fils et du générateur d'images de tête de la Figure 7.

La Figure 9 représente certain signaux utiles pour la compréhension de la Figure 8.

Les Figures 10 à 13 représentent le déroulement d'un programme du microprocesseur de commande de la Figure 7 qui provoque l'emmagasinage d'une image de fils désirée dans la mémoire d'images de fils.

Les Figure 14A à 14D assemblées pour former la Figure 14, représentent une carte de la mémoire d'images de fils pour une imprimante à sept têtes, et

Les Figures 15A à 15D assemblées pour former la Figure 15, représentent une carte de la mémoire d'images de fils pour une imprimante à quatre têtes.

Afin de mieux expliquer le dispositif de la présente invention, celui-ci sera décrit en association avec une imprimante à matrice de fils fonctionnant à grande vitesse et capable d'imprimer approximativement 145 lignes de caractères Kanji par minute sur une bande de papier continue. L'imprimante particulière est associée à un système calculateur principal et répond à des signaux d'exécution et de données issus du système principal pour imprimer la bande de papier et délivre des signaux d'étant au calculateur principal pendant sont fonctionnement.

L'imprimante est conçue pour répondre aux différentes normes d'imprssion des systèmes de traitement de données, de rassemblement de données, d'entrée de données et de communication. Elle peut être utilisée comme une imprimante système ou comme une imprimante de station à distance. L'imprimante particulière décrite ici est capable d'imprimer soit des caractères alpha-numériques classiques soit des caractères Katakana alpha-numériques (ANK), soit des caractères plus complexes du type Kanji. L'imprimante est conçue de façon qu'approximativement 3700 caractères Kanji différents soient définis en mémoire inaltérable. En raison des dizaines de milliers de caractères Kanji différents, on a en outre prévu une mémoire de lecture et d'écriture dans laquelle des codes définissant des caractères Kanji supplémentaires utilisés à la demande des clients ou des caractères nouvellement définis tels que des sigles, peuvent être emmagasinés. Ce type de caractère est applé par la suite caractère Gaiji.

Mécaniquement, l'imprimante est pratiquement similaire aux imprimantes de ce type connues dans l'art antérieur. Cependant, le bloc d'impression contient sept têtes d'impression de neuf fils chacune au lieu de huit têtes d'impression de huit fils chacune et ensuite, le système d'alimentation du papier permet d'avancer les feuilles sur de faibles distances de façon à autoriser l'impression entre des points précédemment imprimés.

La Figure 1 représente à titre d'exemple un système comprenant un système principal 1 et le système d'impression 2 qui comprend une unité de commande d'impression 3 et les circuits électroniques d'impression 4. Les signaux d'exécution et de données sont délivrés par le système principal à l'unité de commande d'imprimante 3 au moyen de la barre omnibus 5 et les signaux d'exécution et de commande sont délivrés de l'unité de commande d'impression 3 aux circuits électroniques d'impression 4 par la barre omnibus 6. Les signaux d'état sont délivrés par l'unité de commande d'impression 3 au système principal 1 au moyen de la barre omnibus 5. D'une manière classique, le système principal 1 génère des informations comprenant des ordres et des données et contrôle des états. L'unité de commande d'impression 3 reçoit les ordres et les données, décode les ordres, recherche les erreurs et génère des informations d'état, commande l'impression et l'espacement et contient les diagnostics d'impression. Les circuits électroniques d'impression 4 exécutent des orders décodés de l'unité de commande, contrôlent toutes les opérations effectuées par l'imprimante, déclenchent les fils d'impression, commandent les moteurs, détectent les signaux émis par les émetteurs d'impression et commandent les voyant lumineux du panneau de commande de l'opérateur et les circuits de commutation. Les circuits électroniques 4 commandent également l'ensemble éléments tracteurs/platine, le dispositif d'entraînement du ruban, le chariot porte-têtes d'impression, le panneau de commande de l'opérateur et les détecteurs d'impression.

Certains éléments du système telle que l'unité de commande d'impression 3 et les circuits électroniques d'impression 4, comprennent un ou plusieurs microprocesseurs ou microcalculateurs pour analyser les ordres et les données et pour commander les diverses opérations à effectuer.

Les Figures 2 et 3 représentent divers éléments de l'imprimante qui sont tous logés dans la console 10. Divers panneaux d'accès ou capots tels que les éléments 11, 12 et 13 sont prévus. Le capot supérieur 11 comporte une fenêtre 14 qui permit à l'opérateur d'observer le mouvement du papier pendant le fonctionnement de l'imprimante lorsque le capot est fermé. Le milieu d'enregistrement ou papier 15 est délivré à partir d'une pile 16 et peut être entraîné vers le haut ou vers le bas comme on le voit dans les Figures 2 et 3 au moyen d'un ensemble d'alimentation de papier 20 qui comprend un ou plusieurs ensembles d'éléments tracteurs de papier 90 et 91. Un guide-papier 28 guide le papier après l'impression vers une pile de réception (non représentée) disposée sous le dispositif d'impression et à l'arrière de la console de l'imprimante. L'imprimante comprend un ensemble d'impression 30 qui est généralement disposé dans un plan horizontal par rapport au papier 15 et qui est situé à la station d'impression 32. L'ensemble d'entraînement du ruban de l'imprimante 40 est disposé à l'avant de l'imprimante. L'unité de commande d'impression 3 et ses microprocesseurs associés sont généralement disposés derrière le capot latéral 13.

Un ruban 41 est enroulé sur l'une des bobines 42 ou 43 qui sont jetables. Chaque boîte de ruban contiendra de préférence un élément protecteur de ruban jetable 46 qui est monté sur des éléments de fixation flexibles 130 et 131 entre l'ensemble d'impression 30 et le papier 15 pour maintenir le ruban 41 en alignement approprié et pour réduire au minimum les taches d'encre sur la papier 15. Le ruban se déplace sur une trajectoire établie à l'avant de la tête d'impression autour des colonnettes 125, 126, 127 et 128. Deux moteurs entraînent le ruban 41 dans les deux sens par l'intermédiaire des bobines 42 et 43. L'unité de commande d'impression 3 détecte les bourrages du ruban et la fin du ruban (EOR). Un bourrage du ruban provoque l'illumination d'un voyant d'erreur et stoppe l'impression. Une condition EOR provoque l'inversion du sens d'entraînement du ruban.

L'imprimante comprend un tableau de commande d'opérateur 26 composé de plusieurs touches de commande, de deux voyants lumineux, d'un commutateur d'alimentation marche/-arrêt, d'une unité d'affichage, et d'une unité d'affichage de densité. Un commutateur de mode à seize positions 65 est disposé derrière la porte avant 12.

La Figure 4 représente un bloc d'impression 50 qui comprend sept groupes de neuf fils d'impression 52 et les dispositifs de commande associés (non représentés). Le bloc d'impression 50, les fils d'impression 52 et les dispositifs de commande d'impression sont connus dans l'art antérieur. Chaque groupe de neuf fils d'impression 52 est considéré comme une tête d'impression et les têtes d'impression sont respectivement référencées de 1 à 7. Les fils d'impression 51 sont respectivement numérotés de gauche à droite et de haut en bas 1 à 9, les fils 1 à 5 étant disposés sur une première ligne oblique de façon que les fils adjacents 52 soient séparés horizontalement par une distance de 10 mm et verticalement par une distance de 0,42 mm. Les fils 6 à 9 sont disposés sur une deuxième ligne oblique directement en-dessous des fils 1 à 5 et sont alignés verticalement à mi-chemin entre les fils 1 à 5. Le bloc d'impression 50 est conçu pour être entraîné depuis la position représentée dans la partie supérieure de la Figure 4, vers la droite, comme indiqué par la flèche 54. En fonctionnement normal, le bloc d'impression 50 se déplace vers une position représentée dans la partie inférieure de la Figure 4 et référencée 50A. Il est évident qu'il n'y a qu'un seul bloc d'impression 50 dans l'imprimante 2 et la Figure 4 représente les deux positions extrêmes d'un bloc d'impression 50. Normalement, la tête d'impression 50 se déplace vers la droite sur 5 cm, ce qui est la distance séparant les fils d'impression 1 des têtes d'impression adjacentes. Ceci est suffisant pour l'impression de 124 caractères du type ANK ou de 62 caractères Kanji, Cependant, lorsque l'on désire imprimer une ligne complète de 132 caractères ANK ou de 66 caractères Kanji, il est nécessaire entraîner la tête d'impression 50 sur 20, 32 mm supplémentaires comme indiqué par la flèche 54B pour l'amener dans la position représentée en 50AB. Après que la tête d'impression 50 soit passée dans la position de marge droite représentée par la tête d'impression 50A, la feuille 15 est déplacée sur une distance égale à un demi espacement vertical entre des fils d'impression adjacents 52 ou sur 0,21 mm. Puis, la tête d'impression 50, à partir de la position 50A, est déplacée de droite à gauche comme indiqué par la flèche 54A et ramenée à la position représentée par la tête d'impression 50.

Lorsque la tête d'impression 50 se déplace comme indiqué par la flèche 54 ou 54A, un détecteur-émetteur (non représenté) couplé à la tête d'impression, passe sur l'émetteur de signaux d'impression 56 qui délivre une impulsion électrique chaque fois que la tête d'impression parcourt 0,254 mm. Le circuit de commande des Figure 7 et 8 répond aux impulsions émises par l'émetteur d'impression en provoquant l'excitation des dispositifs de commande d'impression désirés afin de déclencher les fils d'impression 52, ce qui provoque l'impression de points sur la feuille 15. Les caractères 58 imprimés sur les feuilles 15 sont représentées alignés avec les deux positions 50 et 50A du bloc d'impression 50 et consistent en 62 mots Kanji d'une largeur de 20 points chacun, cette ligne pouvant être portée à 66 mots si le bloc 'impression 50 se déplace comme indiqué par la flèche 54B ou être composée de 124 caractères ANK ou être portée à 132 caractères ANK si le bloc d'impression 50 est déplacé comme indiqué par la flèche 54B.

La Figure 5 est une représentation détaillée de trois mots Kanji. Chacun des mots est inséré dans une matrice de points d'une largeur de 20 colonnes et d'une hauteur de 18 rangées. Un point peut être imprimé dans n'importe laquelle des 360 positions de chaque matrice. Cependant, les colonnes 19 et 20 de chaque matrice sont intentionnellement laissées en blanc pour permettre l'espacement entre des mots adjacents. Chaque mot peut être en outre décomposer en deux caractères de 10 colonnes chacun. Les rangées de chaque matrice sont alternativement imprimées au cours du mouvement de gauche à droite et du mouvement de droite à gauche du bloc d'impression 50. Ainsi, les rangées impaires peuvent être imprimées au cours du mouvement de gauche à droite du bloc d'impression 50 et les rangées paires peuvent être imprimées au cours du mouvement de droite à gauche du bloc d'impression 50. Plus précisément, la rangée 1 est imprimée par le fil 1 tandis que le bloc d'impression 50 est entraîné dans la position représentée par la flèche 54 et la rangée 2 est imprimée par le fil 1 lorsque le bloc d'impression 50 est entraîné dans la direction indiquée par la flèche 54A. Au côté droit de la Figure 5, on a représenté le numéro de chaque fil d'impression et une flèche indiquant le sens du mouvement du bloc d'impression pour indiquer la rangée imprimée et son fil d'impression et la direction dans laquelle se déplace le bloc d'impression 50. Dans le texte, l'expression "premier passage" indique le mouvement de gauche à droite du bloc d'impression 50 comme indiqué par la flèche 54 et l'expression "deuxième passage" indique le mouvement de droite à gauche du bloc d'impression 50 comme indiqué par la flèche 54A.

Lorsque le bloc d'impression 50 est dans sa position extrême gauche représentée par la partie supérieure de la Figure 4, le fil 5 de la tête d'impression 1 est aligné sur la colonne 1 du mot 1. En même temps, le fil 1 de la tête 2 est aligné sur la colonne 1 du mot 3, le fil 6 de la tête 2 est aligné sur la colonne 1 du mot 4. Le fil 2 de la tête 2 est aligné sur la colonne 1 du mot 5 et ainsi de suite si bien que le fil 5 de la tête 7 est aligné sur la colonne 1 du mot 61. Lorsque le bloc d'impression 50 commence à déplacer chacune des têtes 1 à 7 vers la droite, comme indiqué par la flèche 54, on détermine si l'un quelconque des fils alignés sur les diverses parties de chaque mot doit provoquer l'impression d'un point. Dans ce cas, le dispositif de commande associé à cel fil 52 est déclenché. Ensuite, lorsque le bloc d'impression 50 se déplace vers la droite, le fil 5 de la tête 1 est aligné avec la colonne 2 du mot 1. Le fil 1 de la tête 2 est aligné avec le colonne 2 du mot 3 et ainsi de suite. Après le mouvement sur les 20 colonnes du mot 1, le fil 5 de la tête 1 sera aligné avec la colonne 1 du mot 2 et le fil 9 de la tête 1 sera aligné avec la colonne 1 du mot 1. Finalement, lorsque le bloc d'impression 50 aura été transféré dans la position représentée en 50A, chacun des fils 1 à 9 de la tête 1 sera passé sur chacune des colonnes du mot 1. Comme on peut le voir à la position 50A du bloc d'impression 50, le fil 1 sera alors placé sur la dernière ou vingtième colonne du mot 2. On notera que le mouvement réel du bloc d'impression 50 sera prolongé afin de le ralentir, de le stopper, et d'accélérer sa vitesse de façon qu'au moment où le bloc d'impression 50 se déplace de droite à gauche comme indiqué par la flèche 54A, il ait atteint sa pleine vitesse au moment où il est prêt à assurer l'impression à la dernière colonne du mot 2. On notera que dans beaucoup de mots à imprimer, certains points sont imprimés par une tête d'impression et les points restant par une tête d'impression adjacente. Par exemple, dans le mot 3, le fil 1 de la tête 2 imprime les points de la première rangée tandis que les fils 2 à 9 de la tête 1 amènent les points des autres rangées.

La Figure 6 représente un bloc d'impression 60 qui est similaire au bloc d'impression 50 sauf que quatre têtes seulement, composées chacune de neuf fils, sont représentées. Dans ce cas, la distance séparant les fils 1 des têtes adjacentes est de 88,9 mm au lieu de 50 mm comme dans le cas du bloc d'impression 50. En outre, le mouvement bord à bord du bloc d'impression 60 est prolongé en raison de la plus grande distance séparant des têtes d'impression adjacentes.

La Figure 7 représente le circuit de commande 62. Le fonctionnement d'un tel circuit sera expliqué en utilisant des caractères complexes (tels que les caractères Kanji), mais ce circuit, ainsi que la présente invention, peuvent être utilisés pour l'impression d'un caractère quelconque. Le coeur du circuit de commande 62 est constitué par le microprocesseur de communication (CMA) 64 et le microprocesseur de commande (CTA) 66. Le microprocesseur de communication 64 et le microprocesseur de commande 66 peuvent être des microprocesseurs du type décrit dans le brevet FR—A 2 413 715 déposé en France par la demanderesse le 5 décembre 1978. Le microprocesseur de communication 64 a pour fonction de prendre des données dans le système principal 1, de les appliquer par l'intermédiaire de la commande d'interface 68, et de les convertir en une image de fils acceptable qui est emmagasinée dans la mémoire d'images de fils 70. Les données appliquées depuis le système principal 1 comprennent des informations d'état, de commande et de définition de caractères. Seule l'information concernant la définition des caractères sera traitée ici. Les informations de définition de caractères ou données, appliquées depuis le système principal 1 par l'intermédiaire de l'interface de commande 68, se présentent sous la forme de codes d'adresses qui définissent un caractère Kanji particulier emmagasiné dans la mémoire 72. Le mémoire 72 est composée à la fois d'une mémoire inaltérable et d'une mémoire de lecture et d'écriture. Approximativement 3700 images différentes de caractères Kanji sont emmagasinés dans la partie inaltérable de la mémoire 72 et sont agencées en blocs définis par un code d'adresse à 16 bits. Le processeur principal 1 applique un code de 16 bits par l'intermédiaire de la commande d'interface 68 au microprocesseur 64. Le microprocesseur 64 adresse alors le mémoire 72 avec ce code pour lire le caractère Kanji approprié défini par les 16 bits.

La partie lecture/écriture de la mémoire 72 contient à la fois des caractères alpha-numériques Katakana (ANK) et Gaiji. Les caractères ANK sont connus. Ces caractères ont une largeur de neuf colonnes et une hauteur de sept colonnes et sont imprimés au cours d'un passage unique du bloc d'impression 50 se déplaçant dans l'un des sens indiqués par les flèches 54 ou 54A. Au cours de l'impression de caractères ANK, le fil 1 n'est pas utilisé et le fil 9 est utilisé pour les soulignements. Les caractères Gaiji sont des caractères similaires aux caractères Kanji mais non compris dans les 3700 caractères qui sont emmagasinés dans la partie inaltérable de la mémoire 72. Le code des images de fils emmagasiné dans la mémoire 72 à la fois pour les caractères ANK et les caractères Gaiji, est appliqué à partir du système principal 1 sous la commande du microprocesseur 64 d'une manière connue. Etant donné que les caractères du type ANK ne requièrent que la moitié du nombre des colonnes, ils peuvent être adressés par un signal d'adresse à huit bits appliqué à partir du système principal 1. D'autre part, les caractères Gaiji qui sont de la même taille que les caractères Kanji comme on le voit à la Figure 5, requièrent un signal d'adresse à 16 bits.

Les données sont délivrées à partir du système principal 1 par l'intermédiaire de la commande d'interface 68 et emmagasinées dans la mémoire d'interface 74. Le microprocesseur de communication 64 vérifie les informations contenues dans le mémoire d'interface 74 et qui peuvent comprendre des commandes d'état, des commandes d'exécution telle que l'alimentation du papier ou autres commandes similaires ou des informations de définition de caractères. Les informations de définition de caractères sont délivrées à partir de la mémoire d'interface 74 par le microprocessur de communication 64 et emmagasinées dans le mémoire CMA 76. La mémoire CMA 76 est composée à la fois d'une mémoire inaltérable et d'une mémoire de lecture/écriture. La mémoire inaltérable peut être par exemple composée de l'ensemble des instructions de commande du microprocesseur de commande 64 et la mémoire de lecture/écriture peut comprendre une mémoire à blocs effaçables ou mémoire de travail, ainsi qu'une mémoire intermédiaire de texte et une mémoire intermédiaire de sélection.

La mémoire intermédiaire de texte de la mémoire CMA 76 est un bloc de mémoire utilisé pour l'emmagasinage des codes d'adresse des caractères à imprimer. Le mémoire intermédiaire de texte est divisée en 132 multiplets et peut être utilisée pur définir jusqu'à 132 caractères ANK ou 66 caractères Kanji ou Gaiji. En outre, la mémoire CMA 76 comprend un deuxième bloc de mémoire appelé la mémoire intermédiaire de sélection. La mémoire intermédiaire de sélection comprend 132 positions de bit. Un "1" est placé dans chaque position dans lesquelles un caractère Kanji, ou un caractère Gaiji doit être imprimé et un bit "0" est placé dans la position des bits d'un caractère ANK.

Le microprocesseur de communication 64 répond à des informations délivrées à son entrée STG depuis la mémoire CMA 76 par l'intermédiaire du bus de mémoire STG. En outre, le microprocesseur 64 répond à des informations issues du bus d'entrée de données (DBI). Le microprocesseur 64 délivre des informations de données sur le bus de sortie de données (DBO) et des informations d'adresse pour les dispositifs d'entrée/sortie sur le bus de sortie d'adresses (ABO) et des informations d'adresse pour les dispositifs d'emmagasinage sur le bus d'adresses de mémoire (SAR). La mémoire CMA 76 répond aux signaux portés par les bus d'adresses de mémoire, les bus de sortie de données et les bus d'adresses, délivrés aux entrées SAR, DI (Entrée données) et ABO, respectivement, et délivre des signaux d'instruction par la sortie DO (Sortie données) au bus de mémoire. Les Informations d'adresses apparaissent sur le bus ABO et appliquées à la mémoire 76 peuvent être utilisés pour commander la pagination de la mémoire de l'unité 76 et les informations apparaissent sur le bus SAR définissent une position spécifique dans une section de mémoire paginée particulière. Les données appliquées à l'entrée de données (DI) de la mémoire 76 à partir du bus de sortie de données, sont utilisées pour écrire des informations dans la mémoire à blocs effaçables. La sortie de données (DO) de la mémoire 76 est utilisée pour transférer les informations lues à la mémoire dans l'unité 76. La logique de commande 78 et le registre de données 80 sont associés à l'ensemble 72 composé d'une mémoire inaltérable et d'une mémoire de lecture et d'écriture. La logique de commande 78 répond à des signaux portés par le bus d'adresses et délivrés à partir du microprocesseur de communication 64 et délivre des signaux appropriés pour adresser le partie désirée de la mémoire 72. En outre, la logique de commande 78 délivre un signal pour bloquer des données transmises au registre de données 80 depuis la mémoire 72. Le registre de données 80 répond aux données délivrées à partir du microprocesseur 64 par le bus de sortie de données et transmet les données emmagasinées dans le registre de données 80 au microprocesseur 64 par le bus d'entrée de données. En outre, des données peuvent être transférées vers et à partir de la mémoire 72 à partir du registre de données 80 et vers celui-çi.

La mémoire d'images de fils 70 est une mémoire de 4K multiplets de 8 bits, qui, sous la commande de la logique de sélection 82, de la logique de sélection 84 et de la logique de commande 86, fonctionne comme une double unité d'emmagasinage de lecture et d'écriture de 2K multiplets de 8 bits. La logique de sélection 82 répond à des signaux d'adresses appliqués sur le bus d'adresses de mémoire depuis le microprocesseur de communication 64 et à des signaux d'adresses appliqués sur le bus d'adresses de mémoire à partir du générateur d'images de tête 88. En outre, la logique de sélection 82 répond à un signal de commande issu de la logique de commande 86 qui détermine lequel des deux ensembles de signaux d'adresses appliquées à la logique de sélection 82 doit être appliqué pur adresser l'une des deux parties de la mémoire d'images de fils 70. En raison de la dualité de la mémoire d'images de fils 70, il devient possible d'écrire des informations dans une partie de la mémoire 70 correspondant à l'image de fils de la ligne suivante à imprimer tout en lisant des informations dans l'autre partie au travers du générateur d'images de tête 88 pour cmmandr le déclenchement des dispositifs de commande de fils pour la ligne qui est alors en cours d'impression. Les détails de cette opération seront expliqués plus en détails en se reportant à la Figure 8.

La sortie de données (DO) de la mémoire d'images de fils 70 est délivrée au circuit de sélection 84 qui répond également à des signaux transmis par un bus de sélection (SEL) à partir du générateur d'images de tête 88 et délivre des données au générateur d'images de tête 88. La logique de commande 86 répond aux signaux de données portés par le bus de sortie de données et aux signaux d'adresse portés par le bus d'adresses et délivrés par le microprocesseur de communication 64.

Le microprocesseur de commande 66 (CTA) reçoit des entrées de divers détecteurs disposés dans le circuit de détection d'impression 92, tels que des signaux d'émission, des signaux de bourrage et d'inversion de ruban, des signaux de bourrage du papier, des signaux de position des têtes, des signaux du codeurs linéaire, des signaux du codeur des positions des feuilles, ainsi que des ordres et des données d'impression issus du microprocesseur 64 et du générateur d'images de tête 88. Le microprocesseur de commande 66 génère les signaux de commande d'impression qui sont appliqués par son bus de sortie de données à l'entrée de données (DI) de la logique de commande d'impression 94 pour commander les divers moteurs et dispositifs d'entraînement du sytème tels que le dispositif d'entraînement du ruban, le dispositif d'entraînement des têtes d'impression et le dispositif d'alimentation du papier. En outre, le microprocesseur de commande 66 provoque l'application des données appropriées par le générateur d'images de tête 88 aux dispositifs de commande pour déclencher les fils d'impression.

Le microprocesseur de commande 66 délivre des signaux de données sur le bus de sortie de données (DBO) et délivre des signaux d'adresse sur le bus d'adresses (ABO) et le bus d'adresses de mémoire (SAR). En outre, le microprocesseur de commande 66 reçoit d'une part des signaux d'instruction de la mémoire CTA 98 par le bus de mémoire (STG) et, d'autre part des données par le bus de données (DBI).

Le circuit de détection d'impression 92 et la logique de commande d'impression 94 sont associés à une logique de décodage 100 qui, en réponse à des signaux qui lui sont appliqués par le bus d'adresses, détermine si la logique de commande d'impression 94 doit répondre aux données appliquées sur le bus de sortie de données à son entrée DI, ou sélectionne l'unité de détection d'impression 92 pour délivrer des données depuis sa sortie de données (DO) par le bus d'entrée de données au microprocesseur 66. La logique de décodage 100 sélectionne la logique de commande d'impression 94 ou le circuit de détection 92 en décodant le signal d'adresse qui lui est appliqué et en délivrant un signal approprié à l'entrée de conditionnement de la logique de commande d'impression 92 ou du circuit de détection d'impression 94.

Le circuit de verrouillage des têtes 96 est également associé à la logique de décodage 102. Ce circuit décode les signaux d'adresse portés par le bus d'adresses et délivre un signal à l'entrée de conditionnement du circuit de verrouillage des têtes 96 afin que celui-çi puisse recevoir des données à son entrée DI délivrées par le bus de sortie de données du microprocesseur 66 ou puisse délivrer des données par sa sortie DO au microprocesseur 66 par le bus d'entrée de données.

Le microprocesseur de communication 64 et le microprocesseur de commande 66 peuvent échanger des informations par l'intermédiaire du registre de commandes 104 et du registre d'états 106. La logique de décodage 108 commande le registre 104 et le registre d'états 106 pour synchroniser les données s'écoulant du microprocesseur de communication 64 au microprocesseur de commande 66, ceux-ci fonctionnant normalement d'une manière asynchrone. L'élément d'entrée/sortie 110 peut également être utilisée comme une mémoire locale pour emmagasiner des données intermédiaires pendant le transfert de données du microprocesseur de communication 64 au microprocesseur de commande 66. Le registre de commandes 104 reçoit des données du bus de sortie de données du microprocesseur 64 et délivre des données au bus d'entrée de données du microprocesseur 66. D'autre part, le registre d'états 106 reçoit des données du bus de sortie de données du microprocesseur 66 et délivre des données au bus d'entrée de données du microprocesseur 64. Le circuit de décodage 108 répond au bus d'adresses issu du microprocesseur 64 et du microprocesseur 66 et délivre des signaux de commande au registre d'états 106 et au registre de commandes 104. De plus, le circuit de décodage 108 délivre des signaux de commande au générateur d'images 88 et à l'élément d'entrée/sortie 110.

Le dernier bloc du circuit de commande électronique 62 est constitué par le tableau de commande de l'opérateur 112 qui répond aux signaux portés par le bus de sortie de données et le bus d'adresses du microprocesseur de communication 64 et délivre des signaux au bus d'entrée de données du microprocesseur de communication 64. Le tableau de commande de l'opérateur 112 communique avec des unités d'affichage à diodes électroluminescentes, des circuits de restauration et des commutateurs montés sur le tableau de commande de l'opérateur 26 représenté à la Figure 2.

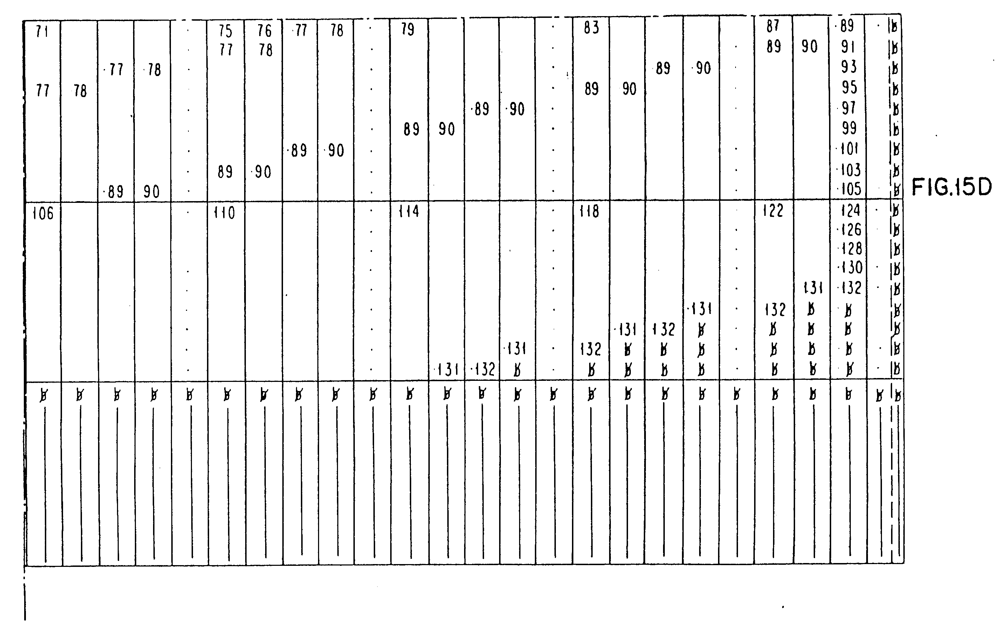

La Figure 8 est une représentation schématique plus détaillée de la mémoire d'images de fils 70, des circuits de sélection 82 et 84, du circuit de commande 86 et du générateur d'images de tête 88. La Figure 9 représente une série de signaux utilisés pour expliquer le fonctionnement de l'ensemble de la Figure 8. La description de la Figure 8 sera effectuée en association avec les Figure 10 à 13 qui représentent le déroulement d'une partie du programme de commande du microprocesseur de communication 64 pour charger l'image de fils dans la mémoire d'images de fils 80. L'organisation de la mémoire d'images de fils 70 est représentée aux Figures 14A à 14D, lorsqu'elles sont assemblées selon la Figure 14, pour le bloc d'impression à sept têtes, et aux Figures 15A à 15D assemblées selon la Figure 15, pour le bloc d'impression à quatre têtes 60. La partie restante de la Figure 8 sera décrite ultérieurement en relation avec la lecture de la mémoire d'images de fils 70 par le générateur d'images de tête 88.

Avant d'écrire des informations dans la mémoire d'images de fils 70, il est nécessaire de sélectionner la partie qui doit être utilisée pour l'écriture et la partie qui doit être lue. Le circuit de commande 86 et le circuit de sélection 82 assurent cette fonction. Le circuit de commande 86 est composé de la logique de décodage 114 qui répond au bus d'adresses issu du microprocesseur de communication 64. Pour une certaine adresse définissant un dispositif d'entrée/sortie tel que le circuit de commande 86, la logique de décodage 114 décode le signal d'adresse issu du microprocesseur de communication 64 et délivre un signal conditionnant la porte ET 116. Chaque fois que le microprocesseur de communication 64 exécute une instruction de sortie, le signal de sortie du microprocesseur CMA est délivré, ce qui provoque le passage des données par la porte ET 116 sur une ligne du microprocesseur de communication 64 dans la bascule 118. La ligne du bus de sortie des données "1" est couplée à l'entrée de données de la bascule 118, ce qui conditionne la bascule 118 si un signal "1" logique est appliqué afin de provoquer le passage du signal de commutation de mémoire intermédiaire au niveau haut. Le signal de commutation de mémoire intermédiaire issu de la bascule 118 est délivré aux entrées de commande des circuits de sélection 2:1 120 et 122 qui font parties du circuit de sélection 82. Les circuits de sélection 120 et 122 sont tels que le signal de commutation de mémoire intermédiaire transfère l'un des deux ensembles d'entrées aux sorties. Ainsi, les deux sorties des circuits de sélection 120 et 122 sont inversées chaque fois que la polarité du signal de commutation de mémoire intermédiaire issu de la bascule 118 est modifiée. La commande des circuits de sélection 120 et 122 est également influencée par la logique de commande 124 qui répond au signaux de sélection puissance (SEL P) et de sélection d'adresse niveau haut (AHS) issus du microprocesseur de communication 64 et à un signal apppelé "H SAR 11" appliqué à partir du compteur H SAR 126A qui sera décrit ultérieurement. La logique de commande 124 délivre les signaux H SEL 1 et H SEL 2 aux circuits de sélection 120 et 122. D'une manière similaire, les signaux CMA SEL 1 et CMA SEL 2 sont appliqués aux circuits de sélection 120 et 122 à partir du microprocesseur de communication 64. Ces deux derniers signaux sont délivrés à chaque cycle du microprocesseur 64 de la même façon que le signal CMA SEL P.

Les sorties des circuits de sélection 120 et 122 sont délivrées aux quatre entrées de sélection de la mémoire d'images de fils 70 pour sélectionner deux des quatre rangées d'éléments de la mémoire de lecture et d'écriture de 1K multiplets de huit bits. Les signaux d'adresse des rangées sélectionnées de la mémoire sont délivrés par le circuit de sélection 2:1 128A en réponse à un signal d'adresse de mémoire qui est délivré par le microprocesseur de communication 64 (CMA SAR) ou par le compteur H SAR 126A.

Lors de l'écriture dans la mémoire d'images de fils 70, le signal CMA SAR est délivré pour adresser un multiplet de mémoire particulier dans lequel des données délivrées à partir du microprocesseur de communication 64 par le bus de sortie de données, sont écrites. Lors de la lecture de la mémoire d'images de fils 70, le signal H SAR est délivré pour adresser le multiplet à partir duquel les données sont lues.

Les Figures 10 à 13 et les Figures 14A à 14D assemblées sous la forme de la Figure 14, représentent la manière suivant laquelle 2K multiplets sélectionnés de la mémoire d'images de fils 70 sont emmagasinés. L'organisation des 2K multiplets sélectionnés de la mémoire d'images de fils 70 consiste en 25 colonnes de 72 multiplets. Chaque multiplet est adressé par un nombre héxadécimal de "000" à "708". En raison de la configuration oblique de chaque tête d'impression, on a déterminé qu'il fallait placer les données dans les 2K multiplets sélectionnés de la mémoire d'images de fils 70 d'une manière oblique, puis lire les informations par l'intermédiaire du générateur d'images de tête 88 colonne de bits par colonne de bits. Avec cet agencement, on obtient une économie considérable de matériel par rapport aux techniques utilisées précédemment.

Les Figures 10 à 13 représentent le déroulement du programme du microprocesseur de communication 64 et plus particulièrement de la partie qui permet le chargement de l'image des fils dans la mémoire d'images de fils 70.

Dans la Figure 10, le microprocesseur de communication 64 commence l'exécution du programme images des fils ou WI permettant le chargement de l'image de fils appropriée dans la mémoire d'images de fil 70 au bloc 129 où la mémoire d'images de fil sélectionnée 70 est effacée et où une configuration de test est chargée dans la partie de la mémoire d'images de fil 70 au-dessus de l'adresse héxa-décimale "708". La configuration de test est utilisée pour vérifier le fonctionnement. Puis au bloc 132, on détermine si le bloc d'impression 50 contient sept têtes. Dans ce cas, le bloc 134 indique que l'adresse des paramètres de la machine à sept têtes est mise en place. Si au bloc 132, on a déterminé que la machine n'est pas une machine à sept têtes, on détermine au bloc 136 que la machine est une machine à quatre têtes. Si la réponse est négative, un état d'erreur existe comme indiqué par le bloc 138. Si l'on a déterminé qu'il s'agissait d'une machine à quatre têtes, l'adresse des paramètres de la machine à quatre têtes est alors mise en place comme indiqué au bloc 140. Les blocs 134 et 140 se rejoignent au bloc 142, ce qui indique que les paramètres sélectionnés pour le nombre particulier des têtes sont emmagasinés dans des registres intérieurs du microprocesseur de communication 64 et dans la partie à éléments effaçables de la mémoire CMA 76. Les paramètres comprennent des constantes concernant la longueur de chaque colonne, un indicateur de la mémoire intermédiaire d'attributs, un indicateur de la mémoire intermédiaire de texte et divers autres facteurs de correction et des drapeaux qui apparaitront au fur et à mesure du déroulement du programme.

Le microprocesseur de communication 64 est d'un type comportant un registre d'adresses de données (DAR) et un registre d'adresses de données auxiliaire (ADAR) dans lequel une adresse à 12 bits définissant un multiplet particulier de la mémoire soit dans la mémoire CMA 76, soit dans la mémoire d'images de fil 70, peut être emmagasinée. En utilisant le registre DAR, des instructions pour le microprocesseur de communication 64 peuvent provoquer l'emmagasinage ou la lecture de données dans la mémoire 76 adressée par le registre DAR. Puis, au bloc 144, le premier multiplet de la mémoire intermédiaire de sélection est emmagasiné dans un registre intérieur du microprocesseur 64 et le compteur de sélection qui consiste en un autre registre intérieur du microprocesseur 64 est effacé. En outre, l'indicateur de mémoire intermédiaire de texte est amorcé. Le premier multiplet de sélection peut être emmagasiné en plaçant l'adresse de la mémoire intermédiaire de sélection dans le registre DAR et en exécutant une instruction de chargement des registres dans lesquels le multiplet de sélection doit être emmagasiné.

Puis, au bloc 146, on détermine si le bloc d'impression 50 effectue un premier passage ou non. Un premier passage consiste dans un mouvement de gauche à droite du bloc d'impression 50 comme indiqué par la flèche 54 et est indiqué par les données de commande envoyées par le système principal 1. S'il s'agit d'un premier passage, le block 148 indique alors que le drapeau de deuxième passage est effacé. S'il ne s'agit pas d'un premier passage, le bloc 150 indique que le drapeau du deuxième passage est conditionné. Dans tous les cas, le bloc 152 indique que le compteur de mots est avancé de 1, puis le programme se poursuit avec la partie WPUTWI, ce qui est représenté par la colonne droite de la Figure 10.

Le programme se poursuit avec la partie WPUTWI et le bloc 154 indique que le compteur de mots est décompté. Tous les seize décomptages du compteur de mots, un branchement provoque l'exécution du programme d'interface afin de déterminer si le processeur principal 1 délivre des signaux à la commande d'interface 68 ou en requiert. Puis, le bloc 156 indique que l'ancien bit de sélection est décalé dans la position du bit le moins significatif (bit 0) du registre intérieur TAILF et le bit de sélection présent trouvé dans le multiplet de sélection emmagasiné est transféré à la position du bit 0 du registre ATFLG. L'ancien bit de sélection était précédemment dans la position du bit 0 du registre ATFLG. Puis, selon le bloc 158, le compteur de sélection est augmenté. Le compteur de sélection est composé des positions de bit 1, 2 et 3 du registre ATFLG. On notera que chacun des registres intérieurs du microprocesseur 64 est un registre à 4 bits et après que les trois bits les plus significatifs du registre ATFLG aient été avancés huit fois, l'indicateur de report est conditionné, indiquant ainsi que tous les bits de sélection contenus dans le multiplet emmagasiné à partir du compteur de sélection, ont été traités. Ainsi, au bloc 160, on détermine si le report est conditionné. Dans ce cas, le multiplet de sélection suivant issu de la mémoire intermédiaire de sélection est emmagasiné. Sinon, le bloc 162 est sauté.

An bloc 164, un multiplet d'adresse est emmagasiné à partir de la position de la mémoire intermédiaire de texte définie par l'indicateur de mémoire intermédiaire de texte et l'indicateur de mémoire intermédiaire de texte est augmenté. On rappellera que l'organisation de la mémoire intermédiaire de texte est telle que pour des caractères Kanji, deux multiplets d'adresse ou seize bits définissent l'adresse du caractère Kanji particulier tandis que pour des caractères ANK, un seul multiplet est nécessaire pour définir l'adresse du caractère ANK. Au bloc 166, on détermine si la position de bit 0 du registre ATFLG est égale à "1". Ce bit, s'il s'agit d'un "1" binaire, indique que le prochain caractère est un caractère Kanji, Dans ce cas, un caractère Kanji est indiqué à un branchement au programme WKANWI représenté à la Figure 11, colonne de gauche. Si la position de bit 0 du registre ATFLG n'est pas égale à "1", c'est-à-dire égale à "0", un branchement au programme ANK qui n'est pas représenté ici, est réalisé. Dans le programme ANK, l'image des fils est emmagasinée dans la mémoire d'images de fils 70 pour le programme ANK désiré.

On voit maintenant à la Figure 11 que le programme WKANWI est exécuté si l'on a déterminé au bloc 166 de la Figure 10 qu'un caractère Kanji doit être emmagasiné dans la mémoire d'images de fils 70. Tout d'abord, comme indique par le bloc 168, le compteur de mots est décompté et tous les seize décomptages, apparaît un branchement permettant de manipuler l'interface. Puis, au bloc 170, le deuxième multiplet du code d'adresse du mot Kanji ou Gaiji, selon le cas, trouvé dans la mémoire intermédiaire de texte, est emmagasiné dans les registres intérieurs du microprocesseur 64. Ensuite, au bloc 172, les données de mise à jour trouvées dans la mémoire CMA 76 à l'adresse emmagasinée à la suite de l'exécution des blocs 134 ou 140, sont accédées et le registre TAILF est mis à jour avec ces données. Dans le cas de la machine à sept têtes de la Figure 4, le caractère héxadécimal "C" ou "1100" binaire, est emmagasiné dans le registre TAILF. Les deux bits les plus significatifs du registre TAILF constituent un compteur des restes qui sera expliqué en détail ultérieurement. La position de bit 0 du registre TAILF constitue l'ancien bit de sélection et la position de bit 1 du registre TAILF est utilisée comme drapeau de dernière colonne. Puis au bloc 172, les données de mise à jour sont retirées du registre DAR qui a été amorcé avec le nombre héxadécimal "677", afin de contenir le nombre "5E8".

Les Figures 14A à 14D représentent l'organisation de la mémoire d'images de fils 70. Comme indiqué précédemment, l'image des fils est emmagasinée pour ressembler à une matrice de 25 colonnes sur 72 rangées, chaque colonne contenant un multiplet par rangée. La rangée appelée "multiplets", indique chacune des 25 colonnes. Etant donne que chaque mot Kanji ou Gaiji consiste en 20 colonnes de points et que chaque multiplet est formé de huit bits, les 25 multiplets ou colonnes définissent 20 mots qui sont indiqués par la rangée supérieure représentée dans les Figures 14A et 14B. Dans les Figures 14A et 14B, chaque mot composé de caractères Kanji ou Gaiji est divisé en deux caractères de dix bits chacun.

Si des caractères ANK de 10 colonnes ont été emmagasinés dans la mémoire d'images de fil 70, chaque caractère représente alors un caractère ANK et sera traité d'une manière similaire à celle décrite ici en se reportant aux Figures 10 à 13. Ainsi, les nombres écrits dans la matrice des Figures 14A à 14D, représentent des caractères plutôt que des mots. En d'autres termes, les caractères 1 et 2 définissent le mot 1, les caractères 3 et 4 définissent le mot 2, les caractères 5 et 6 définissent le mot 3 et ainsi de suite jusqu'aux caractères 131 et 132 qui définissent le mot 66. Etant donné que chacun des caractères a une largeur de 10 colonnes de fils, il est nécessaire d'avoir plus d'une position de multiplet pour définir un caractère. Ainsi, la rubrique sous la rangée "Multiplets" indique les multiplets définis dans cette colonne particulière par rapport à une caractère. Par exemple, dans la première colonne, les huit bits de niveau haut d'un caractère particulier sont définis. Dans la deuxième colonne, les deux bits de niveau bas de ce caractère sont définis et les six bits de niveau haut du caractère suivant sont définis. Dans la colonne 3, les quatre bits de niveau bas du deuxième caractère et les quatre bits de niveau haut du troisième caractère sont définis et dans la colonne 4, les six bits de niveau bas du troisième caractère et les deux bits de niveau haut du quatrième caractère sont définis. Finalement, dans la colonne 5, les huit bits de niveau bas du quatrième caractère sont définis. Ainsi, cinq multiplets sont nécessaires pour définir les quatre caractères ou deux mots.

En se reportant à la partie la plus à gauche des Figures 14A et 14C, on voit que chaque rangée de la matrice définit un fil et, ainsi, neuf rangées définissent une tête différente. Ainsi, les têtes 1 à 7 sont définies par les soixante-trois premières rangées. Dans le cas où il est nécessaire d'imprimer une ligne complète de cent-trente-deux caractères ou de soixante-six mots et d'entraîner le bloc d'impression 50 dans la région prolongée définie en 50AB, les rangées 64 à 72 définissent le fonctionnement de la tête 7 dans la région prolongée. La colonne "Fil" indique le fil auquel se réfère la rangée particulière de cette tête. Ainsi, la première rangée se réfère au fil 1, la deuxième rangée au fil 6, la troisième rangée au fil 2 et ainsi de suite. On notera que ces fils sont dans l'ordre dans lequel ils apparaissent de gauche à droite. Les deux colonnes "TRANCHE (1)" et "TRANCHE (2)" contiennent le numéro de la tranche de la mémoire 72 qui contient la définition des caractères Kanji ou Gaiji. Les caractères sont définis par une tranche commençant avec la première rangée représentée à la Figure 5 sous la forme de la tranche 1, la deuxième rangée sous la forme de la tranche 2, la troisième rangée sous la forme de la tranche 3 et ainsi de suite jusqu'à la dernière rangée qui est représentée par la tranche 18. Chaque tranche contient dix-huit bits qui peuvent être emmagasinés d'une manière appropriée dans une mémoire comportant deux multiplets plus deux bits de parité. L'organisation de la mémoire définira la tranche pour le mot Gaiji ou Kanji complet de dix-huit bits à une adresse unique. On notera que chaque caractère Kanji ou Gaiji requière un maximum de dix-huit colonnes d'informations pour être imprimé avec au moins deux colonnes pour séparer chaque mot. Bien qu'il soit inutile que la mémoire 72 contienne des informations concernant les deux dernière colonnes de séparation, il est nécessaire que ces informations soient placées dans la mémoire d'images de fil 70.

En se reportant à nouveau à la Figure 11, au bloc 172, on voit que la donnée de mise à jour lorsqu'elle est soustraite des données initiales emmagasinées dans le registre DAR, laisse un nombre "5E8" dans le registre DAR. D'aprés la Figure 14B, on voit qu'à la position "5E8", les deux bits de niveau bas du caractère 1 et les six bits de niveau haut du caractère 2 sont à emmagasiner. Ainsi, le registre DAR est utilisé comme un indicateur de l'adresse particulière de la mémoire d'images de fil 70 où les informations doivent être emmagasinées. On notera que les quatre bits de niveau bas restant du caractère 2 sont appelées un "reste" et sont provisoirement emmagasinés dans une table des restes. Lorsque les caractères 3 et 4 sont emmagasinés dans la mémoire d'images de fil 70, ces quatre bits sont emagasinés à la position "630".

Au bloc 174, on détermine si le registre DAR a atteint "0" lorsque les données de mise à jour ont été soustraites. Si oui, c'est qu'il indiquait un emplacement à la gauche de la colonne 1 et qu'il doit être corrigé pour indiquer une position différente. Le bloc 176 indique que le drapeau de dernière colonne est alors conditionné et le bloc 178 indique que la constante UFC est alors ajoutée au registre DAR. Dans le cas des Figures 14A à 14D, la constante UFC est "6FF" et dans le cas des Figures 15A à 15D, la constante UFC est "7B3".

Puis, au bloc 180, on détermine si le reste est égal à quatre bits et si le drapeau de la dernière colonne n'est pas conditionné. Si oui, la constante 1C0L est soustraite du registre DAR. Dans le cas des Figures 14A à 14D, cètte constante est "048" ou dans le cas des Figures 15A à 15D, cette constante est "02D". Cette constante est égale au nombre des rangées contenues dans la carte de mémoire des Figures 14A à 14D ou des Figures 15A à 15D. Si la réponse au bloc 180 est négative, le bloc 182 est sauté et alors, selon le bloc 184, le registre TAILF est avancé de la constante UFTL. Dans le cas d'une machine à sept têtes, la constante UFTL est "0", et dans le case de la machine à quatre têtes, la constante UFTL est "C".

Si au bloc 174, aucun dépassement de capacité inférieure n'a été indiqué, les blocs 176, 178, 180, 182 et 184 sont alors sautés. Dans tous les cas, en continuant au bloc 186, le drapeau de la première tranche est conditionné. Puis, au block 188, on détermine si oui ou non un caractère Kanji est en cours d'impression. Ceci peut être fait en vérifiant les quatre bits les plus significatifs de l'adresse lue à la mémoire intermédiaire de texte. Si ces quatre bits sont 4 ou 5, un caractère Kanji est en cours d'impression. Autrement il s'agit d'un caractère Gaiji. Si on détermine qu'il s'agit d'un caractère Kanji, le bloc 190 indique que les registres SLNUM et SOVFL sont effacés et le premier multiplet de l'adresse Kanji obtenu à partir de la mémoire intermédiaire de texte est envoyé à la logique de commande 78 et verrouillée dans un registre d'indicateurs de tranches. En outre, un "1" est ajouté au registre SLP3 où le deuxième passage se déroule. Les registres SLP0, SLP1 et SLP2 contiennent l'adresse à douze bits qui permet d'accéder à un bloc de mémoire qui contient les dix-huit tranches définissant un caractère Kanji. Le registre SLP3 est utilisé comme un indicateur de la tranche particulière impliquée. Dans la réalisation particulière décrite ici, il y a réellement deux blocs de mémoire qui définissent un caractère Kanji.

Les quinze premières tranches 1 à 15 sont définies dans un bloc et les trois dernières tranches ou les tranches 16, 17 et 18 sont définies dans un deuxième bloc. Les deux bits les plus significatifs du registre SLP 1 sont mis à 0 en sortie et transférés aux deux bits les plus significatifs du registre SLP 3 pour définir ce deuxième bloc. Les deux bits les moins significatifs du registre SLP 3 sont alors augmentés pour définir la tranche particulière du deuxième bloc qui est concernée.

Si au bloc 188 on a déterminé qu'un caractère Gaiji devait être imprimé, le bloc 192 indique alors que l'adresse Gaiji est emmagasinée dans les registres d'indicateurs de tranche SLP0, SLP1, SLP2 et SLP3. Un "1" est emmagasiné dans le registre SLNUM et le registre SLP3 est ajusté pour le deuxième passage par l'addition d'un "1". Finalement, la mémoire 72 est conditionnée pour permettre à l'information Gaiji d'être lue dans sa partie lecture et écriture. Que ce soit le bloc 190 ou le bloc 192 qui est exécuté, le fonctionnement se poursuit avec le programme WKLOOP1 représenté à la Figure 12.

La Figure 12 représente le programme WKLOOP1. Ce programme est utilisé pour verrouiller une tranche d'information depuis la mémoire 72 dans le registre de données 80 et pour conditionner les indicateurs de tranche SLP0, 1, 2 et 3 pour la tranche suivante. Lorsqu'une tranche de données est lue à la mémoire 72, elle est maintenue dans le registre de données 80 et le programme WK60 représenté à la Figure 13B prend alors ces données et les emmagasine dans la mémoire d'images de fil 70. Au cours du déroulement du programme WKLOOP1 de la Figure 12, un certain nombre d'évènements différents peuvent se produire. Tout d'abord, si un caractère Gaiji est à imprimer, une première série d'évènements se produit. Si un caractère Kanji est à imprimer, on doit déterminer le fil qui est déclenché et s'il s'agit du fil 9 ou du fil 5, dans le cas d'un premier passage ou des fils 8, 4, 9 ou 5 dans le cas d'un deuxième passage, des opérations spéciales devant se dérouler en raison de l'organisation des mémoires inaltérables contenant les tranches Kanji et plus particulièrement en raison du deuxième bloc contenant les tranches 16, 17 et 18.

Le programme WKLOOP1 commence avec le bloc 194 qui détermine si le registre SLNUM est égal à 0. S'il n'est pas égal à 0, ce qui indique qu'un caractère Gaiji doit être imprimé, le bloc 196 indique qu'une tranche Gaiji telle qu'adressée par l'adresse contenue dans les registres SLP0 à SLP3, est lue à partir de la partie lecture et écriture de la mémoire 72 et verrouillée dans le registre de données 80. Puis le bloc 198 indique que le registre SLNUM est augmenté de 1. Le bloc 200 détermine ensuite si la position de bit 0 du registre SLNUM est conditionnée. Si la réponse est positive indiquant ainsi une tranche à numéro impair, le bloc 202 indique alors que le nombre héxadécimal "8" est soustrait de la valeur emmagasinée dans les registres d'indicateurs de tranche et le déroulement du programme se poursuit avec le programme WK60 de la Figure 13. Si au bloc 200, la position de bit 0 du registre SLNUM n'était pas "1" indiquant une tranche paire, le nombre "A" est alors ajouté au registre d'indicateurs de tranche et le déroulement du programme se poursuit avec le programme WK60.

Si au bloc 194, on a déterminé que le registre SLNUM est égal à 0, on a alors une indication que le caractère Kanji est à imprimer et l'opération se poursuit avec le bloc 206 où on détermine si les drapeaux de dépassement de balayage ou de dernière tranche sont conditionnés. Le drapeau de dépassement de balayage est conditionné lorsque la rangée pour le fil 4 est remplie pendant le premier passage ou que la rangée pour le fil 3 est remplie pendant le deuxième passage. Le drapeau de dernière tranche est conditionné après le verrouillage des données pour le fil 9 dans le registre de données 80. Si une indication négative est donnée au bloc 206, selon le bloc 208, l'information d'adresse contenue dans les registres SLP2 et SLP3 est alors délivrée par le bus d'adresses à la logique de commande 78. On rappellera qu'au bloc 190 de la Figure 11, le premier multiplet d'adresse a été appliqué et que les données des registres SLP2 et SLP3 constituent le deuxième multiplet d'adresse. La logique de commande 78 accède à l'information dans la mémoire 72 et les données lues sont verrouillées dans les registres de données 80. Puis, selon le bloc 210, on détermine si le bit le plus significatif ou le bit 3 du registre SLP3 est conditionné. Si la réponse est positive et indique que les fils 6, 7 et 8 sont emmagasinés, selon le bloc 212, un "8" héxadécimal est alors soustrait du registre SLP3 et le déroulement du programme se poursuit avec le programme WK60. Si au bloc 210 on a déterminé que le bit 3 du registre SLP3 n'était pas conditionné indiquant ainsi que l'un des fils 1, 2, 3 et, dans le cas du premier passage, 4, est emmagasiné, selon le bloc 214, un "héxadécimal est alors ajouté au registre SLP3. Puis, selon le bloc 216, on détermine si l'indicateur de report a été conditionné. Si la réponse est positive, le drapeau de dépassement de balayage est conditionné. Si aucun report n'apparaît ou après que le drapeau de dépassement de balayage ait été conditionné, le programme se poursuit avec le programme WK60 de la Figure 13.

Si au bloc 206 on a déterminé que l'un des drapeaux de dépassement de balayage ou de dernière tranche est conditionné, ce qui indique que les données pour les fils 5 et 9 dans le cas d'un premier passage ou pour les fils 8, 4, 9 et 5 dans le cas d'un deuxième passage, doivent être emmagasinées dans la mémoire d'images de fil 70; le bloc 220 indique alors que les données emmagasinées dans les deux registres d'indicateurs de tranches les plus significatifs SLP0 et SLP1 sont transférés dans les registres intérieurs R0 et R1. Puis au bloc 222, on détermine si le drapeau de dernière tranches est conditionné. S'il ne l'est pas, ce que indique que le drapeau de dépassement de balayge est conditionné, le bloc 224 indique alors si oui ou non le premier passage est en train de s dérouler. S'il s'agit du premier passage, l'information du fil 9 doit être emmagasinée et selon le bloc 226, l'information d'adresse dans les registres SLP0, 1 et 2 à nouveau SLP1, est envoyée sur le bus d'adresses à la logique de commande 78. Dans ce cas, les positions de bit 2 et 3 du premier registre SLP1 sont établies à "00" et les positions de bit 0 et 1 du deuxième registre SLP1 sont établies à "01". Ainsi, un signal sous la forme: "XXXX-00XX-XXXX-XX01" est envoyé pour indiquer que la tranche 17 doit être adressée depuis la mémoire 72 ce qui tombe dans la deuxième partie de la mémoire. Puis, au bloc 228, un "9" héxadécimal est emmagasiné dans le registre SLP3 et les données adressées par la logique de commande 78 sont verrouillées dans le registre de données 80. Finalement, le drapeau de la dernière tranche est conditionné.

Si au bloc 224, on a déterminé qu'il ne s'agissait pas du premier passage et donc qu'il s'agissait du deuxième passage, le bloc 230 détermine si oui ou non la tranche pour le fil 9 est en cours de traitement. Si la résponse est positive, le bloc 231 indique que l'information SLP0, SLP1, SLP2 et à nouveau SLP1 est envoyée sur le bus d'adresses à la logique de commande 78 pour adresser la partie inaltérable de la mémoire 72. Dans ce cas, les positions de bit 2 et 3 du premier multiplet SLP1 sont établies à "00" et les positions de bit 0 et 1 du deuxième multiplet SLP1 seront établies à "10". Cette opération adresse la tranche 18 emmagasinée dans la partie inaltérable de la mémoire 72. Puis, au bloc 232, le nombre héxadécimal "A" est emmagasiné dans le registre SLP3 et les données lues à la mémoire 72 sont verrouillées dans le registre de données 80 et le drapeau de dernière tranche est conditionné.

Si le bloc 230 a indiqué que la tranche pour le fil 9 n'était pas en cours de traitement, les tranches pour le fil 4 ou le fil 8 sont alors à traiter. Dans ce cas, le bloc 234 détermine le traitement de la tranche du fil 4 ou du fil 8. Si la tranche du fil 4 est en cours de traitement, le bloc 236 indique que l'information d'adresse dans les registres SLP0 à SLP3 est sortie par le bus d'adresses et que le drapeau de fil 9 est conditionné, de façon que cela soit détecté au bloc 230 lors de l'exécution suivante du programme WKLOOP1. Finalement, les données sont verrouillées dans le registre de données 80. Puis, le déroulement du programme se poursuit avec l'exécution du programme WK60 de la Figure 13.

Si au bloc 234, on a déterminé que la tranche du fil 8 était en cours de traitement, le bloc 238 indique alors que l'adresse des registres SLP0, SLP1, SLP2 et SLP1 est envoyée par le bus d'adresses à la logique de commande 78. Dans ce cas, les positions de bit 2 et 3 du premier code du registre SLP1 sont établies à "00" et les positions de bit 0 et 1 du deuxième code du registre SLP1 sont établies à "00", ce qui définit ainsi la tranche 16. Puis, selon le bloc 240, le registre SLP3 est établi à "8", les données sont verrouillées dans le registre de données 80 depuis la mémoire 72 et le drapeau du fil 4 est conditionné de façon à être détecté au bloc 234 lors de l'exécution suivante du programme WKLOOP1.

La Figure 13 représente le programme WK60. Dans ce programme, la donnée de verrouillage dans le registre de données 80 est emmagasinée dans la position de la mémoire d'images de fil 70 ou dans une table des restes contenue dans la mémoire CMA 76. De plus, les informations précédemment emmagasinées dans la table des restes sont emmagasinées dans la mémoire d'images de fil 70. La partie du programme WK60 qui est exécutée dépend de la longueur du reste. Dans le cas de la machine à sept têtes pour laquelle la carte de mémoire des Figures 14A à 14D est établie, un reste de zéro bit ou de quatre bits apparaîtra. En se reportant au premier mot Kanji qui est composé des caractères 1 et 2 plus particulièrement au fil 1 et à la tranche de la tête 1 de celui-çi, que l'on trouve aux positions "5A0" et "5E8" de la Figure 14B, on voit que les huit bits de niveau haut du caractère 1 sont emmagasinés dans la position "5A0" et que les deux bits de niveau bas du caractère 1 et les six bits de niveau haut du caractère 2 sont emmagasinés dans la position "5E8".

Les quatre bits de niveau bas du caractère 2 sont alors emmagasinées dans la table des restes contenue dans la mémoire CMA 76. Lorsque les caractères 3 et 4 doivent être emmagasinés à la première exécution du programme WK60 pour le caractère suivant, les informations contenues dans la table des restes sont emmagasinées sous la forme des quatre bits de niveau haut de la position "630". Les quatre bits de niveau haut du caractère 3 seront alors emmagasinés dans les quatre bits de niveau bas de la position "630" et les six bits de niveau bas du caractère 3 seront alors emmagasinés dans la position 678 avec les deux bits de niveau haut du caractère 4. Finalement les huit bits de niveau bas du caractère 4 seront emmagasinés dans la position "6C0". Ainsi, on pourrait dire qu'avant l'instant où le caractère 1 est emmagasiné, il y a un reste de 0 bit et qu'avant l'instance où le caractère 3 est emmagasiné il y a un reste de quatre bits étant donné que quatre bits du caractère 2 n'ont pas encore été emmagasinés dans la mémoire d'images de fil 70.

Comme on le verra ci-après en se reportant aux Figures 15A à 15D, il est également possible d'avoir des restes de deux bits et de six bits, En outre, dans le cas des caractères ANK qui ne sont formés que de dix bits, comme le caractère 1, il est possible d'avoir des restes de 0, 2, 4 ou 6 bits.

En se reportant maintenant au programme WK60 de la Figure 13, on détermine d'abord au bloc 142 si oui ou non l'ancien reste est égal à 6. Si la réponse est négative, on détermine au bloc 244 si l'ancien reste est égal à 4. Si la réponse est négative, on détermine au bloc 246 si l'ancien reste est égal à 2. Si l'ancien reste n'est pas égal à 2, il doit donc être égal 0 et au bloc 248, le microprocesseur de communication 64 provoque le transfert des bits de données 17 et 18 emmagasinés dans le registre de données 80 et leur emmagasinage dans les positions des deux bits les plus significatifs du registre intérieur R4. Les positions des deux bits les moins significatifs du registre R4 sont alors effacées. Puis, au bloc 250, on exécute le programme WLASTCOL pour effacer le drapeau de la dernière colonne s'il est conditionné et le nouveau reste est emmagasiné dans la table des restes. En outre, la situation de dernière colonne, est traitée. Le programme WLASTCOL est représenté à la Figure 11 et sera décrit ultérieurement. Le nouveau reste est constitué par les données emmagasinées dans le registre R4, les bits de données réels 17 et 18 se trouvant dans les positions des deux bits les plus significatifs du registre R4 et les positions des deux bits les moins significatifs ayant été mises à "0". Ces positions des deux bits les moins significatifs représentent les colonnes 19 et 20 séparant des caractères et qui doivent être laissées en blanc.

Puis au bloc 252, les bits de données 9 à 16 sont emmagasinés dans le mémoire d'images de fil à l'adresse définie dans le registre DAR. Le signe @, dans le bloc 252 ainsi que dans d'autres blocs, indique que les données sont emmagasinées dans la mémoire d'images de fil 70 à une adresse définie par le code contenu dans le registre DAR. On rappellera que pour la première fois au cours de l'exécution du programme WK60 pour une nouvelle ligne, cette adresse est 5E8, si bien que les bits de données 9 à 16 sont emmagasinées dans la position "5E8". Les bits 9 à 16 représentent les deux bits de niveau bas 9 et 10 du caractère 1 plus les six bits de niveau haut 11 à 16 du caractère 2. Puis, la constante 1COL est soustraite du registre DAR. Dans le cas des Figures 14A à 14D, cette constante est la valeur héxadécimale "048" et le registre DAR contiendra alors l'adrese "5A0". Puis, les bits de données 1 à 8 sont emmagasinés à cette adresse. Ainsi, les bits 1 à 16 sont emmagasinés aux adresses "5A0" et "5E8" et les bits de données 17, 18 et deux "0" pour les colonnes 19 et 20, sont emmagasinés dans la table des restes. Finalement, au bloc 252, "1" est ajouté au registre DAR et le drapeau de la première tranche est effacé.

Puis, au bloc 254 on détermine si l'emmagasinage Gaiji a été terminé. Cette opération peut être assurée en testant le registre SLNUM pour déterminer s'il est égal à la valeur héxadécimale "A" ou en d'autres termes, si neuf tranches Gaiji précédentes ont été emmagasinées dans la mémoire d'images de fil. Si au bloc 254, on a déterminé que l'emmagasinage Gaiji est terminé, un branchement conduit au programme WPUTWI de la Figure 10 et l'adresse dans la mémoire 72 pour un nouveau caractère est obtenue à partir de la mémoire intermédiaire de texte.

Si l'on a déterminé que l'emmagasinage Gaiji n'est pas terminé, et ceci peut être le cas si un caractère Kanji est en cours d'impression et également si toutes les tranches Gaiji n'ont pas été complètement emmagasinées, on détermine au bloc 256 is le drapeau de dernière tranche est conditionné. Si la réponse est positive, au bloc 258, on détermine si le drapeau de dépassement de balayge est conditionné. Si le drapeau de dépassement de balayage n'est pas conditionné mais que le drapeau de dernière tranche l'est, un branchement nous ramène au programme WPUTWI de la Figure 10 et le code d'adresse pour un nouveau caractère est obtenu de la mémoire intermédiaire de texte. Si à la fois le drapeau de dernière tranches et le drapeau de dépassement de balayage sont restaurés ou que le drapeau de dernière tranche n'est pas conditionné, le bloc 260 augmente le registre TAILF de la valeur héxadécimale "8" et la constante 1COL de "048", dans le cas de la Figure 14A à la Figure 14D, est soustraite du registre DAR. On notera que les deux bits les plus significatifs du registre TAILF constituent un compteur des restes si bien qu'en augmentant le registre TAILF de "8", on indique qu'un reste de 4 est présent dans la table des restes.

On notera également qu'au bloc 252, le registre DAR a été augmenté de "1" après que les bits de données 1 à 8 aient été emmagasinés dans la mémoire d'images de fil 70. Ainsi, lorsque l'on retire du registre DAR la constante 1 COL de "048", le registre DAR contient l'adresse de "559" ou, en d'autres termes, indique la rangée 2 de la colonne 20 de la Figure 14B correspondant au fil 6 pour les caractères 1 et 2. Puis au bloc 262, on détermine si le registre DAR est passé en-dessous de "000". Ceci est appelé un dépassement de capacité inférieure et n'apparaît que lorsque le registre DAR a indiqué précédemment la colonne 1. S'il n'y a pas de dépassement de capacité inférieure, on revient alors au programme WKLOOP1 de la Figure 12 et la tranche suivante de données est placée dans la mémoire d'images de fil 70.

Si un dépassement de capacité inférieure s'est produit, le bloc 264 provoque le conditionnement du drapeau de dernière colonne et le registre TAILF est augmenté de la constante UFTL. Pour une machine à sept têtes comportant une organisation de mémoire telle que représentée dans les Figures 14A à 14D, la constante UFTL est "0". Dans le cas de la machine à quatre têtes présentant une organisation de mémoire telle que représentée dans les Figures 15A à 15D, la constante UFTL est égale à "C". De plus, le registre DAR est augmenté de la constante UFC qui est égale à "6 FF" pour la machine à sept têtes et a "7B3" pour la machine à quatre têtes. La constante UFC est utilisée pour déplacer l'adresse de l'indicateur de la mémoire d'images de fil contenue dans le registre DAR de la première colonne vers la droite sur 23 colonnes et vers le haut sur neuf rangées dans le cas des Figures 14A à 14B. Puis, on revient au programme WKLOOP1 et la tranche suivante est extraite et emmagasinée dans la mémoire d'images de fil 70.

Si au bloc 246 on a déterminé qu'un ancien reste de deux existait, au bloc 266, l'ancien reste est alors retiré de la table des restes et emmagasiné aux positions des deux bits les plus significatifs du registre intérieur R6. Ensuite, de nouveaux bits de données 17 et 18 sont emmagasinés dans les positions des deux bits les plus significatifs du registre R4, les bits de données 9 à 16 sont emmagasinés dans les registres R2 et R3 et les bits de données 1 à 8 sont emmagasinés dans les registres R0 et R1. Puis, selon le bloc 268, les données dans les registres R0, R1, R2, R3 et R4 sont décalées vers la droite de deux positions et les deux bits les moins significatifs dans le registre R6 sont effacés. Ensuite, le registre R6 est ajouté au registre R0 de façon que les deux bits les plus significatifs dans le registre R0 soient les deux bits de l'ancien reste et que les deux bits les moins significatifs dans le registre R0 soient les nouveaux bits de données 1 et 2. Puis, au bloc 270, on amorce le déroulement du programme WLASTCOL et le drapeau de dernière colonne est effacé si nécessaire. Le nouveau reste des bits 15 à 8 maintenant emmagasiné dans le registre R4, est emmagasiné dans la table des restes et tous les cas de dernière colonne sont traités.

Puis, selon le bloc 272, les données emmagasinées dans les registres intérieurs R2 et R3 qui sont constituées par les bits de données 7 à 14, sont emmagasinés dans la mémoire d'images de fil 70 à l'adresse indiquée par le registre DAR. Le registre DAR est alors décompté de la constante 1COL et les données emmagasinées dans les registres intérieurs R0 et R1, c'est-à-dire les bits 1 à 6, plus les deux bits de l'ancien reste sont emmagasinés dans la mémoire d'image de fil 70. Puis, le registre DAR est augmenté de 1 et le déroulement du programme se poursuit au bloc 274.

Au bloc 274, le drapeau de première tranche est effacé s'il est conditionné et au bloc 276, on détermine si l'emmagasinage Gaiji est réalisé. S'il en est ainsi, un branchement conduit au programme WPUTWI. Sinon, un branchement conduit au bloc 278 où on détermine si le drapeau de dernière tranche est conditionné. S'il en est ainsi, au bloc 280, on détermine si le drapeau de dépassement de balayage est conditionné. Si le drapeau de dernière tranche est conditionné et que le drapeau de dépassement de balayage ne l'est pas, un branchement conduit alors au programme WPUTWI. Si le drapeau de dernière tranche n'est pas conditionné, l'opération se poursuit au bloc 282 où le registre TAILF est augmenté de "8" et la constante 1COL est soustraite du registre DAR et l'opération se poursuit par le programme WKLOOP1. Les blocs 276, 278, 280 et 282 sont similaires au bloc 254, 256, 258 et 260 décrits précédemment en détails.

Si au bloc 244, on a déterminé que l'ancien reste est égal à 4, on continue alors au bloc 284. Au bloc 284, le drapeau de dernière colonne est effacé et l'ancien reste de quatre bits est emmagasiné dans le registre R6. Puis, les bits de données 17 et 18 sont pris dans le registre de données 80 et emmagasinés dans les positions des deux bits les plus significatifs du registre R2 et les positions des deux bits les moins significatifs du registre R2 sont effacées. Ensuite, les bits de données 9 à 16 sont pris dans le registre de données 80 et emmagasinés dans les registres R0 et R1. Puis, selon le bloc 286, les données dans les registres R1 et R2 sont emmagasinées dans la mémoire d'images de fil. Ceci correspond aux bits 13 et 18 augmentés de deux bits de blanc représentant les colonnes 19 et 20. Puis le registre DAR est décompté de la constante 1COL, les informations dans le registre R0 correspondant aux bits 9 à 12 sont transférées dans le registre R2 et les bits de données 1 à 8 sont emmagasinés dans les registres R0 et R1. Ensuite, les informations dans les registres R1 et R2 sont emmagasinés dans la mémoire d'images de fil 70. Ceci correspond aux bits 5 à 12. Puis, le registre DAR est décompté de la constante 1COL et les quatre bits du reste contenu dans le registre R6 et les bits 1 à 4 registre R0 sont emmagasinés dans la mémoire d'images de fil 70 et le registre DAR est augmenté de 1. Puis, l'opération se poursuit au bloc 274 où un branchement conduit soit au programme WKLOOP1 pour traiter le tranche suivante, soit au programme WPUTWI pour traiter le caractère suivant.

Si au bloc 242, on a déterminé que l'ancien reste était égal à 6, c'est-à-dire que les positions des deux bits les plus significatifs du registre TAILF étaient égales à "11", selon le bloc 288, le drapeau de dernière colonne est alors effacé et l'ancien reste est retiré de la table des restes et emmagasiné dans les registres R6 et R7. Puis, les bits de données 1 à 8 sont emmagasinés dans les registres R2 et R3, les bits de données 9 à 16 sont emmagasinés dans les registres R4 et R5 et les bits de données 17 et 18 sont emmagasinés dans le registre R0. Puis, selon le bloc 290, les registres R2, R3, R4, R5 et R0 sont décalés vers la droite de deux positions et les positions de bit 0 et 1 du registre R7 sont effacées. Puis, le registre R7 est ajouté au registre R2, les résultats étant emmagasinés dans le registre R2. Ainsi, le registre R2 contient les bits 5 et 6 de l'ancien reste plus les bits 1 et 2 des nouvelles données, les reigstres R3 à R5 contiennent les bits 3 à 14 des nouvelles données, le registre R0 contient les bits 15 à 18 des nouvelles données et le registre R6 contient les bits 1 à 4 de l'ancien reste.

Ensuite, au bloc 292, les données emmagasinées dans les registres R5 et R0 qui correspondant aux bits de données 11 à 18, sont emmagasinées dans la mémoire d'images de fil 70 et le registre DAR est décompté de la constante 1COL. Puis, au bloc 294, on détermine si un dépassement de capacité inférieure s'est produit à la suite du décomptage du registre DAR. Le dépassement de capacité inférieure ne se produit que lorsque les informations emmagasinées à l'instant se trouvent dans la colonne 1. Si aucun dépassement de capacité inférieure ne se produit, le bloc 310 indique alors que les contenus des registres R3 et R4 (bits de données 3 à 10) sont emmagasinés dans la mémoire d'images de fil 70, la constante 1COL est soustraite du registre DAR, les contenus des registres R6 et R2 (les bits 1 à 6 et les bits de données 1 et 2 de l'ancien reste) sont emmagasinés dans la mémoire d'images de fil 70 et finalement le registre DAR est augmenté de 1. Puis le programme se poursuit au bloc 274.

Si le dépassement de capacité inférieure apparaît au bloc 294, au bloc 296, le registre DAR est alors augmenté de la constante UFC et le registre R1 est effacé. En outre, le registre TAILF est augmenté de la constante UFTL qui est égale à "0" pour la machine à sept têtes et égale à "C" pour la machine à quatre têtes.

Puis, au bloc 298, on détermine si deux bits sont emmagasinés dans la dernière colonne, c'est-à-dire la colonne 25 dans les Figure 14B et 14D ou la colonne 44 dans les Figures 15B et 15D. Si cela est le cas, au bloc 300, les informations dans les registres R4, R3 et R2 sont décalées vers la gauche de deux positions et les informations dans les registres R4 et R1 qui correspondent maintenant aux bits de mémoire d'images de fil 9 et 10, sont emmagasinées dans la dernière colonne. Puis, le registre DAR est décompté de la constante 1COL et les informations contenues dans les registres R2 et R3 qui correspondent aux fils 1 à 8, sont emmagasinées dans l'avant-dernière colonne. Finalement, le registre DAR est augmenté de 1 et le déroulement du programme se poursuit au bloc 274 où un branchement conduit soit au programme WKLOOP1 soit au programme WPUTWI.

Si on a déterminé au bloc 298 qu'il n'y avait pas deux bits dans la dernière colonne, au bloc 302, on détermine alors s'il y a quatre bits dans la dernière colonne. S'il en est ainsi, le bloc 304 indique que les informations dans les registres R4 et R1 sont emmagasinées dans la dernière colonne de la mémoire d'images de fil 70, le registre DAR est diminué de la constante 1COL et les informations emmagasinées dans les registres R2 et R3 sont emmagasinées dans l'avant avant-dernière colonne de la mémoire d'images de fil 70. Finalement, le registre DAR est augmenté de 1 et l'on poursuit le déroulement du programme au bloc 274.

Si au bloc 302, on a déterminé que la dernière colonne ne contenait pas quatre bits, le bloc 306 déterminée alors si la dernière colonne contient six bits. Dans ce cas, le bloc 308 indique alors que lest contenus des registres R4, R3 et R2 sont décalés vers la gauche de deux positions, ce qui provoque ainsi la perte des deux bits les plus significatifs du reste. Puis, le bloc 310 indique que les données dans les registres R3 et R4 sont emmagasinés dans la dernière colonne de la mémoire d'images de fil 70, le registre DAR est décompté de la constante 1COL et les informations emmagasinées dans les registres R6 et R2 (reste de quatre bits et les bits de données 1—4) sont emmagasinées dans l'avant-dernière colonne de la mémoire d'images de fil 70 et finalement le registre DAR est diminué de 1.

Si au bloc 306, on a déterminé que la dernière colonne ne contenait pas six bits, et donc qu'elle en contenait huit, un branchement conduit alors au bloc 310 et les informations des registres R3 et R4 sont emmagasinés dans la mémoire d'images de fil et les informations des registres R6 et R2 sont emmagasinés dans le mémoire d'images de fil 70. Après l'exécution du bloc 310, le déroulement du programme se poursuit au bloc 274 où un branchement conduit soit au programme WKLOOP1 soit au programme WPUTWI.

En se reportant à nouveau à la Figure 11, on décrira le programme WLASTCOL. Tout d'abord, on déterminera au bloc 312 si le drapeau de dernière colonne est conditionné. S'il ne l'est pas, le bloc 314 déterminée si le caractère suivant est un caractère Kanji. S'il s'agit d'un caractère Kanji, au bloc 316, le registre R5 est effacé et le nouveau reste est emmagasiné dans la table des restes qui est contenue dans la mémoire CMA 76. La table des restes peut être composée de neuf multiplets d'informations et un indicateur est utilisé pour indiquer le multiplet associé à une rangée ou un fil particulier. L'indicateur indiquera un multiplet suivant la rangée actuellement traitée de la tête concernée. Ainsi, lorsque le fil 1 de la tête 1 est en cours de traitement, l'indicateur indiquera le premier multiplet de la table des restes. Lorsque le fil 6 est en cours de traitement l'indicateur indiquera le deuxième multiplet de la table des restes et ainsi de suite. Après l'exécution du bloc 316, on revient au programme principal.

Si au bloc 314, on a déterminé qu'un caractère Kanji n'était pas en cours d'impression, au bloc 318, on détermine alors si la première tranche est en cours d'emmagasinage. Si ce n'est pas le cas, on exécute alors le bloc 316. Cependant, si la première tranche est en cours d'emmagasinage, au bloc 320, le registre R5 est effacé, la table des restes est effacée et le registre DAR est augmenté de la constante 1COL. Puis, le programme se poursuit au bloc 322 où le nouveau reste est emmagasiné dans la mémoire d'images de fil 70 et le registre DAR est diminué de la constant 1COL et l'on revient au programme en cours.

Si au bloc 312, on a déterminé que le drapeau de dernière colonne a été conditionné, au bloc 326, le drapeau de dernière colonne est effacé, le registre R4 est effacé et la table des restes est effacée. Puis, le déroulement du programme se poursuit au bloc 322 par l'emmagasinage du nouveau reste dans la mémoire d'images de fil 70 et le registre DAR est diminué de la constante 1COL et l'on revient au programme en cours.

Maintenant que l'organigramme a été expliqué, quelques exemples d'emmagasinage de caractères dans la mémoire d'images de fil 70 seront donnés pour mieux comprendre le fonctionnement particulier du système. Tout d'abord pour la configuration à sept têtes du bloc d'impression 50 de la Figure 4, une carte de mémoire est représentée aux Figures 14A à 14D. L'adresse du premier caractère à emmagasiner est lue à la mémoire intermédiaire de texte aux blocs 164 et 170 et emmagasinée dans les registres SLP et le registre DAR est établi à "5E8" au bloc 172. Puis, le drapeau de première tranche est conditionné au bloc 186 et un branchement conduit au programme WKLOOP1 à la Figure 12. Puis, en passant au bloc 208, l'information d'adresse est envoyée pour adresser la tranche 1 de la mémoire 72 et la valeur héxadécimale "A" est ajoutée au registre SLP3 étant donné que le fil 1 est en fonctionnement. Etant donné que ceci ne provoque pas le conditionnement d'un report un branchement conduit au programme WK60 de la Figure 13.

On détermine que l'ancien reste est égal à zéro aux blocs 242, 244 et 246, si bien que les blocs 248, 250 et 252 sont exécutés, ce qui provoque l'emmagasinage des caractères 1 et 2 dans les positions "5A0" et "5E8". En outre, un reste de quatre bits est emmagasiné dans la table des restes par le programme WLASTCOL de la Figure 11, qui est appelé au bloc 250. Pendant l'emmagasinage de la première tranche dans la mémoire d'images de fil 70, le registre DAR est diminué de la constante 1COL après que les bits 9 à 16 aient été emmagasinés et augmenté de "1" après que les bits 1 à 8 aient été emmagasinés. Puis, au bloc 260, le registre DAR est réduit de la constante 1COL si bien qu'il indique maintenant la position "559". On revient ensuite au programme WKLOOP1 pour traiter la tranche 11 qui est la tranche correspondant au fil 6 au premier passage. Au bloc 208, l'adresse de la tranche 11 est envoyée sur le bus d'adresses à la logique de commande 78 afin de provoquer le verrouillage de la tranche 11 dans le registre de données 80. A cet instant, la position de bit 3 du registre SLP3 est égale à "1" et ainsi au bloc 212, le nombre "8" est soustrait du registre SLP3, ce qui rend celui-çi égal à "3".

Le déroulement du programme se poursuit alors avec le programme WK60 où l'on détermine que le reste est égal à "4" étant donné que pendant l'exécution précédente du bloc 260, le registre TAILF a été augmenté de "8". Puis, l'exécution se poursuit avec le bloc 284 et le bloc 286 au cours desquels les bits de données 13 à 18 et les deux zéros représentant les colonnes 19 et 20 sont emmagasinés dans la position "559", le registre DAR est diminué de la constante 1COL de "048", les bits de données 5 à 12 sont emmagasinés à la position "511" et l'ancien reste qui est de 0 pour le premier mot, plus les bits de données 1 à 4, sont emmagasinés à la position '4C9". Puis, le registre DAR est augmenté de "1" et est à nouveau diminué au bloc 282 de façon à indiquer la position "482". De plus, le registre TAILF est augmenté de "8" si bien que des deux bits les plus significatifs sont "00" indiquant un reste de 0. Un branchement conduisant au programme WKLOOP1 provoque l'emmagasinage de la tranche suivante (tranche 3) des caractères 1 et 2 dans les positions "43A" et "482". Ce même procédé se poursuit pour l'emmagasinage des tranches 13, 5, 15 et 7 dans la mémoire d'images de fil. Pendant que la tranche 7 est emmagasinée aux positions "16E" et "1B6", lorsque "A" est ajouté à SLP3 au bloc 214, il y a dépassement et l'indicateur de report est conditionné. Ainsi, au bloc 218, le drapeau de dépassement de balayage est conditionné et le déroulement du programme se poursuit au programme WK60 où les caractères sont emmagasinés dans les positions "16E" et "1B6" et le registre DAR est diminué pour indiquer la position "127" et l'on revient alors au programme WKLOOP1.

A ce moment, le test exécuté au bloc 206 indique que le drapeau de dépassement de balayage est conditionné, ainsi de nouvelles adresses doivent être envoyées à la mémoire 72 pour lire la tranche 17. Etant donné que le drapeau de dernière tranche n'est pas conditionné et qu'un premier passage est en cours, l'opération se poursuit au bloc 226 pour accéder à la tranche 17 et un "9" est alors emmagasiné dans le registre SLP3. De plus, au bloc 228, le drapeau de dernière tranche est conditionné pour indiquer que la tranche suivante sera la dernière tranche des deux caractères formant le mot Kanji. Puis, les informations sont emmagasinées selon le programme WK60 dans les positions "097", "ODF" et "127" comme expliqué précédemment et le registre DAR est augmenté pour indiquer la position "050" et un branchement nous ramène au programme WKLOOP1.

A cet instant, aux blocs 306 et 222, le drapeau de dernière tranches est conditionné si bien qu'une nouvelle adresse est à nouveau renvoyée à la logique de commande 78 pour lire la tranche 9 de la mémoire 72 pour le caractère désiré et les données sont verrouillées dans le registre de données 80 comme indiqué par les blocs 244, 246 et 248. De plus, le drapeau de dépassement de balayage est effacé si bien que seul le drapeau de dernière tranche demeure conditionné. Puis, le déroulement du programme se poursuit avec le programme WK60 et les informations de caractères 1 et 2 sont emmagasinées dans les positions "008" et "050", un reste de quatre bits étant emmagasiné dans la table des restes. Maintenant, au bloc 256, étant donné que le drapeau de dernière tranche est conditionné et au bloc 258, étant donné que le drapeau de dépassement de balayage est restauré, un branchement conduit au programme WPUTWI si bien qu'un nouveau caractère peut être introduit dans la mémoire d'images de fil 70. On notera que le bloc 282 n'est pas exécuté pour la dernière tranche si bien que le registre DAR indique la position "00A".

Après le branchement au programme WPUTWI, on lit le code de caractère suivant et le programme se poursuit avec le programme WKANWI de la Figure 11. Lorsque la donnée de mise à jour qui est égale à la constante 1COL de "048" est retirée du registre DAR au bloc 172, un dépassement de capacité inférieure apparaît, le drapeau de dernière colonne est conditionné, la valeur UFC de "6FF" est ajoutée à la valeur du registre DAR pour provoquer l'emmagasinage dans celui-ci d'une valeur "6C0". Puis, les caractères 3 et 4 correspondant au deuxième mot Kanji sont emmagasinées de la même manière, le registre DAR se terminant à la position "099". L'opération se poursuit pour les caractères 5 et 6 correspondant au troisième mot Kanji, le premier mot Kanji étant emmagasiné, dans la position du fil 1 pour la tête 2, aux positions "009" et "051". Après cette opération, au bloc 262, on détermine une condition de dépassement de capacité inférieure et le drapeau de dernière colonne est conditionné, le registre DAR étant augmenté de la constante UFC afin de provoquer l'indication de la position "6C1". Puis les caractères 5 et 6 sont chargés dans les fils pour la tête 1. Ce type de chargement de la mémoire d'images de fil 70 se poursuit jusqu'à ce que tous les caractères aient été chargés. On notera que les caractères sont chargés suivant un angle correspondant à la disposition angulaire des fils dans le bloc d'impression 50.

On notera également que dans le cas du bloc d'impression à sept têtes 50 et des Figures 14A à 14D, le seul reste qui peut apparaître est de zéro ou de quatre bits. Ainsi, les seules parties du programme WK60 de la Figure 13 qui sont exécutées sont les parties commençant aux blocs 248 et 284. Cependant, ceci n'est pas le cas de la machine à quatre têtes qui comporte un bloc d'impression 60 représenté à la Figure 6 et dont la carte de la mémoire d'images de fil 70 est représentée aux Figures 15A à 15D.

Dans le cas de la machine à quatre têtes, le registre DAR est initialement conditionné pour avoir une adresse de "3B1" et les caractères 1 et 2 sont introduits de la même manière que décrite précédemment. Après que la dernière tranche des caractères 1 et 2 ait été introduite, on revient au programme WPUTWI et l'adresse du caractère suivant est extraite de la mémoire intermédiaire de texte. Puis, au cours du déroulement du programme WKANWI, la donnée de mise à jour est soustraite du registre DAR et une condition de dépassement de capacite inférieure apparaît. Cependant, étant donné qu'il ne s'agit pas de la dernière colonne, le drapeau de dernière colonne n'est pas conditionné au bloc 176. Au bloc 178, le registre DAR est augmenté de la constante UFC de "7B3" de façon à indiquer la position "40B" et les caractères 3 et 4 sont alors placés dans la mémoire d'images de fil 70. Cette opération se poursuit jusqu'à ce que les caractères 17 et 18 aient été emmagasinés dans la mémoire d'images de fil 70 et que le registre DAR contienne l'adresse 38D.

Puis on exécute le programme WPUTWI et au cours de l'exécution du programme WKANWI, au bloc 172, la donnée de mise à jour de "384" est soustraite de la valeur du registre DAR et le registre DAR indique la position "009". Ainsi, le test effectué au bloc 174 indique qu'il n'y a pas de condition de dépassement de capacité inférieure et on saute au bloc 186. A cet instant, on notera qu'au bloc 172, le registre TAILF est mis à jour par l'emagasinage d'un "C". Normalement, lorsqu'apparaît la condition de dépassement de capacité inférieure au bloc 184, une constante UFTL, qui est égale à un "C" dans le cas d'une machine à quatre têtes, est ajoutée provoquant l'emmagasinage dans le registre TAILF d'une valeur "10" dans les positions des deux bits les plus significatifs. Cependant, lorsqu'aucune condition de dépassement de capacité inférieure n'apparaît, le registre TAILF contient un "11" ou un "C" dans les positions des deux bits les plus significatifs. Le programme se poursuit comme précédemment par l'exécution du programme WKLOOP1 jusqu'au au programme WK60 représenté à la Figure 13. A cet instant, le test effectué au bloc 242 indique que l'ancien reste est maintenant égal à 6 étant donné que les positions des deux bits les plus significatifs du registre TAILF sont "11". On passe maintenant au bloc 288 où les données sont obtenues et les bits 11 à 18 sont emmagasinés à la position "009", comme indiqué par le caractère 20 qui est écrit dans la colonne 1 à la rangée du fil 1 de la tête 2. Puis, la constante 1COL de "2D" est soustraite du registre DAR et une condition de dépassement de capacité inférieure est détectée au bloc 294. Le registre DAR est alors mis à jour par l'addition de la constante UFC de "7B3" si bien que le registre DAR contient une adresse de "78F". De plus le drapeau de reste est mis à jour par l'addition de la constante UFTL de "C". Puis, aux blocs 298, 302 et 306, un test est effectué sur la dernière colonne en testant la valeur de la constante UFTL. Dans ce cas, la constante UFTL est égale à "C" et le test est positif au bloc 306. Ainsi, l'information contenue dans les registres R4, R3 et R2 est décalé sur la gauche et au bloc 310, les informations dans le registre R3 et R4 sont emmagasinées dans la mémoire d'images de fil 70 à la position "78F". Dans ce cas, les informations emmagasinées sont constituées par les bits 5 à 10 étant donné que seuls les six bits de niveau bas du caractère 19 doivent être emmagasinés. Puis, la constante 1COL est retirée du registre DAR et l'information contenue dans les registres R6 et R2 est emmagasinée à la position "762". Ceci correspond aux quatres bits de reste laissés à partir du caractère 18 auxquels s'ajoutent les bits 1 à 4 du caractère 19. Ensuite, on poursuit l'exécution du programme au bloc 274 où un branchement conduit au programme WKLOOP1 et les tranches restantes des caractères 19 et 20 sont emmagasinés. Après que les caractères 19 et 20 aient été emmagasinés, le registre DAR est conditionné pour indiquer la position "063" et les tranches des caractères 21 et 22 sont emmagasinées. Cependant, dans ce cas, les tranches des caractères 21 et 22 tout en étant emmagasinées pour la tête 2 ont des restes de 2 et 6. Après l'apparition de la condition de dépassement de capacité inférieure et l'addition des facteurs de correction, les tranches des caractères 21 et 22 pour la tête 1 présentent des restes de 0 ou 4. Ce même procédé se poursuit avec les tranches qui sont placées dans les têtes 1 ou 3 qui comportent des restes de 0 ou 4 bits et les tranches qui sont placées dans les têtes 2 et 4 qui comportent des restes de 2 bits ou 6 bits.

En se reportant à nouveau aux Figures 8 et 9, on décrira la manière suivant laquelle les bits sont lus dans la mémoire d'image de fil 70. Dans la mémoire d'images de fil des Figures 14A à 14D et 15A à 15D, chaque colonne de bits est composée des images appliquées aux 63 fils à une position d'avancement donnée du bloc d'impression 50 ou du bloc d'impression 60. Ainsi, lorsque les blocs d'impression 50 ou 60 se déplacent, les bits sont lus, une colonne de bits à la fois pour chaque mouvement d'avancement. Le mouvement d'avancement est déterminé par l'émetteur d'impression 56 qui permet la délivrance d'une impulsion ou d'un signal d'émission d'impression à chaque mouvement de 0,254 mm du bloc d'impression 50 ou du bloc d'impression 60.

La Figure 8 comprend en addition aux éléments précédemment traités, des bascules de commande HIG 328 qui répondent au signal H.L 2 issue de l'unité de décodage 108 et les lignes 0 à 4 du bus de sortie de données CTA. Le signal H.L 2 est délivré chaque fois qu'un signal de l'émetteur d'impression 56 est détecté. Les bascules de commande HIG délivrent les signaux INIT, le signal THIN et les signaux BIT SEL 1—3. Les signaux INIT et THIN sont ceux définis par les données portées par le bus de données au moment où le signal H.L 2 est délivré et peuvent être des signaux "0" ou "1". Les lignes de sélection de bits 1 à 3 contiennent un code binaire de 0 à 7 et sont appliquées à l'entrée de sélection de la logique de sélection 8:1 84. La logique 330 répond au signal H.L 2 et au signal de restauration CMA RST issu du microprocesseur de communication 64. Le signal CMA RST apparaît une fois à chaque cycle de fonctionnement du microprocesseur 64. La logique 30 délivre le signal CLR CNTR pour effacer le compteur d'état H 334 à partir du moment où le signal H.L 2 est délivré jusqu'à ce que le bord avant du signal CMA RST apparaît. Ceci est représenté à la Figure 9. La logique 330 délivre également le signal EN CLK pour déconditionner l'horloge H 338 pendant que le signal d'effacement du compteur est délivré. La logique 332 répond à un signal STOP H. délivré par le compteur d'états H. 334 qui est au niveau bas pendant que le signal H est lu. De plus, la logique 332 répond au signal CMA AHS (sélection niveau haut adresse) issu du microprocesseur de communication 64 et qui est délivré chaque fois que le microprocesseur 64 ne met pas d'instruction en place. La logique 332 délivre le signal COND. H. représenté à la Figure 9 et le signal MAR. H.

Le signal MAR. H. et les signaux EN CLK sont appliqués par la porte ET 336 à l'entrée de données de l'horloge 338. Le signal de sélection issu du microprocesseur de communication 64 qui est représenté à la Figure 9 est délivré pour effacer l'horloge 338 et un signal de chronologie de 8 mégahertz est délivré à l'entrée de chronologie de l'horloge 338. L'horloge 338 peut être un registre à décalage, le troisième étage délivrant le signal DEC., le quatrième étage le signal CYCLE ECRITURE WR, le cinquième étage le signal CONDITIONNEMENT ECRITURE C. WR et le sixième étage le signal COMPTE CPT. Ces quatre signaux sont représentés respectivement à la Figure 9. Initialement, la sortie de la porte ET 336 passe au niveau haut, ce qui provoque le décalage d'un bit "1" par l'horloge 338. Comme on le voit dans la Figure 9, les bords avants de chacun des signaux DECALAGE, CYCLE ECRITURE, CONDITIONNEMENT ECRITURE et COMPTE apparaissent respectivement à un moment ultérieur. Le bord arrière de chaque signal est commandé par l'apparition du signal de sélection CMA SEL issu du microprocesseur de communication 64.

Le compteur d'état H 334 est un compteur binaire présentant une entrée d'effacement et une entrée de comptage. L'impulsion COMPTE CPT issu de l'horloge 338 est délivrée à l'entrée de comptage du compteur d'états H 334 et le signal CLR CNTR issu de la logique 330 est appliqué au compteur d'états H 334 pour son effacement. Chaque fois qu'apparaît un signal CPT, le compte dans le compteur 334 augmente. Avant la lecture d'informations dans la mémoire d'images de fil 70, le signal CLR CNTR efface le compteur d'états H 334.

Les signaux CYCLE ECRITURE WR et CONDITIONNEMENT ECRITURE C WR issus de l'horloge 338 sont appliqués à la logique 340 en même temps que les trois sorties de niveau bas du compteur d'états H 334. La logique 340 délivre un signal ECRITURE EC à l'entrée d'écriture de la mémoire de lecture et d'écriture (R/W) 346 de seize bits sur huit. La mémoire 346 peut être une mémoire à accès aléatoire rapide et chaque fois qu'un signal est appliqué à son entrée d'écriture, l'information appliquée à l'entrée de données est écrite dans la position définie par le code appliqué à l'entrée ADRESSE ADR de celle-ci. Le signal appliqué à l'entrée ADRESSE de la mémoire 346 est délivré à partir de l'unité logique de sélection 2:1 SEL 342 qui répond aux lignes d'états H 3 à 6 et aux lignes 4—7 du bus d'adresses issue du microprocesseur de commande 66. Les lignes d'états H 3 à 6 déterminent les informations qui sont à écrire dans la mémoire de lecture et écriture 346 et les lignes du bus d'adresses issu du microprocesseur de commande 66 déterminent les informations qui sont à lire dans la mémoire de lecture et d'écriture 346. Le circuit de sélection 346 fonctionne jusqu'à ce que le compteur d'états H 334 soit en dépassement à son huitième étage, ce qui provoque l'application d'un signal STOP H. Le signal STOP H est également appliqué au travers de la logique 332 pour déconditionner l'horloge d'états.

Les données délivrées à la mémoire 346 sont obtenues du registre de décalage 344 par huit bits à la fois. Le registre de décalage 344 comporte une entrée de données, une entrée d'effacement CLR et une entrée d'horloge CLK. Le signal INIT est appliqué pour effacer le registre de décalage 344 et le signal DEC issu de l'horloge 338 est appliqué une fois à chaque cycle pour synchroniser un bit de donnée appliqué à l'entrée de données du registre à décalage 344. Le signal délivré à l'entrée de données du registre à décalage 344 est issu de la porte ET 352. En supposant, pour le moment, que la porte ET 352 est conditionnée par le signal de sortie de la porte $\overline{ET}$ 350, l'information lue dans la mémoire d'images de fil 70 est délivrée par multiplet par l'intermédiaire du circuit de sélection 84. La lecture de l'information dans la mémoire d'images de fil 70 est amorcée par le microprocesseur de commande 66 qui adresse un colonne de multiplets particulière de la mémoire d'imagee de fil 70 en plaçant l'adresse de cette colonne de multiplets sur son bus de sortie de données. Cette opération conditionne le compteur H SAR 126A qui délivre l'adresse de mémoire pour cette colonne de multiplets sur le bus H SAR. Chaque fois que le signal de comptage est délivré, le compteur H SAR est augmenté et ainsi le multiplet suivant de la colonne de multiplets est adressée par le bus H. SAR. Le bus H SAR est appliqué à l'unité de sélection 2:1 128A et si le signal de conditionnement COND H est délivré par la logique 332, l'unité de sélection 2:1 délivre l'adresse H SAR à la mémoire d'images de fil 70.

Un bit du multiplet adressé par le bus H SAR et appliqué à l'unité de sélection 8:1 "84" est sélectionné par le code des signaux BIT SEL 1—3, appliqué par l'intermédiaire de la porte ET 352 et décalé dans le registre à décalage 344. A la lecture de la mémoire d'images de fil 70, le compteur H SAR 126 en réponse aux informations portées par le bus de données du microprocesseur de commande 66 sélectionne une colonne particulière comme représenté aux Figures 14A à 14D ou aux Figures 15A à 15D. Puis, chaque multiplet dans cette colonne est lu un par un lorsque le compte du compteur H SAR est augmenté et défini par les lignes H SAR 1 à 10. Un bit particulier du multiplet lu est isolé par l'unité logique de sélection 8:1 84 et ce bit isolé est défini par les lignes BIT SEL 1 à 3 verrouillées dans les bascules de commande H 328 par le bus de sortie de données du microprocesseur de commande 66 et le signal H. L. 2. Le compteur H SAR 126 compte à partir de la valeur initiale chargée par le microprocesseur CTA jusqu'à ce que cette valeur soit augmentée de 63. Ainsi, 64 multiplets d'information sont lus. Le bit désiré est sélectionné à partir de chacun de ces multiplets et emmagasiné dans 64 des 128 positions de bit de la mémoire 346. Puis, le nombre de bits désiré qui, dans le cas de la machine à sept têtes, est de 63, est lu à la mémoire 346 par le microprocesseur de commande 66 et appliqué par le bus de données au microprocesseur de commande 66 ou directement au circuit de verrouillage de tête 96.

Pour certains types d'applications dans lesquelles la vitesse du mouvement du bloc de tête 50 ou 60 est accrue, il devient impossible d'imprimer deux points adjacents. Ceci est particulièrement vrai lors de l'impression de caractères du type ANK. Chaque fois que l'on désire effectuer une opération d'impression dans ce mode de fonctionnement, le bit THIN est passé au "1" logique. Ce bit est appliqué à la porte $\overline{ET}$ 350. Une deuxième entrée à la porte $\overline{ET}$ 350 est issue du circuit de sélection 8:1 348 qui reçoit les données sur le bus de données du microprocesseur de commande 66 et les signaux ETAT H 0 à 2 du compteur d'états 334. Si un bit "1" est délivré à la sortie de la mémoire 346 et sélectionné par les lignes d'ETAT H 0 à 2, un bit "1" est appliqué à la porte $\overline{ET}$ 350. Si le bit THIN est un "1", la sortie de la porte $\overline{ET}$ 350 est alors à "0" et la porte ET 352 est déconditionnée. Ainsi, quelle que soit l'information qui est emmagasinée dans la mémoire d'images de fil 70, elle ne peut pas être délivrée au registre de décalage 344. Ceci permet de ne déclencher un dispositif de commande que tous les deux points.

En fonctionnement, le microprocesseur de commande 66 adresse une colonne de la mémoire d'images de fil 70 et chaque fois qu'une impulsion d'émetteur d'impression 56 est détectée, une colonne de bits particulière sélectionnée par l'unité logique de sélection 8:1 84 est lue à partir de la mémoire d'images de fil 70 et emmagasinée dans la mémoire de lecture et d'écriture 346. Après que 64 bits aient été écrits dans la mémoire de lecture et d'écriture 346, le microprocesseur de commande délivre des signaux d'adresses pour obtenir, en une seule fois, un multiplet de 63 bits. Cette opération se poursuit jusqu'à ce que les huit colonnes de bits de la colonne de multiplets aient été lues et délivrées au travers de la mémoire de lecture et d'écriture 346. Puis le microprocesseur 66 adresse la colonne de multiplets suivante et le même processus se déroule et ainsi de suite jusqu'à ce que la colonne de bits finale ait été sélectionnée et délivrée aux dispositifs de commande des fils.

La présente spécification concerne principalement l'impression des caractères Kanji et Gaiji. Cependant, le même schéma pourrait également être appliqué pour l'impression de caractères alpha-numériques classiques. Dans ce cas, chacune des positions de caractère représentées aux Figures 14A à 14D et 15A à 15D représenterait un caractère ANK individuel plutôt que la moitié d'un caractère Kanji ou Gaiji. Le schéma de chargement de la mémoire d'images de fil 70 et de lecture de celle-çi serait pratiquement identique. Une ligne peut également comprendre à la fois des caractères du type ANK ou des caractères Kanji. Bien qu'un premier passage ait été décrit comme un mouvement de gauche à droite du bloc d'impression 50 ou 60, le premier passage pourrait aussi facilement être constitué par un mouvement de droite à gauche et le second passage constitué par un mouvement de gauche à droite. Il en serait ainsi lors de l'impression d'une ligne du type ANK au cours d'un passage de gauche à droite, suivie par une ligne de caractères Kanji.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Générateur de signaux pour imprimante à matrice de fils, pour l'impression de caractères sur un milieu d'enregistrement, l'imprimante comportant:

au moins une tête d'impression qui se déplace sur ledit milieu d'enregistrement, ladite tête d'impression comprenant plusieurs éléments d'impression, chacun d'eux pouvant être commandé pour imprimer un symbole, chaque caractère étant composé de plusieurs symboles imprimés selon une configuration contenue dans une matrice de caractère, lesdits éléments d'impression étant disposés les uns par rapport aux autres le long d'un axe oblique par rapport à la trajectoire de ladite tête d'impression, de sorte que, à un instant donné, les différents éléments d'impression sont respectivement positionnés sur différents caractères, et,

le générateur de signaux comprenant:

des premiers moyens (1, 68) délivrant des données qui représentent des configurations de symboles constitutifs de caractères, chaque configuration de symboles étant inclus dans une matrice de caractère,

ce générateur de signaux étant caractérisé en ce qu'il comprend en outre:

un élément supplémentaire de mémoire (70) dans lequel les données provenant dudit générateur de signaux et correspondants à tous les caractères à imprimer dans une ligne donnée peuvent être emmagasinées et duquel les données emmagasinées peuvent être lues,

des seconds moyens (64) pour emmagasiner dans l'élément de mémoire (70) les données de configuration de symboles pour un caractère entier et ce, selon une disposition semblable à la configuration de la position des éléments d'impression, et

des troisièmes moyens (66, 88) pour lire les données emmagasinées dans l'élément de mémoire colonne par colonne ou rangée par rangée et pour commander le déclenchement des éléments d'impression.

2. Générateur selon la revendication 1, caractérisé en ce que l'élément de mémoire (70) comprend des première et deuxième parties, une de ces parties subissant une opération de lecture des données qu'elle contient pendant que l'autre partie est chargée de données par une operation d'emmagasinage.

3. Générateur selon l'une quelconque des revendications précédentes, caractérisé en ce que:

lesdites données qui représentent des configurations de symboles définissent des symboles de caractère en série, et ce rangée par rangée ou colonne par colonne dans la matrice de caractère,

l'élément de mémoire (70) est organisé sous la forme de plusieurs positions adjacentes adressables, et

lesdits seconds moyens (64) emmagasinent chacune desdites rangées ou colonnes de données dans des positions de mémoire non adjacentes mais en relation avec la configuration des éléments d'impression de telle façon que, lorsque la tête d'impression se déplace, les données correspondant aux symboles à imprimer à chaque cycle d'impression, sont emmagasinées dans des positions adjacentes de l'élément de mémoire, et

les troisièmes moyens (66, 88) lisent les données emmagasinées dans des positions adjacentes de l'élément de mémoire (70) pour obtenir lesdits signaux à appliquer pour commander lesdits éléments d'impression.

4. Générateur selon l'une quelconque des revendications précédentes, caractérisé en ce que lesdits symboles sont des points, et en ce que lesdits éléments d'impression sont des fils.

5. Générateur selon l'une quelconque des revendications précédentes, caractérisé en ce que ladite imprimante comprend plusieurs têtes d'impression, chaque tête d'impression comprenant plusieurs éléments d'impression disposés sur un axe oblique par rapport à la trajectoire de ladite tête d'impression.

6. Générateur selon la revendication 5, caractérisé en ce que lesdits seconds moyen (64) emmagasinent lesdites données de configuration de symboles dans l'élément de mémoire selon une disposition en relation à la fois avec le nombre des têtes d'impression et la configuration des éléments d'impression dans chaque tête d'impression.

7. Générateur selon la revendication 3, caractérisé en ce que:

ledit élément de mémoire (70) est adressable par multiplets, les multiplets étant associés en bloc représentant une colonne de multiplets formée de plusieurs colonnes de bits, et des multiplets successifs et se correspondant dans chaque colonne formant une rangée, lesdits troisièmes moyens (66, 88) effectuent la lecture dudit élément de mémoire colonne de bits par colonne de bits.

8. Générateur selon la revendication 7, caractérisé en ce que lesdits troisièmes moyens (66, 88) effectuent la lecture d'une colonne de multiplets, multiplet par multiplet, et isolent le bit de chaque multiplet correspondant à la colonne de bits qui est alors lue.

9. Générateur selon l'une quelconque des revendications 3, 7 ou 8, caractérisé en ce que:

le générateur comporte en outre des moyens de commande des première et deuxième parties dudit élément de mémoire (70) pour commander les seconds moyens (64) d'emmagasinage et les troisièmes moyens (66, 88) de lecture pour alterner les fonctions des deux parties de l'élément de mémoire lorsque toutes les données ont été emmagasinées et lues.

10. Générateur selon l'une quelconque des revendications 3, 7, 8 ou 9, caractérisé en ce que lesdits seconds moyens (64) d'emmagasinage comprennent un premier microprocesseur programmé et en ce que lesdits troisièmes moyens (66, 88) de lecture comprennent un deuxième microprocesseur.

11. Générateur selon la revendication 10, caractérisé en ce que que le premier microprocesseur comprend:

des moyens pour recevoir les données délivrées par les premiers moyens,

des moyens pour obtenir des données de définition de ladite configuration de points rangée par rangée et pour l'emmagasinage de ces données dans une rangée correspondante d'au moins une position de colonnes de multiplets dudit élément de mémoire, les données définissant chaque rangée différente de points étant emmagasinées dans une rangée différente et une position différente de colonne dans ledit élément de mémoire.

12. Générateur selon la revendication 3, caractérisé en ce que:

ladite imprimante imprime plusieurs caractères sur une ligne lorsque lesdits éléments d'impression sont en mouvement, chaque caractère comprenant une configuration de points pouvant être définie sous la forme d'une matrice,

ledit élément de mémoire (70) comporte plusieurs positions multi-bits adressables en séquence, lesdites positions étant divisées en blocs présentant une position adressée initiale, lesdits blocs représentant des colonnes d'une matrice et lesdites positions initiales et les positions correspondantes desdites positions initiales de chaque bloc représentant des rangées de ladite matrice, chaque rangée de ladite matrice dudit élément de mémoire étant associée avec un élément d'impression et chaque colonne de bits de cette matrice correspondant au déclenchement des éléments d'impression pour une position particulière de ces éléments lorsqu'ils se déplacent devant ledit milieu d'enregistrement, et

lesdits seconds moyens (64), emmagasinent les données, délivrées par lesdits premiers moyens (1, 68) et concernant une rangée de points pour un caractère déterminé, dans une rangée de ladite matrice du second élément de mémoire et ce, dans les colonnes de ladite rangée correspondant à la position dudit caractère sur ladite ligne.

13. Générateur selon la revendication 12, caractérisé en ce que les données, lues à partir dudit élément de mémoire et emmagasinées dans le second élément de mémoire de lecture et d'écriture, sont formées par plusieurs chiffres binaires ayant une valeur pour chaque point et une valeur opposée pour l'absence d'un point dans ladite matrice de caractères.

**Patentansprüche**

1. Signalgenerator für Drahtmatrixdrucker zum Aufdrucken von Zeichen auf einem Registriermedium, wobei der Drucker aufweist:

zumindest einen Druckkopf, der sich längs des genannten Registriermediums bewegt und aus mehreren Druckelementen besteht, die einzeln gesteuert werden können, um ein Symbol zu drucken, und jedes Zeichen aus mehreren Symbolen besteht, die gemäss einer in einer Zeichenmatrix enthaltenen Konfiguration angeordnet sind, wobei die genannten Druckelemente jeweils längs einer Linie gelagert sind, die im Verhältnis zur Laufbahn des genannten Druckkopfs schräg liegt, so dass die verschiedenen Druckelemente zu einem gegebenen Zeitpunkt jeweils auf verschiedenen Zeichen liegen, und

einen Signalgenerator, der folgendes umfasst:

erste Mittel (1, 68), die Daten liefern, welche Zeichen bildende Symbolkonfigurationen darstellen, wobei jede Symbolkonfiguration in einer Zeichenmatrix eingeschlossen ist,

dieser Signalgenerator dadurch gekennzeichnet ist, dass er ausserdem noch aufweist:

ein zusätzliches Speicherelement (70), in welchem die vom genannten Signalgenerator kommenden Daten, die allen zu druckenden Zeichen einer gegebenen Zeile entsprechen, eingelagert werden können und in dem die gespeicherten Daten gelesen werden können,

zweite Mittel (64), um die der Symbolkonfiguration entsprechenden Daten für ein vollständiges Zeichen im Speicherelement (70) ablagern zu können, und zwar nach einer Vorrichtung, die der Konfiguration der Position der Druckelemente ähnlich ist, und

dritte Mittel (66, 88), um die im Speicherelement abgelagerten Daten zeilenweise oder spaltenweise lesen zu können und um das Auslösen der Druckelemente zu steuern.

2. Signalgenerator nach Anspruch 1, dadurch gekennzeichnet, dass das Speicherelement (70) einen ersten und einen zweiten Teil beinhaltet und dass während des Lesens der in einem Teil enthaltenen Daten der andere Teil mittels eines Einleseverfahrens mit Daten geladen wird.

3. Signalgenerator nach allen der vorstehenden Ansprüche, dadurch gekennzeichnet, dass:

die genannten Daten Symbolkonfigurationen darstellen, die die Symbole der Zeichen hintereinander und Spalte um Spalte oder Zeile um Zeile in einer Zeichenmatrix darstellen,

das Speicherelement (70) in Form mehrerer nebeneinanderliegender adressierbarer Positionen organisiert ist, und

die genannten zweiten Mittel (64) jede der genannten Spalten oder Zeilen in nicht nebeneinanderliegenden, aber in Verbindung mit der Konfiguration der Druckelemente stehenden Speicherplätzen abspeichern und zwar derart, dass die bei jedem Druckzyklus zu druckenden Symbole bei jeder Bewegung des Druckkopfes an neben dem Speicherelement liegenden Plätzen abgespeichert werden, und

die dritten Mittel (66, 68) die an den Stellen neben dem Speicherelement (70) abgespeicherten Daten lesen, um die genannten Signale zu erhalten, die zur Steuerung der genannten Drukkelement anzuwenden sind.

4. Signalgenerator nach allen der vorstehenden Ansprüche, dadurch gekennzeichnet, dass die genannten Symbole Punkte und die genannten Druckelemente Drähte sind.

5. Signalgenerator nach allen der vorstehenden Ansprüche, dadurch gekennzeichnet, dass der genannte Drucker mehrere Druckköpfe umfasst, wobei jeder dieser Druckköpfe mehrere Druckelemente aufweist, die auf einer im Verhältnis zur Laufbahn des genannten Druckkopfes schrägliegenden Achse angeordnet sind.

6. Signalgenerator nach Anspruch 5, dadurch gekennzeichnet, dass die genannten zweiten Mittel (64) die Daten der genannten Symbolkonfiguration im Speicherelement nach einem Schema ablagern, das sowohl von der Anzahl der Druckköpfe als auch von der Konfiguration der Druckelemente in jedem Druckkopf bedingt ist.

7. Signalgenerator nach Anspruch 3, dadurch gekennzeichnet, dass:

das genannte Speicherelement (70) über Bytes adressiert werden kann, wobei die in Blöcken organisierten Bytes eine Bytespalte darstellen, die aus mehreren Bitspalten und aufeinanderfolgenden Bytes gebildet ist, die sich gegenseitig in jeder Spalte entsprechen und so eine Zeile bilden, während die genannten dritten Mittel (66, 88) das genannten Speicherelement Bitspalte um Bitspalte ablesen.

8. Signalgenerator nach Anspruch 7, dadurch gekennzeichnet, dass die genannten dritten Mittel (66, 88) eine Bytespalte Byte um Byte ablesen und das Bit jedes Bytes isolieren, das der gerade abgelesenen Bitspalte entspricht.

9. Signalgenerator nach den Ansprüchen 3, 7 oder 8, dadurch gekennzeichnet, dass:

der Signalgenerator ausserdem noch Steuermittel für den ersten und den zweiten Teil des genannten Speicherelementes (70) umfasst, um die zweiten Einlesemittel (64) und die dritten Ablesemittel (66, 88) zu steuern und die Funktionen der beiden Teile des Speicherelementes umzukehren, sobald das Einspeichern und Ablesen aller Daten beendet ist.

10. Signalgenerator nach den Ansprüchen 3, 7, 8 oder 9, dadurch gekennzeichnet, dass die genannten zweiten Einspeichermittel (64) einen ersten programmierten Mikroprozessor und die genannten dritten Lesemittel (66, 88) einen zweiten Mikroprozessor aufweisen.

11. Signalgenerator nach Anspruch 10, dadurch gekennzeichnet, dass der erste Mikroprozessor aufweist:

Mittel, um die von den ersten Mitteln erstellten Daten zu empfangen,

Mittel, um die Definitionsdaten der genannten Punktkonfiguration Zeile um Zeile zu erhalten und um diese Daten in einer entsprechenden Zeile mit wenigstens einer Position von Bytespalten des genannten Speicherelementes abzulagern, wobei die Daten, die jede verschiedene Punktzeile definieren, auf einer anderen Zeile und an einer anderen Stelle der Spalte im genannten Speicherelement abgelagert werden.

12. Signalgenerator nach Anspruch 3, dadurch gekennzeichnet, dass:

der genannte Drucker mehrere Zeichen auf eine Linie druckt, wenn sich die genannten Druckelemente bewegen, wobei jedes Zeichen eine Punktkonfiguration aufweist, die in Form einer Matrix definiert werden kann,

das genannten Speicherelement (70) mehrere Positionen mit einer Vielzahl von Bits aufweist, die in einer Sequenz addressiert werden können, wobei die genannten Positionen in Blöcke geteilt sind, die eine anfängliche adressierte Position darstellen, die genannten Blöcke die Spalten einer Matrix darstellen und die genannten anfänglichen Positionen sowie die den genannten anfänglichen Positionen entsprechenden Positionen jedes Blockes die Zeilen der genannten Matrix darstellen, jede Zeile der genannten Matrix des Speicherelements mit einem Druckelement verbunden ist und jede Bit-Spalte dieser Matrix dem Auslösen der Druckelemente für eine bestimmte Position dieser Elemente entspricht, wenn sie sich vor dem genannten Registriermedium bewegen, und

die genannten zweiten Mittel (64) die Daten einspeichern, die von den genannten ersten Mitteln (1, 68) erstellt werden und die eine Punktzeile für ein bestimmtes Zeichen aus einer Zeile der genannten Matrix des zweiten Speicherelements betreffen und die in den Spalten der genannten Zeile, die der Position des genannten Zeichens auf der genannten Linie entspricht.

13. Signalgenerator nach Anspruch 12, dadurch gekennzeichnet, dass die Daten, die im genannten Speicherelement gelesen werden und im zweiten Lese- und Schreib-Speicherelement gespeichert sind, aus mehreren Binärzahlen bestehen, die einen Wert für jeden Punkt und den entgegengesetzten Wert für die Abwesenheit eines Punktes in der genannten Zeichenmatrix besitzen.

**Claims**

1. A signal generator for a wire matrix printer for printing characters on a record medium, said printer comprising:

at least a print head which moves across said record medium, said print heat including a plurality of printing elements, each of which is operable to cause a symbol to be printed, each character having a plurality of printed symbols in an arranged configuration within a character matrix, said printing elements being positioned with respect to one another along one path which is non-perpendicular to said print head movement so that, on a given time, the various printing elements are respectively positioned on various characters, and,

said signal generator including:

first means (1, 68) for providing data representing symbol configurations which form characters, each symbol configuration being arranged within a character matrix,

said signal generator being characterized in that it further includes:

an additional memory element (70) in which the data coming from said signal generator and corresponding to all the characters to be printed along a given line, can be stored and from which previously stored data can be read,

second means (64) for storing into memory element (70) the symbol configuration data for an entire character and this, in an order related to said printing element positioning, and

third means (66, 88) for reading the data stored in said memory element in one of a column or row order and for controlling the operation of said printing elements.

2. A generator according to claim 1 characterized in that memory element (70) includes first and second parts, one part having data read therefrom while the other part has data stored therein.

3. A generator according to any one of the above claims, characterized in that:

said data representing symbol configurations define said character symbols serially by one of row or column of said character matrix,

memory element (70) is organized as a plurality of adjacent adressable locations, and

said second means (64) store each of said one row or column of data into non-adjacent memory locations but according to the printing element configuration so that when the print head is moving, the data corresponding to the symbols to be printed on each printing cycle, are stored into adjacent locations of the memory element, and

third means (66, 88) read the data stored in the adjacent locations of memory element (70) to get said signals to be applied in order to control said printing elements.

4. A generator according to any one of the above claims, characterized in that said symbols are dots and in that said printing elements are wires.

5. A generator according to any one of the above claims, characterized in that said printer includes a plurality of print heads, each print head including a plurality of printing elements positioned along a path which is non-perpendicular to the path of said print head movement.

6. A generator according to claim 5, characterized in that said second means (64) stores said symbol configuration data into the memory element in an order related to both the number of print heads and the positioning of the print elements in each print head.

7. A generator according to claim 3, characterized in that:

said memory element (70) is adressable by bytes, the bytes being associated into blocks representing a byte column comprised of a plurality of bit columns, and corresponding successive bytes within each column forming a row,

said third means (66, 88) read said memory element one bit column at a time.

8. A generator according to claim 7, characterized in that said third means (66, 88) reads a byte column one byte at a time and isolates the one bit of each byte corresponding to the then read bit column.

9. A generator according to any one of claims 3, 7 or 8, characterized in that:

said generator further includes means to control first and second portions of said memory element (70) to control second means (64) for storing and third means (66, 88) for reading to alternate between the functions of the two portions of the memory element after all data has been stored and read.

10. A generator according to any one of claims 3, 7, 8 or 9, characterized in that said second storage means (64) includes a first programmed microprocessor and in that said third means (66, 88) for reading includes a second microprocessor.

11. A generator according to claim 10 characterized in that said first microprocessor includes:

means for receiving the data provided by said first means,

means for obtaining data defining said dot pattern one row at a time and for storing said data into a corresponding row of at least one byte column location of said memory element, the data defining each different row of dots being stored into a different row and a different column location in said memory element.

12. A generator according to claim 3, characterized in that:

said printer prints a plurality of characters on a line as said printing elements move, each character including a pattern of dots definable in a matrix format,

said memory element (70) has a plurality of sequentially addressable multi-bit locations, said locations being divided into blocks having an initial addressed location, said blocks representing columns of a matrix and said initial locations and corresponding locations from said initial locations of each block representing rows of said matrix, each row of said matrix of said memory element being associated with one print element and each bit column of said matrix corresponding to the actuation of the print elements at a particular location of said elements as they move in front of said record medium, and

said second means (64) stores the data delivered by said first means (1, 68) and relating to one row of dots for a determined character, in a row of said matrix of said second memory element and this, into the columns of said row corresponding to the location of said character on said line.

13. A generator according to claim 12, characterized in that the data read from said memory element and stored into the second memory element for reading and writing, are comprised of a plurality of binary digits having one value for each dot and an opposite value for the absence of a dot in said character matrix.

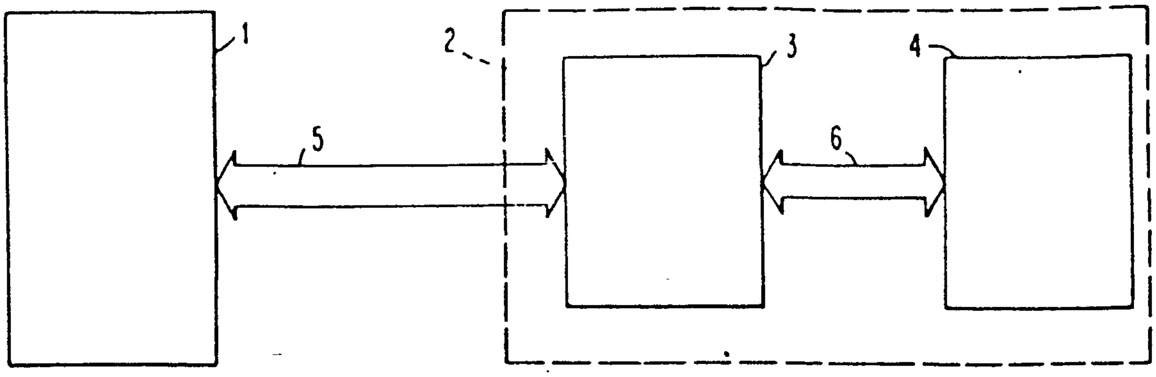


FIG. 1

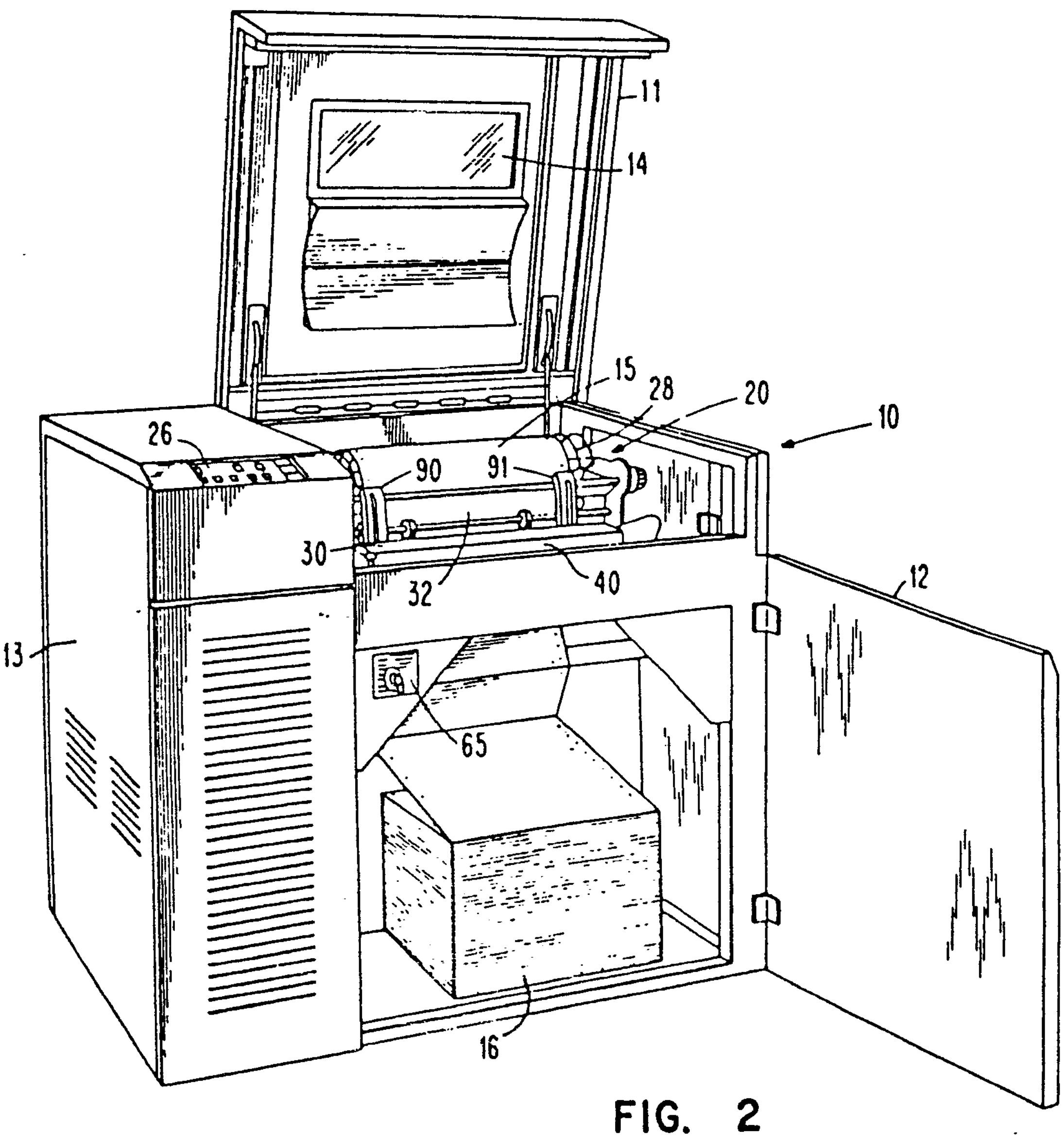


FIG. 2

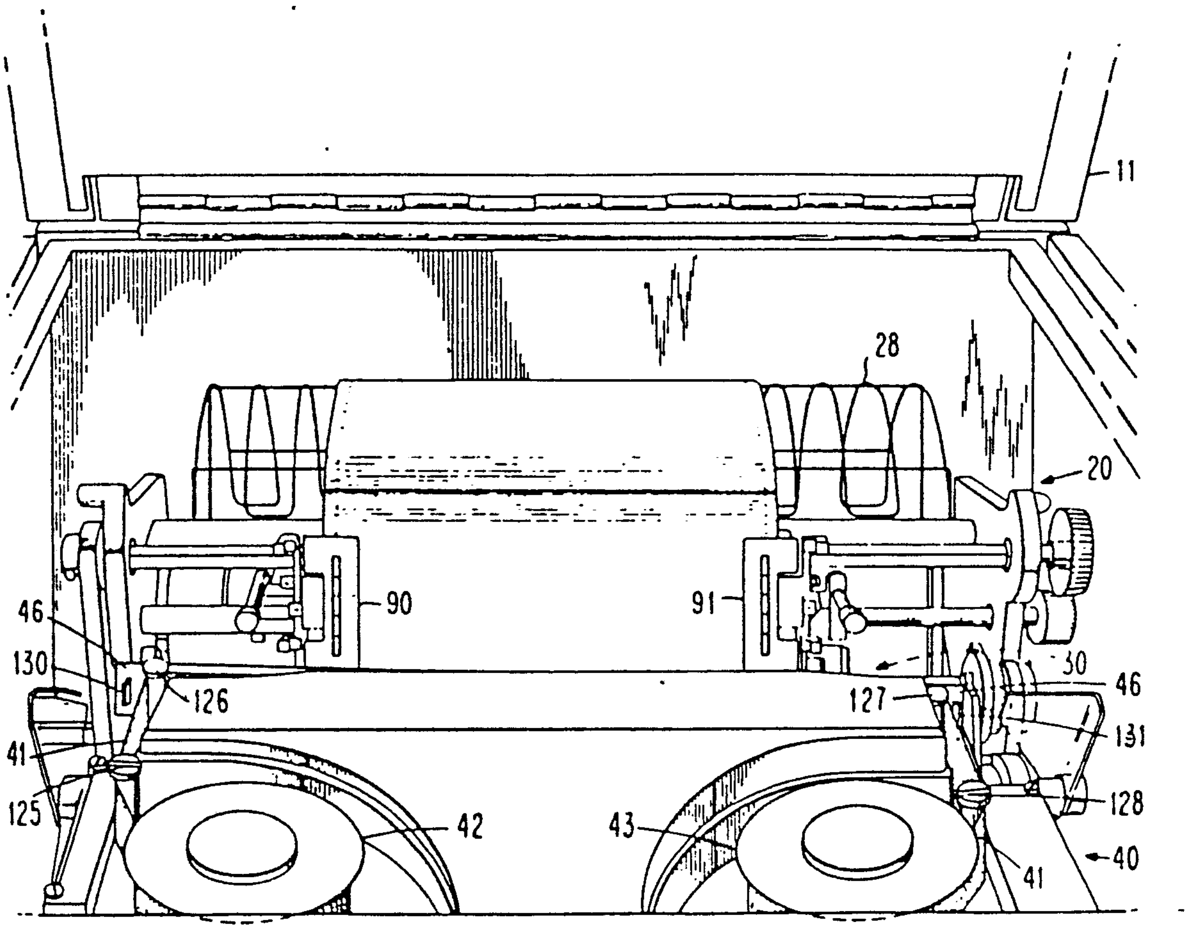


FIG. 3

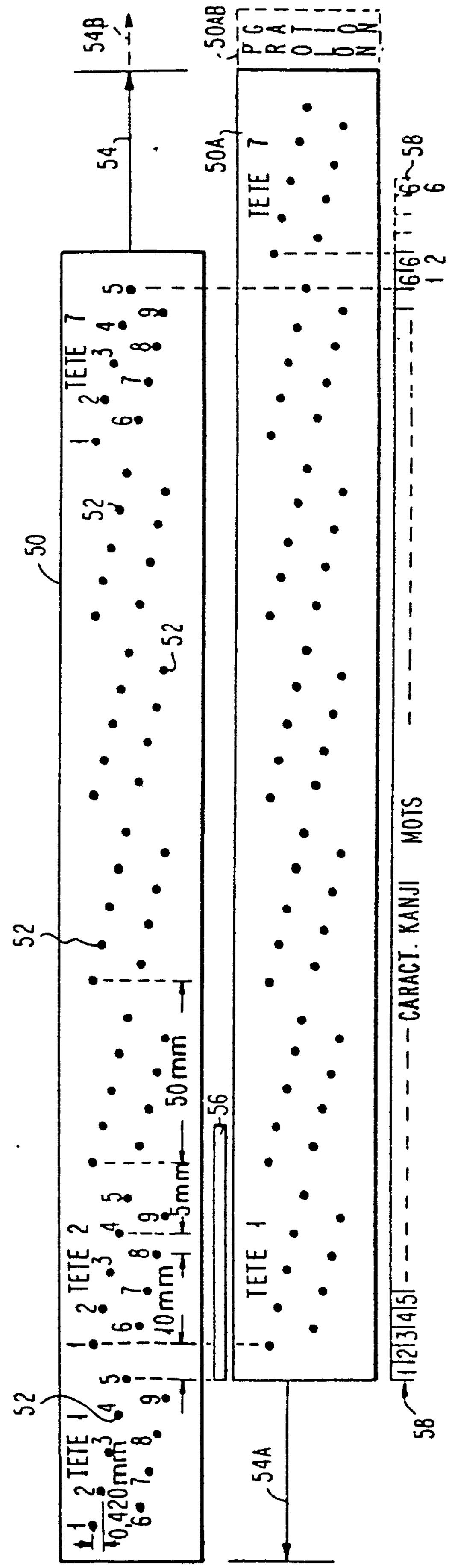
TETE 1
TETE 2
TETE 7
0,420mm
10mm
5mm
50mm
CARACT. KANJI
MOTS
PG
RA
OT
TI
LO
ON
50
50A
50AB
52
54
54A
54B
56
58

FIG. 4

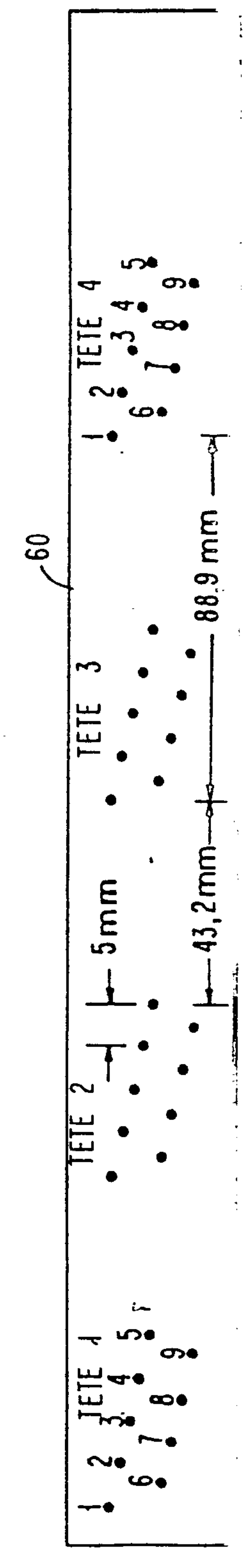
TETE 1
TETE 2
TETE 3
TETE 4
5mm
43,2mm
88.9 mm
60

FIG. 6

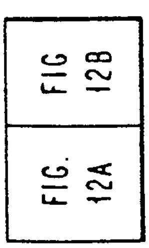


FIG.12

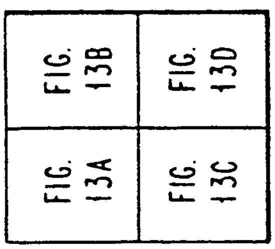


FIG.13

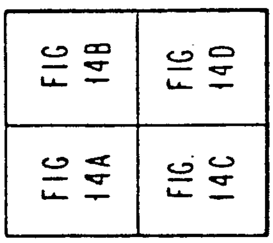


FIG.14

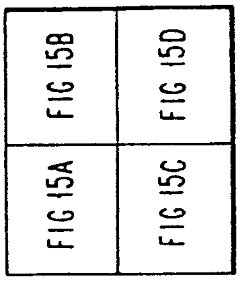


FIG.15

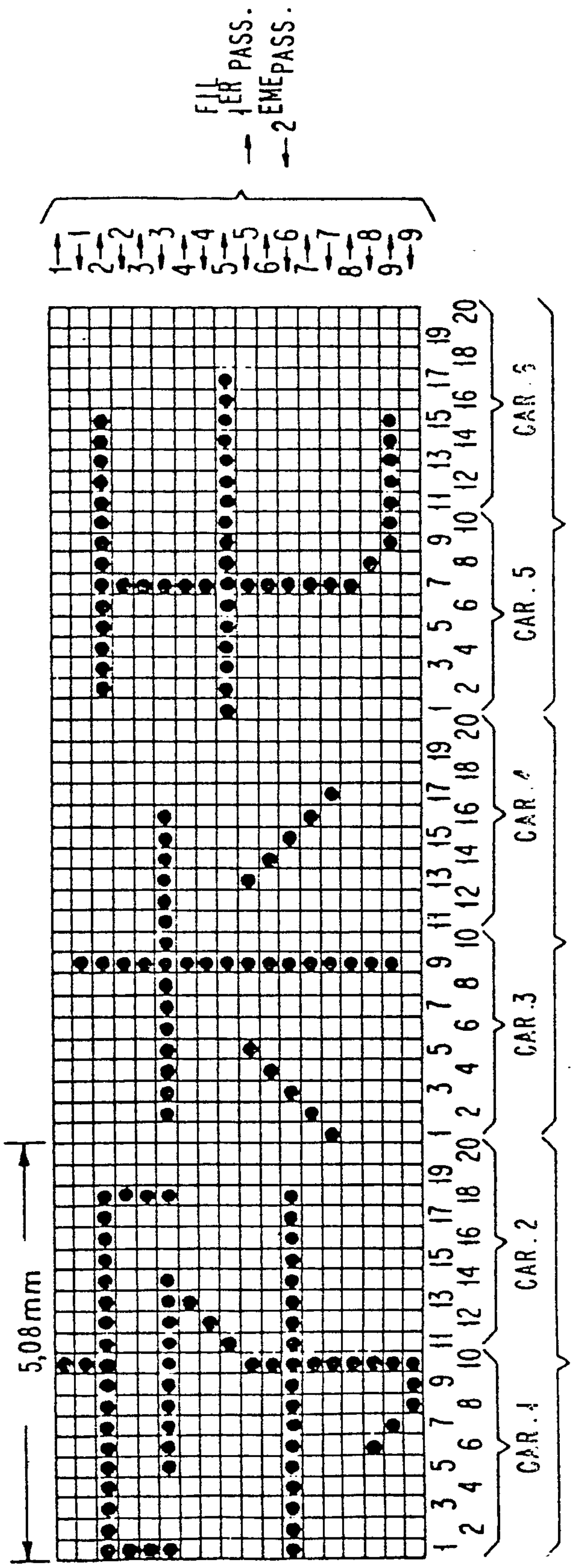


FIG.5

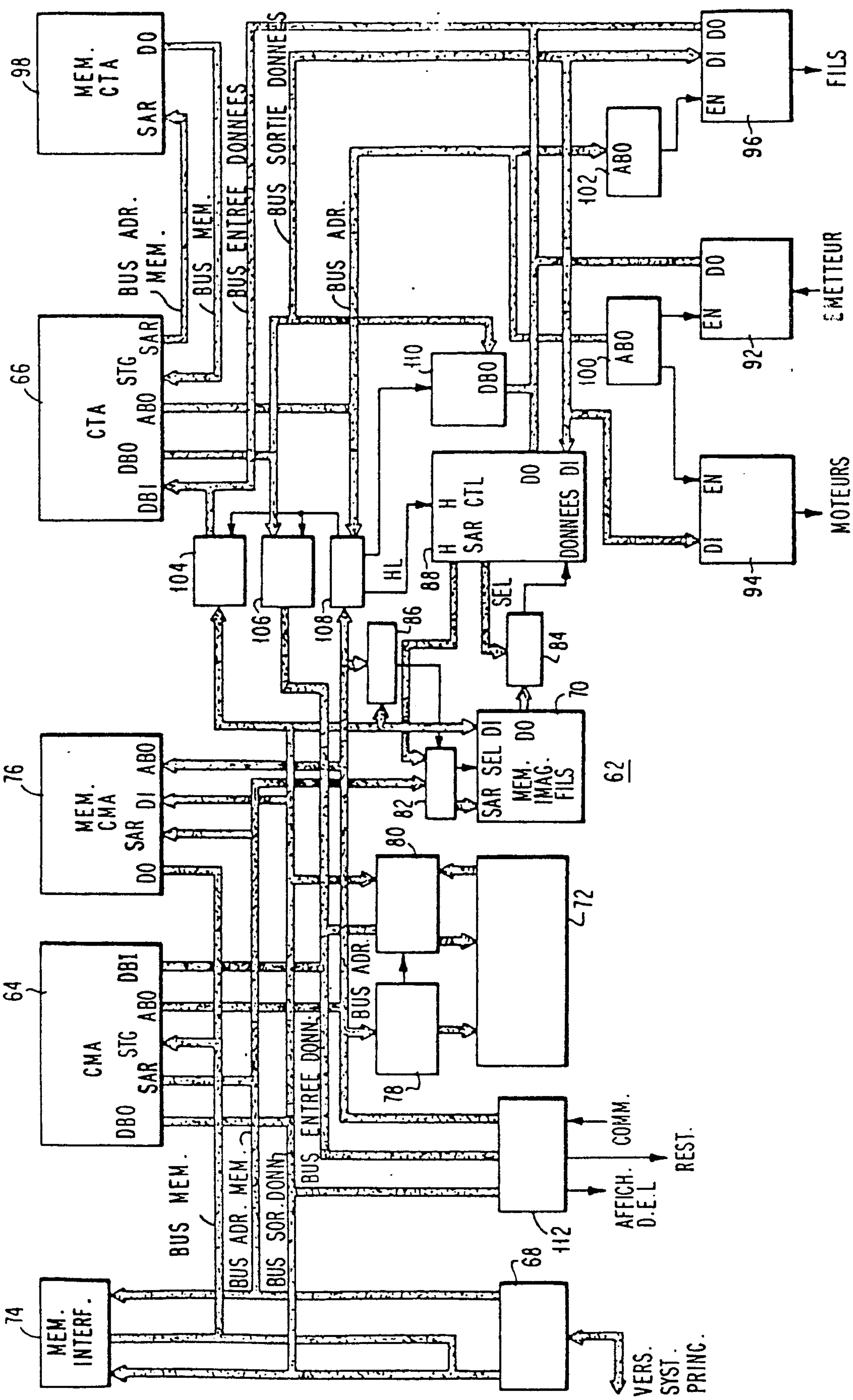
MEM. CTA
SAR
DO
98
CTA
DBI
DBO
ABO
STG
SAR
66
BUS ADR. MEM.
BUS MEM.
BUS ENTREE DONNEES
BUS SORTIE DONNEES
BUS ADR.
MEM. CMA
DO
SAR
DI
ABO
76
CMA
DBO
SAR
STG
ABO
DBI
64
MEM. INTERF.
74
BUS MEM.
BUS ADR. MEM.
BUS SOR. DONN.
BUS ENTREE DONN.
BUS ADR.
104
106
108
HL
110
DBO
88
H
SAR
H
CTL
DO
DONNEES
DI
SEL
84
86
70
SAR
SEL
DI
DO
MEM. IMAG. FILS
62
82
80
72
78
112
COMM.
REST.
AFFICH. D.E.L
68
VERS. SYST. PRINC.
ABO
102
ABO
100
EN
DI
DO
96
FILS
EN
DO
92
EMETTEUR
DI
EN
94
MOTEURS

FIG.7

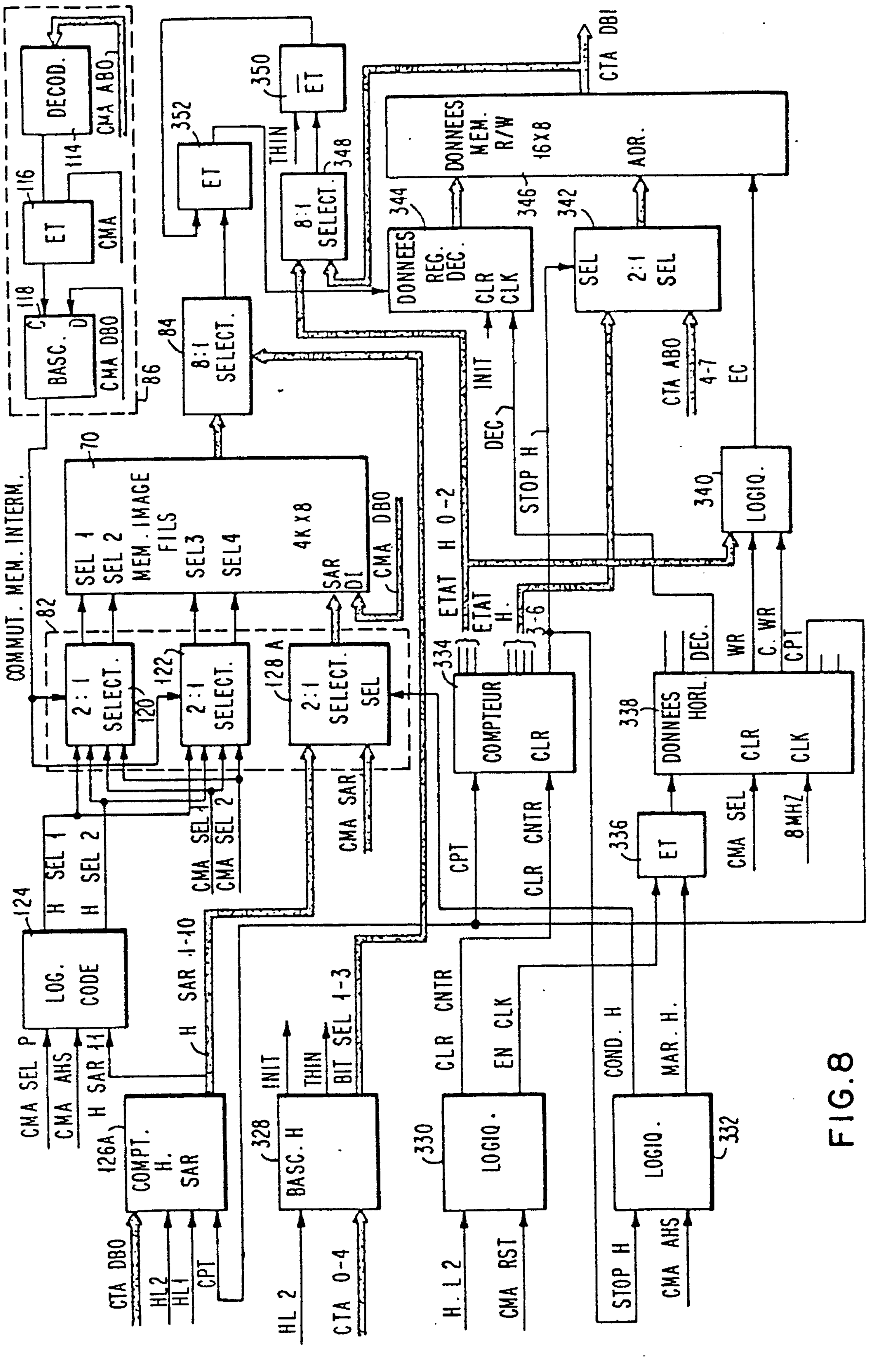
DECOD.
CMA ABO
114
116
ET
CMA
118
BASC.
C
D
CMA DBO
86
352
ET
350
ET
THIN
348
8:1 SELECT.
84
8:1 SELECT.
CTA DBI
DONNEES MEM. R/W 16X8
ADR.
344
DONNEES REG. DEC.
CLR
CLK
346
342
SEL
2:1
SEL
INIT
DEC
STOP H
CTA ABO 4-7
EC
340
LOGIQ.
COMMUT. MEM. INTERM.
70
SEL 1
SEL 2
MEM. IMAGE FILS
SEL3
SEL4
4K X 8
SAR
DI
CMA DBO
ETAT H 0-2
ETAT H. 3-6
82
2:1 SELECT.
120
122
2:1 SELECT.
128 A
2:1 SELECT.
SEL
334
COMPTEUR
CLR
338
DONNEES HORL.
DEC.
WR
C. WR
CPT
CLR
CLK
124
H SEL 1
H SEL 2
LOG. CODE
CMA SEL 1
CMA SEL 2
CMA SAR
CPT
CLR CNTR
336
ET
CMA SEL
8MHZ
CMA SEL P
CMA AHS
H SAR 11
H SAR 1-10
H
126A
COMPT. H. SAR
CTA DBO
HL2
HL1
CPT
INIT
THIN
BIT SEL 1-3
328
BASC. H
HL 2
CTA 0-4
CLR CNTR
EN CLK
330
LOGIQ.
H. L 2
CMA RST
COND. H
MAR. H.
LOGIQ.
332
STOP H
CMA AHS

FIG.8

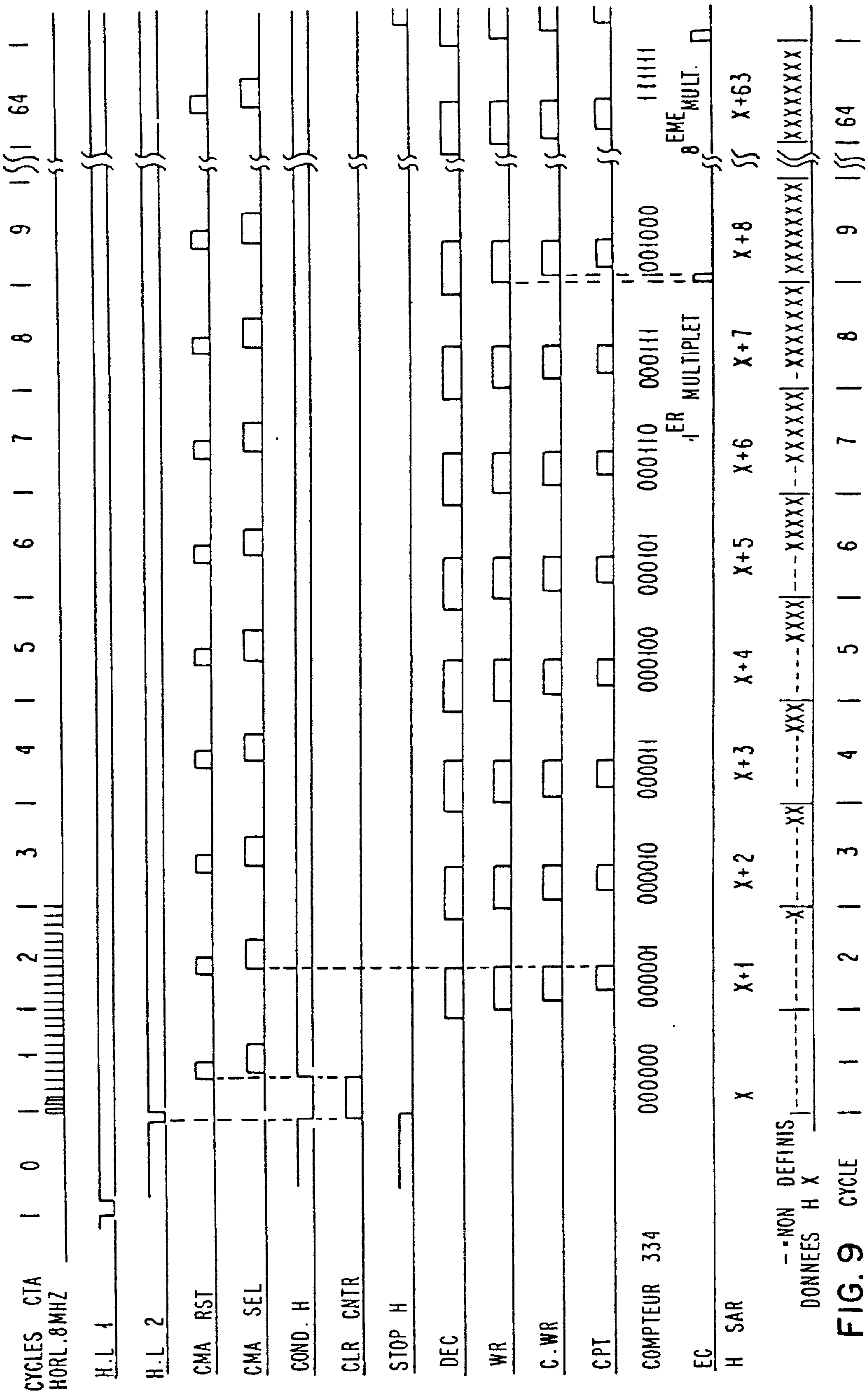

CYCLES CTA
HORL. 8MHZ
H.L 1
H.L 2
CMA RST
CMA SEL
COND. H
CLR CNTR
STOP H
DEC
WR
C.WR
CPT
COMPTEUR 334
EC
H SAR
- - NON DEFINIS
DONNEES H X
CYCLE
0 1 2 3 4 5 6 7 8 9 64
000000 000001 000010 000011 000100 000101 000110 000111 001000 111111
1ER MULTIPLET
8EME MULT.
X X+1 X+2 X+3 X+4 X+5 X+6 X+7 X+8 X+63


FIG. 9

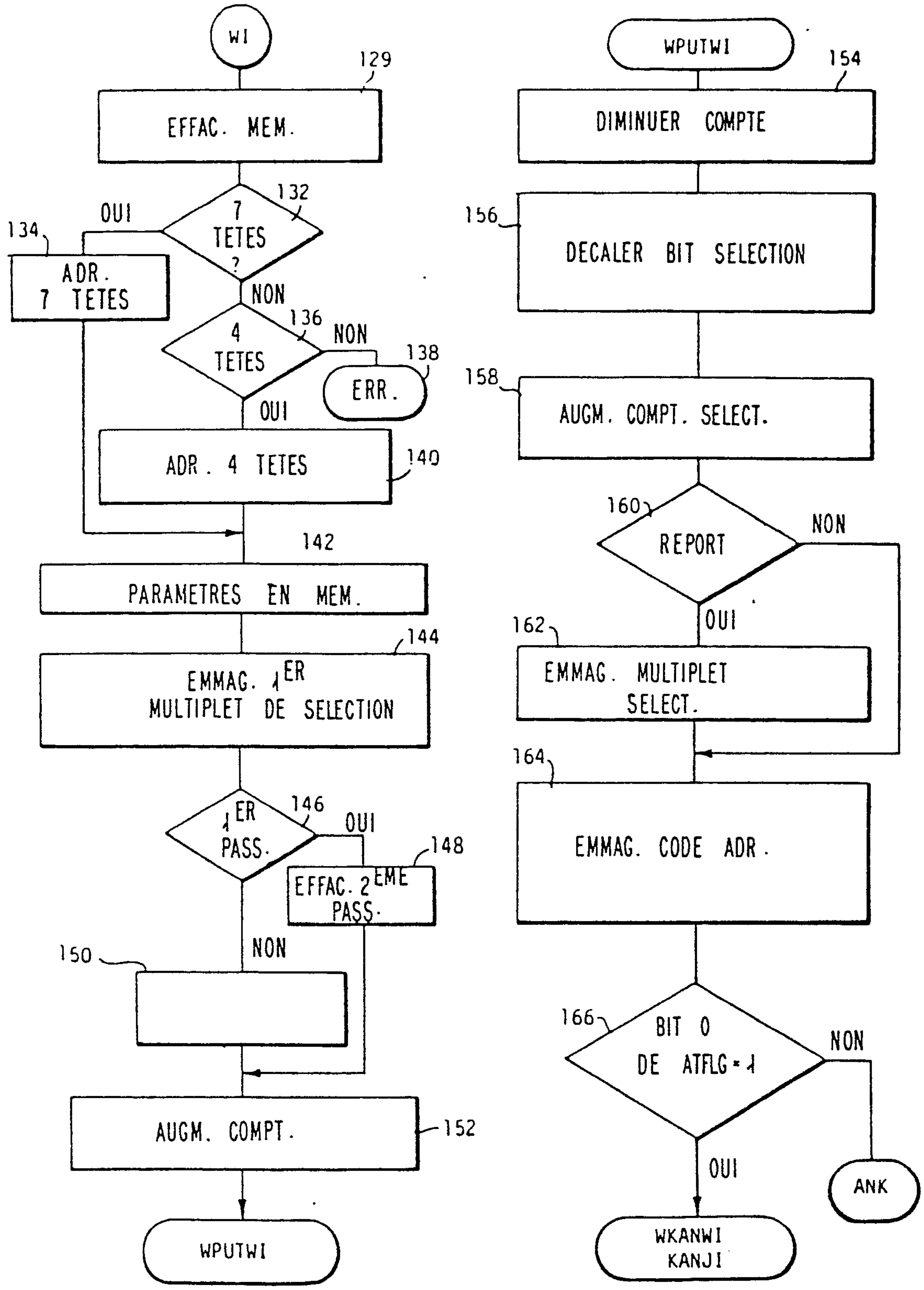
WI
129
EFFAC. MEM.
132
7 TETES ?
OUI
134
ADR. 7 TETES
NON
136
4 TETES
NON
138
ERR.
OUI
ADR. 4 TETES
140
142
PARAMETRES EN MEM.
144
EMMAG. 1ER MULTIPLET DE SELECTION
146
1ER PASS.
OUI
148
EFFAC. 2EME PASS.
NON
150
AUGM. COMPT.
152
WPUTWI
WPUTWI
154
DIMINUER COMPTE
156
DECALER BIT SELECTION
158
AUGM. COMPT. SELECT.
160
REPORT
NON
OUI
162
EMMAG. MULTIPLET SELECT.
164
EMMAG. CODE ADR.
166
BIT 0 DE ATFLG = 1
NON
OUI
ANK
WKANWI KANJI

FIG.10

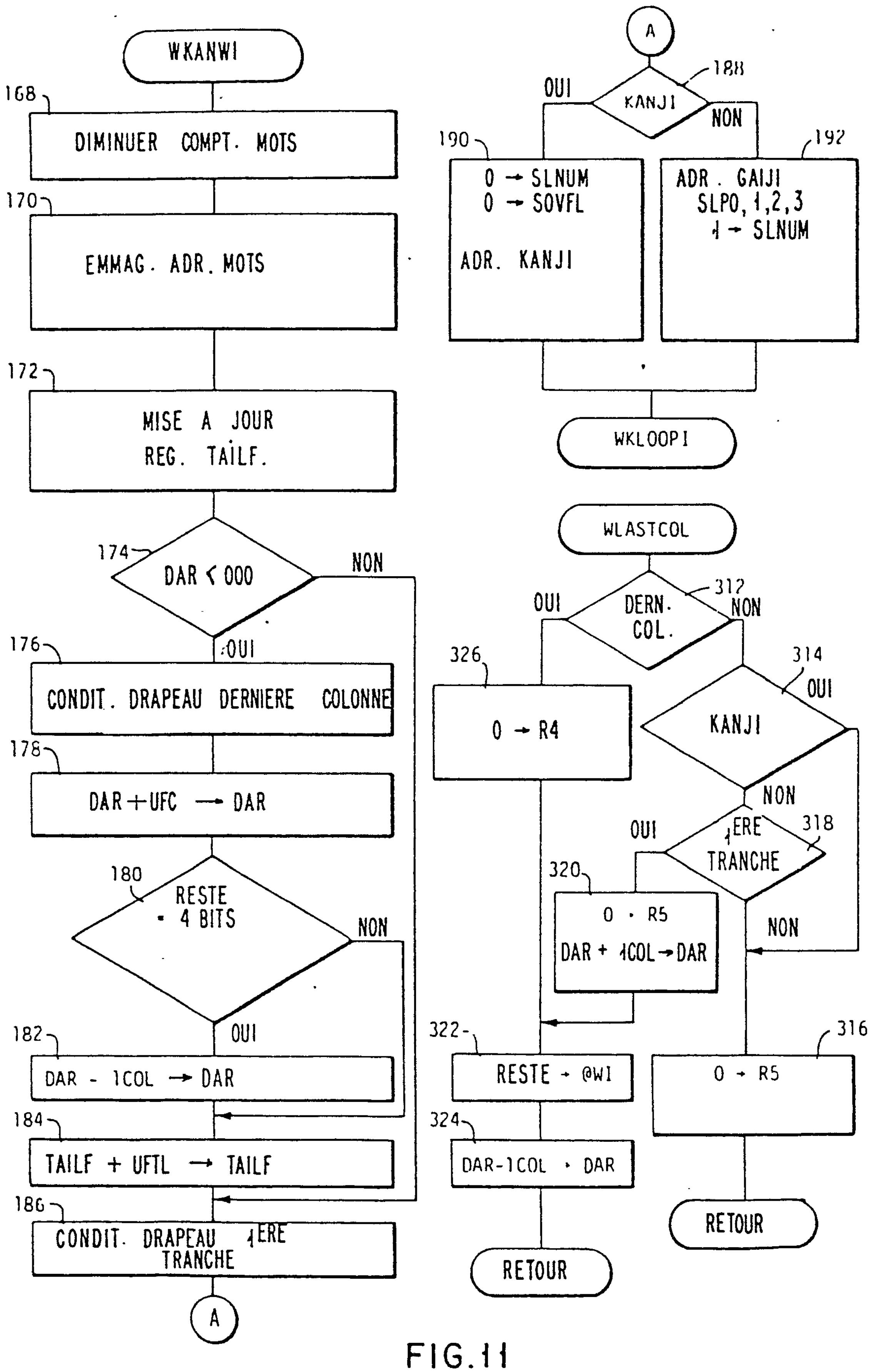
WKANWI
168
DIMINUER COMPT. MOTS
170
EMMAG. ADR. MOTS
172
MISE A JOUR
REG. TAILF.
174
DAR < 000
NON
OUI
176
CONDIT. DRAPEAU DERNIERE COLONNE
178
DAR + UFC → DAR
180
RESTE
= 4 BITS
NON
OUI
182
DAR - 1COL → DAR
184
TAILF + UFTL → TAILF
186
CONDIT. DRAPEAU 1ERE TRANCHE
A
A
188
KANJI
OUI
NON
190
0 → SLNUM
0 → SOVFL
ADR. KANJI
192
ADR. GAIJI
SLPO, 1,2,3
1 → SLNUM
WKLOOPI
WLASTCOL
312
DERN. COL.
OUI
NON
326
0 → R4
314
KANJI
OUI
NON
318
1ERE TRANCHE
OUI
NON
320
0 → R5
DAR + 1COL → DAR
322
RESTE → @WI
324
DAR-1COL → DAR
RETOUR
316
0 → R5
RETOUR

FIG.11

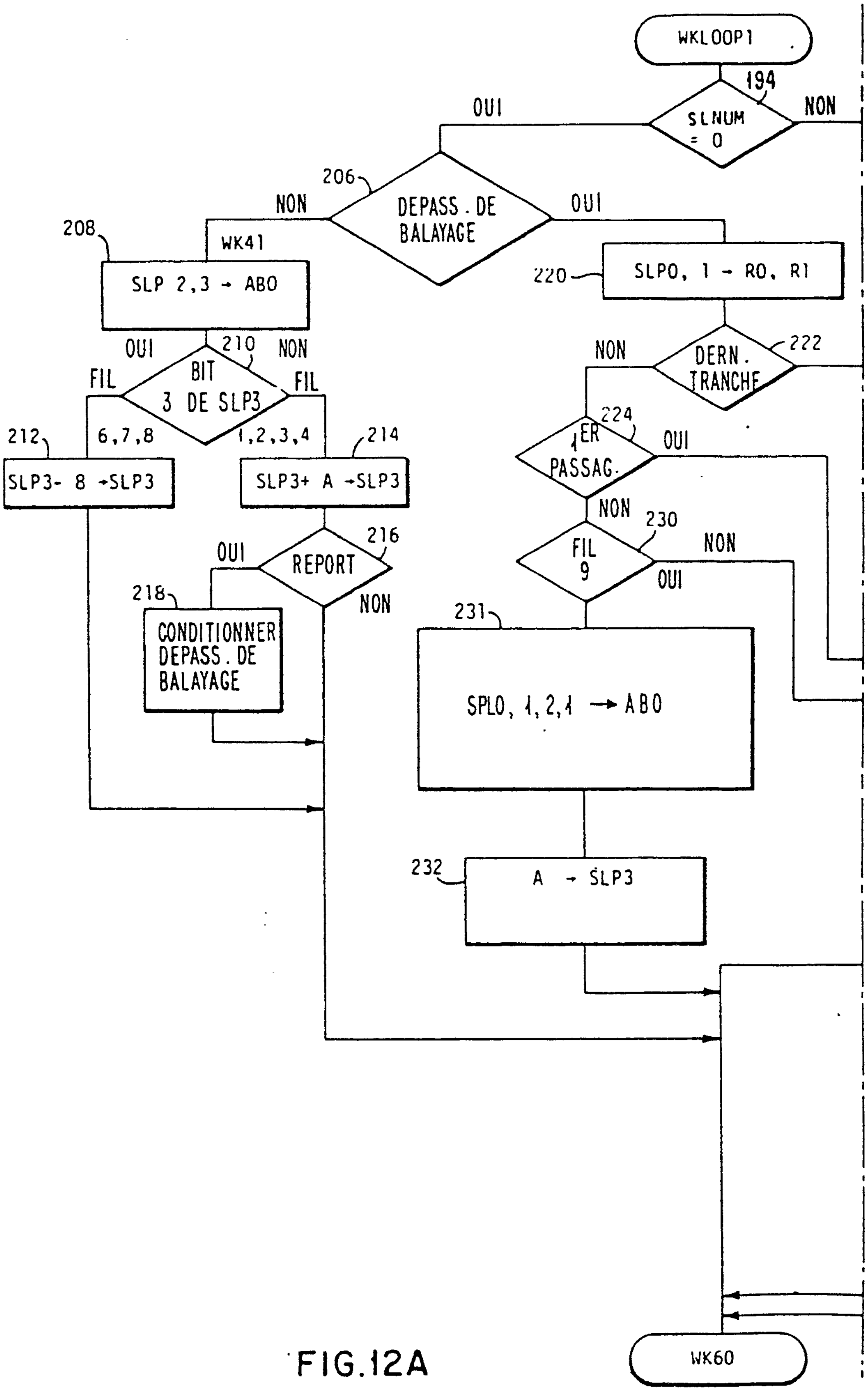
WKLOOP1
194
SLNUM = 0
OUI
NON
206
DEPASS. DE BALAYAGE
NON
OUI
208
WK41
SLP 2,3 → ABO
220
SLP0, 1 → R0, R1
OUI
210
NON
BIT 3 DE SLP3
FIL
FIL
6,7,8
1,2,3,4
NON
DERN. TRANCHE
222
224
1ER PASSAG.
OUI
212
SLP3- 8 →SLP3
214
SLP3+ A →SLP3
NON
230
FIL 9
NON
OUI
216
OUI
REPORT
NON
218
CONDITIONNER DEPASS. DE BALAYAGE
231
SPLO, 1, 2, 1 → ABO
232
A → SLP3
WK60

FIG.12A

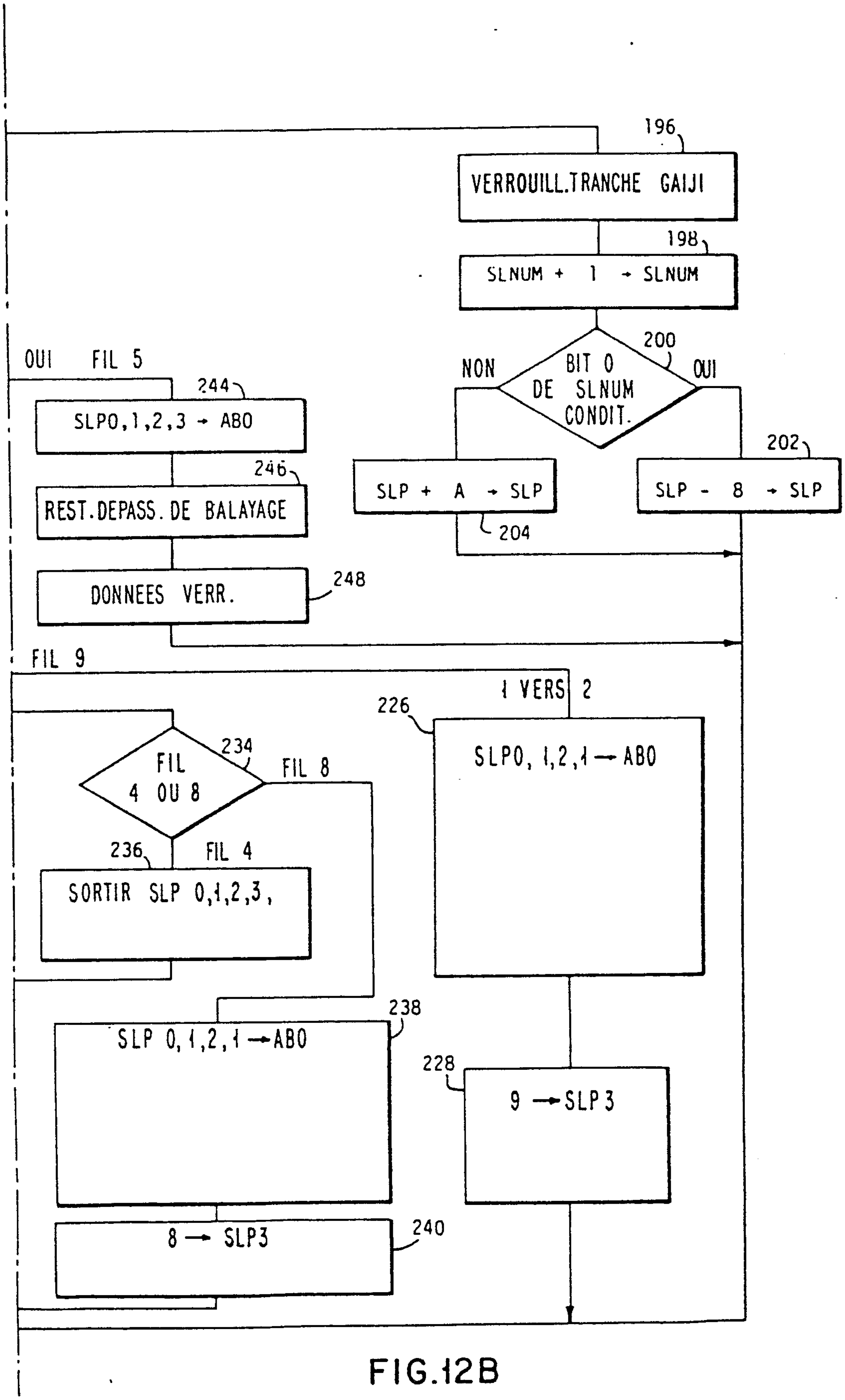

196
VERROUILL.TRANCHE GAIJI
198
SLNUM + 1 → SLNUM
200
BIT 0
DE SLNUM
CONDIT.
NON
OUI
SLP + A → SLP
204
202
SLP - 8 → SLP
OUI
FIL 5
244
SLP0,1,2,3 → AB0
246
REST.DEPASS. DE BALAYAGE
248
DONNEES VERR.
FIL 9
1 VERS 2
226
SLP0, 1,2,1 → AB0
234
FIL
4 OU 8
FIL 8
236
FIL 4
SORTIR SLP 0,1,2,3,
238
SLP 0, 1,2,1 → AB0
228
9 → SLP3
8 → SLP3
240


FIG.12B

FIG.13A

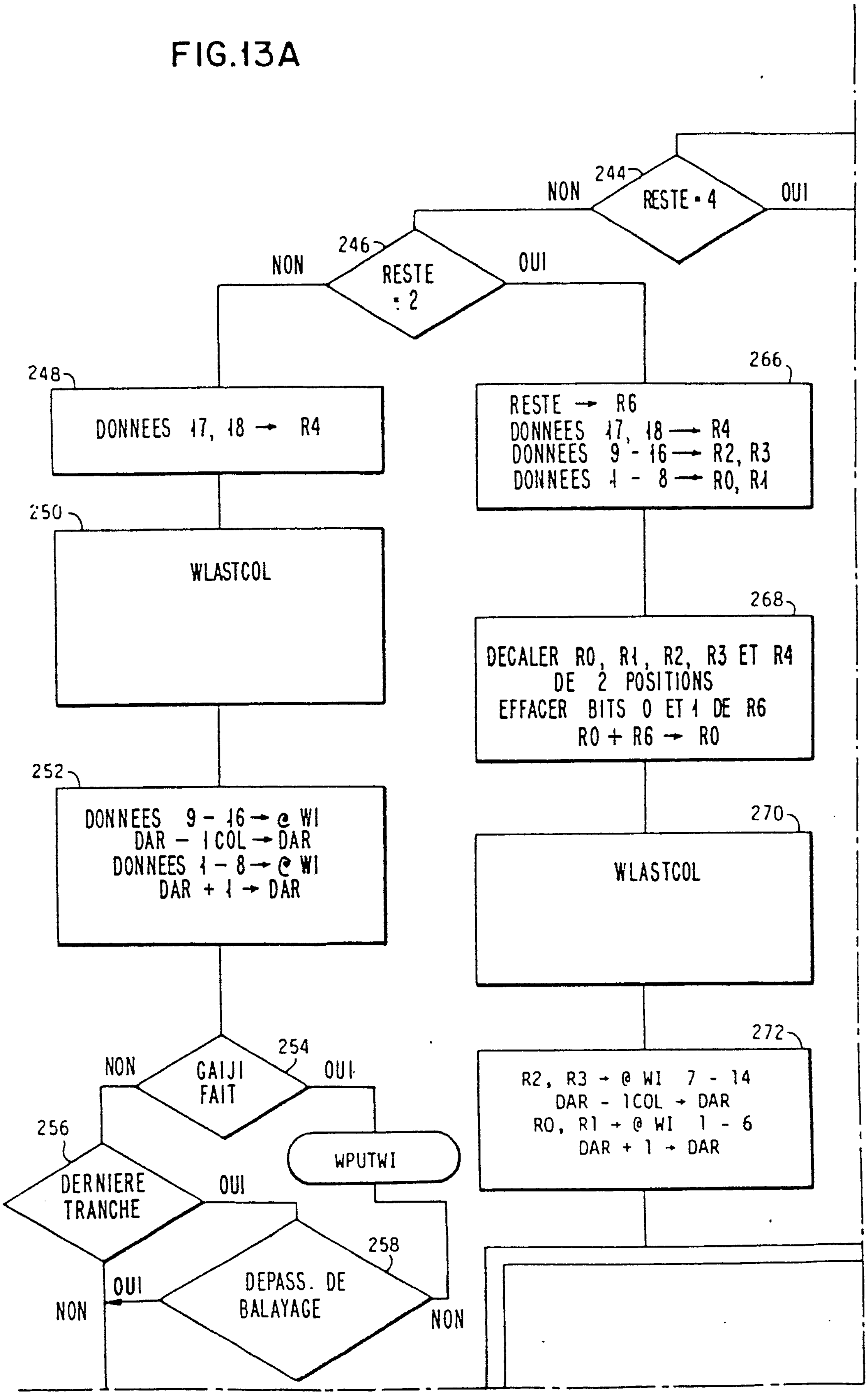
244
RESTE = 4
NON
OUI
246
RESTE = 2
NON
OUI
248
DONNEES 17, 18 → R4
250
WLASTCOL
252
DONNEES 9 - 16 → @ WI
DAR - 1COL → DAR
DONNEES 1 - 8 → @ WI
DAR + 1 → DAR
254
GAIJI FAIT
NON
OUI
WPUTWI
256
DERNIERE TRANCHE
OUI
NON
258
DEPASS. DE BALAYAGE
OUI
NON
266
RESTE → R6
DONNEES 17, 18 → R4
DONNEES 9 - 16 → R2, R3
DONNEES 1 - 8 → R0, R1
268
DECALER R0, R1, R2, R3 ET R4
DE 2 POSITIONS
EFFACER BITS 0 ET 1 DE R6
R0 + R6 → R0
270
WLASTCOL
272
R2, R3 → @ WI 7 - 14
DAR - 1COL → DAR
R0, R1 → @ WI 1 - 6
DAR + 1 → DAR

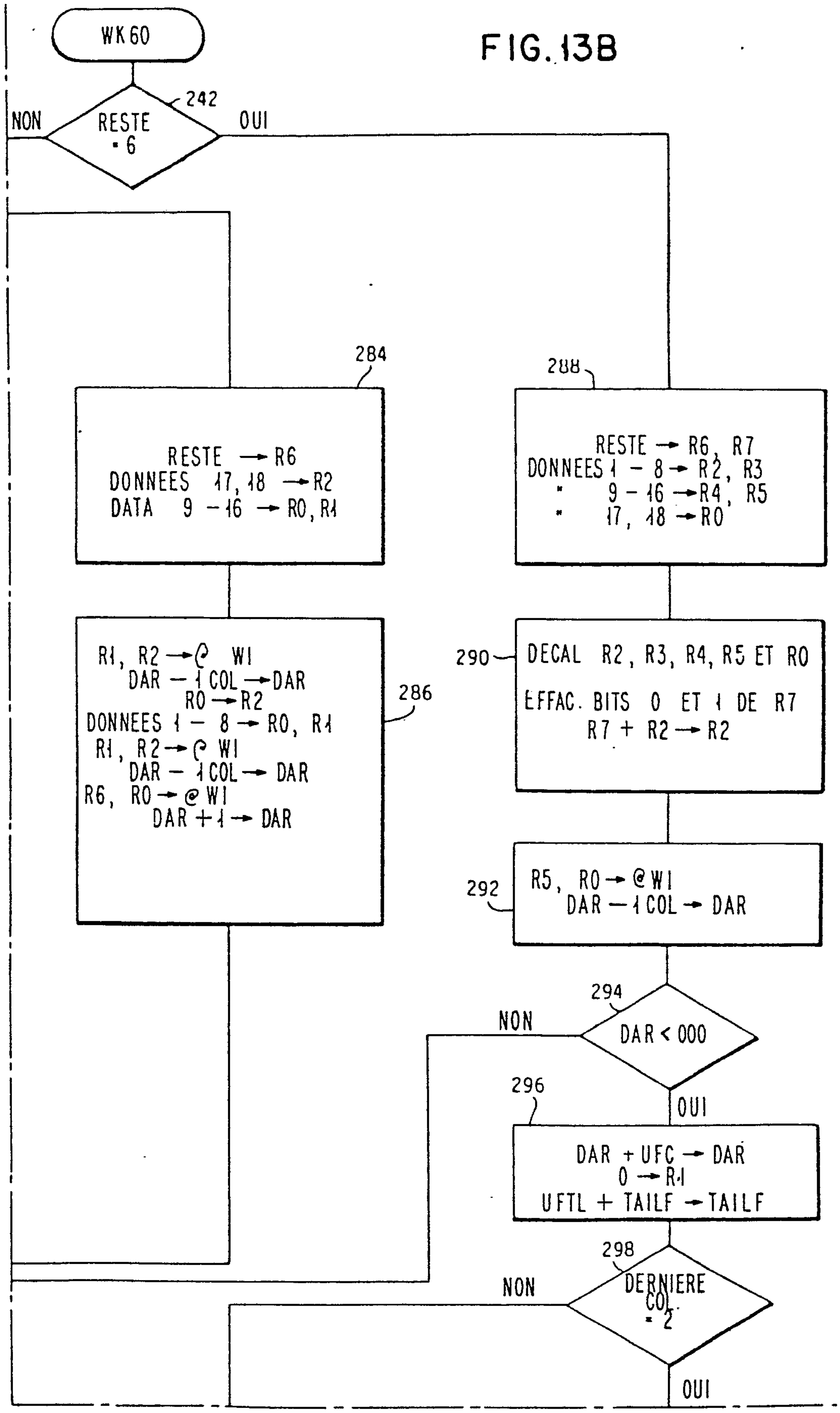
WK 60
242
RESTE = 6
NON
OUI
284
RESTE → R6
DONNEES 17, 18 → R2
DATA 9 – 16 → R0, R1
288
RESTE → R6, R7
DONNEES 1 – 8 → R2, R3
" 9 – 16 → R4, R5
" 17, 18 → R0
286
R1, R2 → @ W1
DAR – 1 COL → DAR
R0 → R2
DONNEES 1 – 8 → R0, R1
R1, R2 → @ W1
DAR – 1 COL → DAR
R6, R0 → @ W1
DAR + 1 → DAR
290
DECAL R2, R3, R4, R5 ET R0
EFFAC. BITS 0 ET 1 DE R7
R7 + R2 → R2
292
R5, R0 → @ W1
DAR – 1 COL → DAR
294
DAR < 000
NON
OUI
296
DAR + UFC → DAR
0 → R1
UFTL + TAILF → TAILF
298
DERNIERE COL = 2
NON
OUI

FIG. 13B

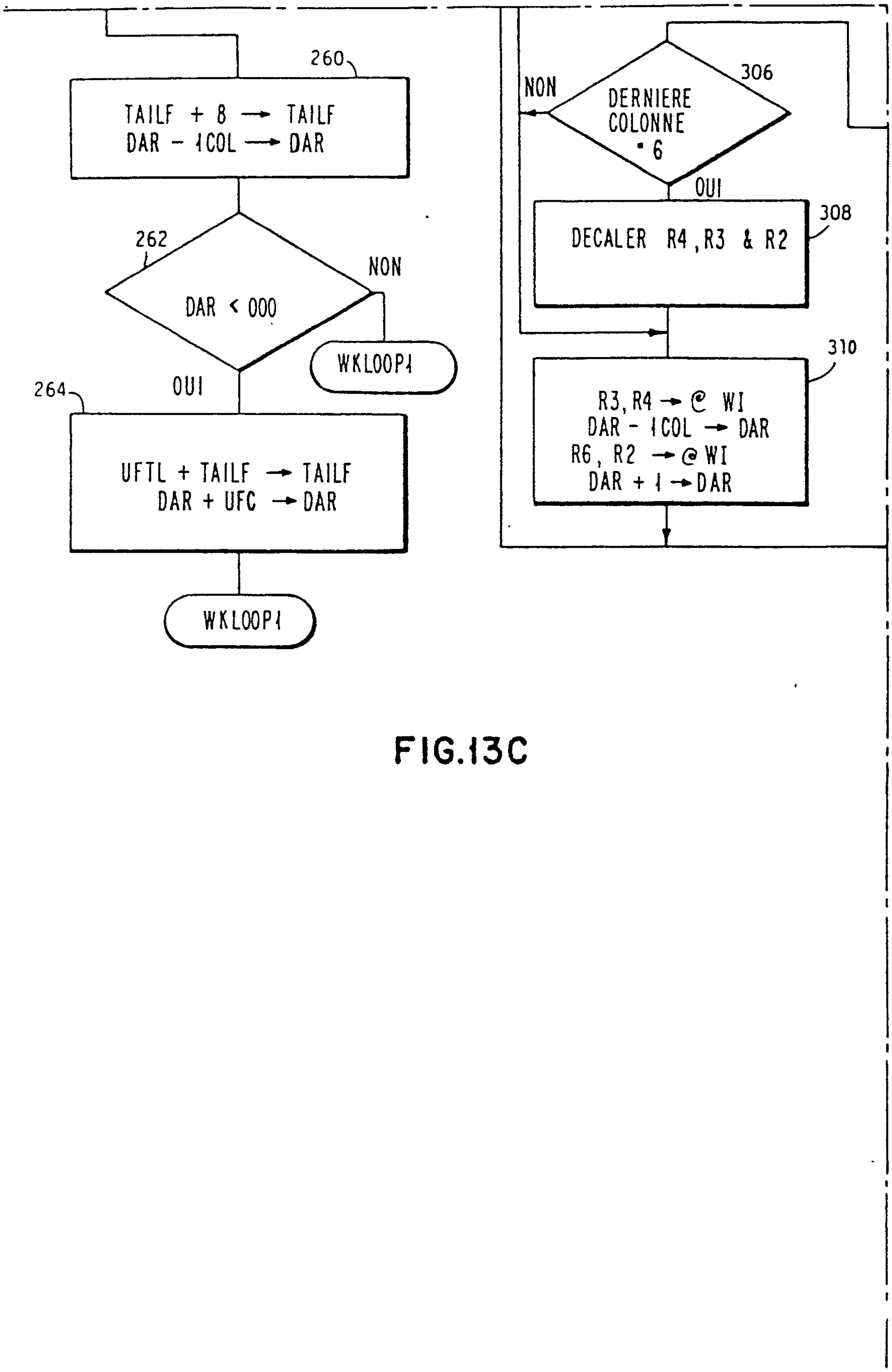
260
TAILF + 8 → TAILF
DAR - 1COL → DAR
262
DAR < 000
NON
WKLOOP1
OUI
264
UFTL + TAILF → TAILF
DAR + UFC → DAR
WKLOOP1
NON
DERNIERE
COLONNE
• 6
306
OUI
DECALER R4, R3 & R2
308
310
R3, R4 → @ WI
DAR - 1COL → DAR
R6, R2 → @ WI
DAR + 1 → DAR

FIG.13C

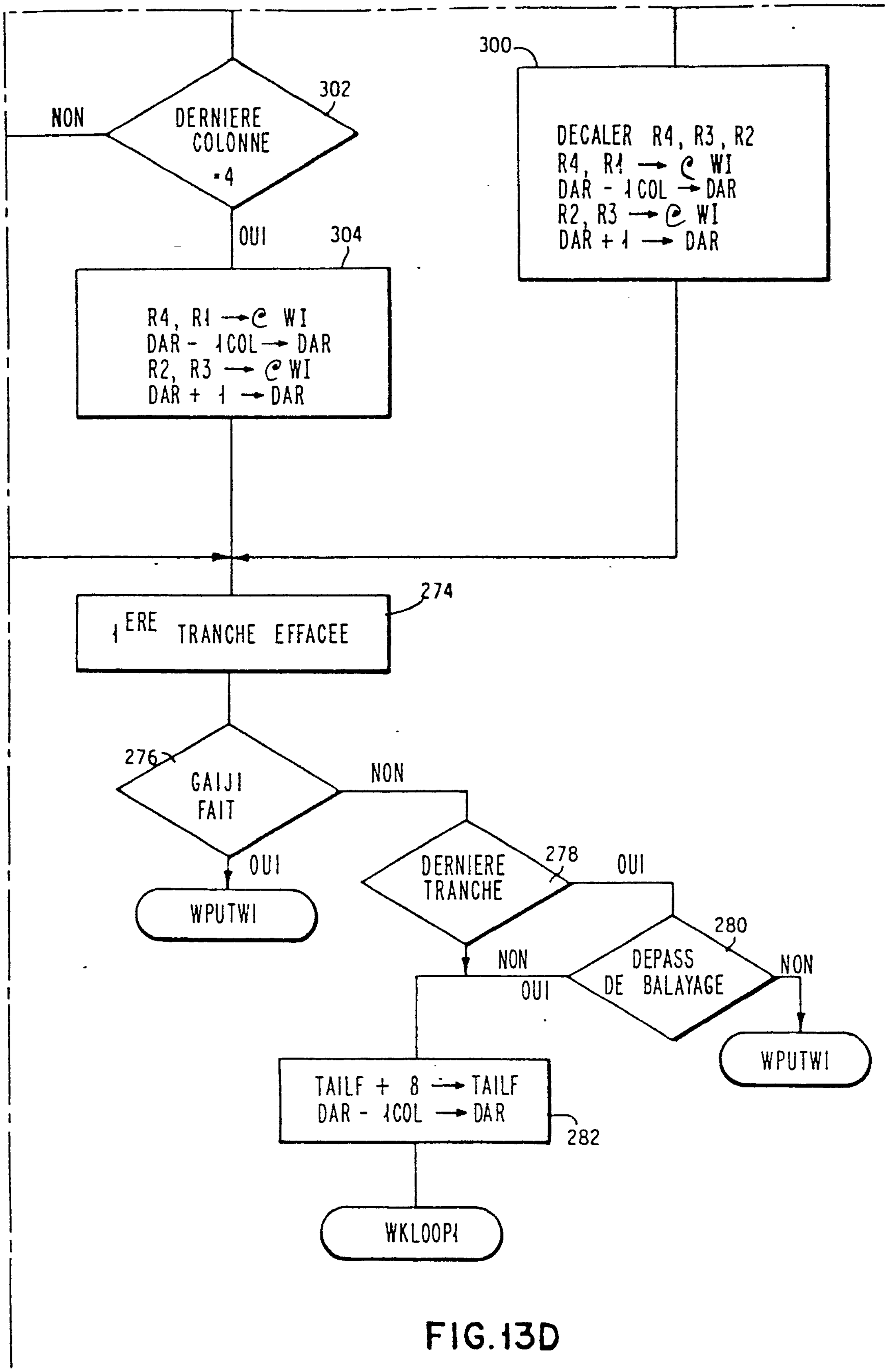
300
DECALER R4, R3, R2
R4, R1 → @ WI
DAR - 1COL → DAR
R2, R3 → @ WI
DAR + 1 → DAR
302
NON
DERNIERE COLONNE =4
OUI
304
R4, R1 → @ WI
DAR - 1COL → DAR
R2, R3 → @ WI
DAR + 1 → DAR
274
1ERE TRANCHE EFFACEE
276
GAIJI FAIT
NON
OUI
WPUTWI
DERNIERE TRANCHE
278
OUI
280
NON
DEPASS DE BALAYAGE
OUI
NON
WPUTWI
TAILF + 8 → TAILF
DAR - 1COL → DAR
282
WKLOOP1

FIG.13D

| | TRANCHE - 2 | TRANCHE - 1 | FIL | | | | | | | | | | |
|---|---|---|---|---|---|---|---|---|---|---|---|---|---|
| | | | | 1 | 2 | 3 | | 4 | 5 | 6 | 7 | | 8 |
| | | | | 1 | 2 | 3 | 4 | 5 | 6 | 7 | 8 | 9 | 10 |
| | | | | H8 | L2H6 | L4H4 | L6H2 | L8 | H8 | L2H6 | L4H4 | L6H2 | L8 |
| | | | | 000 | 048 | 090 | 0D8 | 120 | 168 | 1B0 | 1F8 | 240 | 288 |
| TETE #1 | 2 | 1 | 1 | ƀ | ƀ | ƀ | ƀ | · | ƀ | ƀ | ƀ | ƀ | · |
| | 12 | 11 | 6 | | | | | · | | | | | · |
| | 4 | 3 | 2 | | | | | · | | | | | · |
| | 14 | 13 | 7 | | | | | · | | | | | · |
| | 6 | 5 | 3 | | | | | · | | | | | · |
| | 16 | 15 | 8 | | | | | · | | | ·1 | ·2 | · |
| | 8 | 7 | 4 | | | | | · | 1 | ·2 | | | · |
| | 18 | 17 | 9 | | | ·1 | ·2 | · | | | | | · |
| | 10 | 9 | 5 | 1 | ·2 | ·3 | ·4 | · | ·5 | ·6 | ·7 | ·8 | · |
| TETE #2 | 2 | 1 | 1 | 5 | ·6 | ·7 | ·8 | · | ·9 | ·10 | ·11 | ·12 | · |
| | 12 | 11 | 6 | 7 | | ·9 | ·10 | · | | | | | · |
| | 4 | 3 | 2 | 9 | ·10 | | | · | | | | | · |
| | 14 | 13 | 7 | 11 | | | | · | | | | | · |
| | 6 | 5 | 3 | 13 | | | | · | | | | | · |
| | 16 | 15 | 8 | 15 | | | | · | | | | | · |
| | 8 | 7 | 4 | 17 | | | | · | | | ·23 | ·24 | · |
| | 18 | 17 | 9 | 19 | | | | · | ·23 | ·24 | | | · |
| | 10 | 9 | 5 | 21 | | ·23 | ·24 | · | | | | | · |
| TETE #3 | 2 | 1 | 1 | 25 | ·26 | ·27 | ·28 | · | ·29 | ·30 | ·31 | ·32 | · |
| | 12 | 11 | 6 | 27 | | | | · | | | | | · |
| | 4 | 3 | 2 | 29 | | | | · | | | | | · |
| | 14 | 13 | 7 | 31 | | | | · | | | | | · |
| | 6 | 5 | 3 | 33 | | | | · | | | | | · |
| | 16 | 15 | 8 | 35 | | | | · | | | | | · |
| | 8 | 7 | 4 | 37 | | | | · | | | | | · |
| | 18 | 17 | 9 | 39 | | | | · | | | | | · |
| | 10 | 9 | 5 | 41 | | | | · | | | | | · |
| TETE #4 | 2 | 1 | 1 | 45 | | | | · | | | | | · |
| | 12 | 11 | 6 | 47 | | | | · | | | | | · |
| | 4 | 3 | 2 | 49 | | | | · | | | | | · |
| | 14 | 13 | 7 | 51 | | | | · | | | | | · |
| | 6 | 5 | 3 | 53 | | | | · | | | | | · |
| | 16 | 15 | 8 | 55 | | | | · | | | | | · |
| | 8 | 7 | 4 | 57 | | | | · | | | | | · |
| | 18 | 17 | 9 | 59 | | | | · | | | | | · |
| | 10 | 9 | 5 | 61 | | | | · | | | | | · |

FIG. 14A

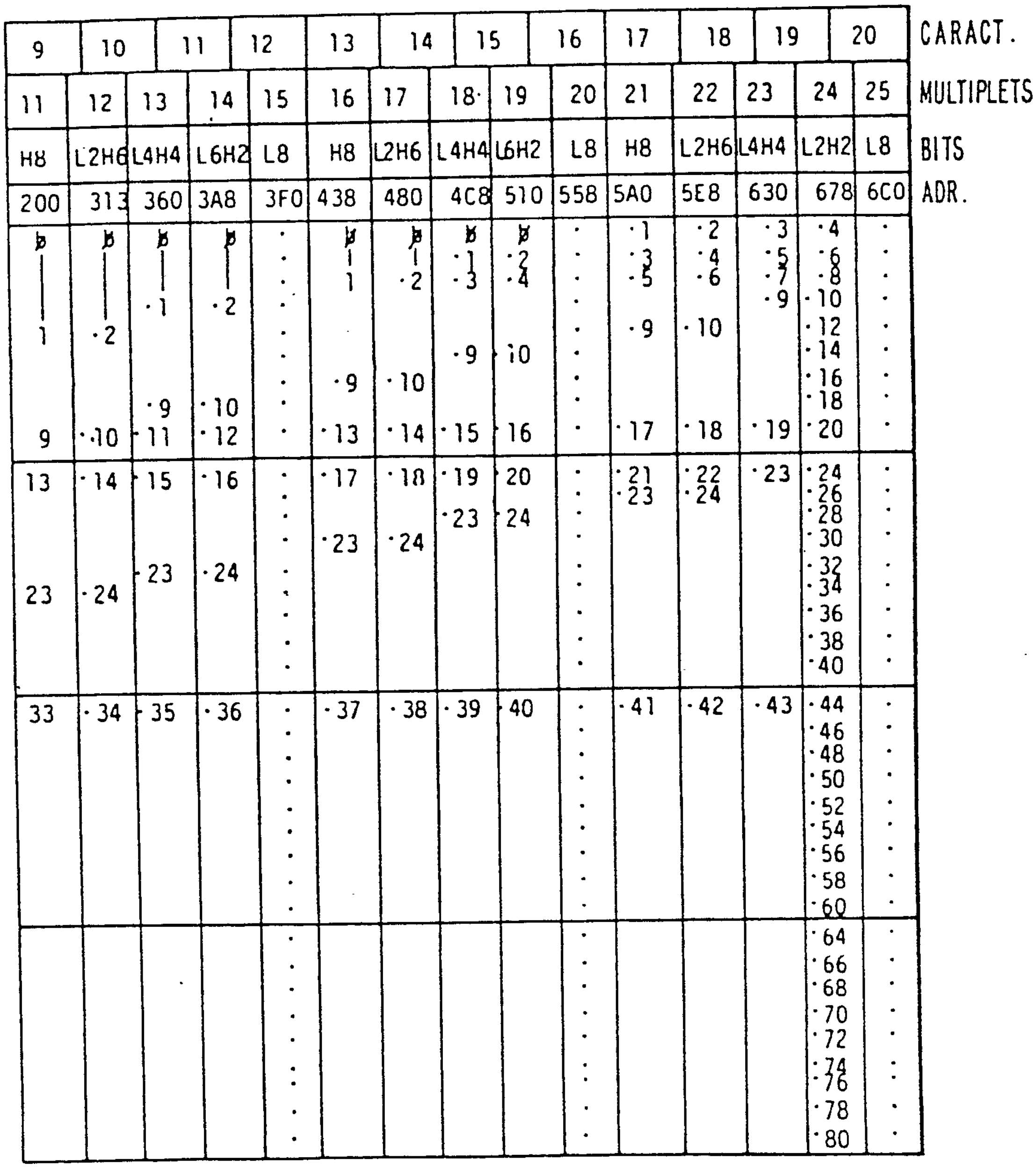
CARACT.
MULTIPLETS
BITS
ADR.
9 10 11 12 13 14 15 16 17 18 19 20
11 12 13 14 15 16 17 18 19 20 21 22 23 24 25
H8 L2H6 L4H4 L6H2 L8 H8 L2H6 L4H4 L6H2 L8 H8 L2H6 L4H4 L2H2 L8
200 313 360 3A8 3F0 438 480 4C8 510 558 5A0 5E8 630 678 6C0

FIG. 14B

| | | | | | | | | | | | | | |
|---|---|---|---|---|---|---|---|---|---|---|---|---|---|
| TETE #5 | 2<br>12<br>4<br>14<br>6<br>16<br>8<br>18<br>10 | 1<br>11<br>3<br>13<br>5<br>15<br>7<br>17<br>9 | 1<br>6<br>2<br>7<br>3<br>8<br>4<br>9<br>5 | 65<br>67<br>69<br>71<br>73<br>75<br>77<br>79<br>81 | | | | . . . . . . . . . | | | | | . . . . . . . . . |
| TETE #6 | 2<br>12<br>4<br>14<br>6<br>16<br>8<br>18<br>10 | 1<br>11<br>3<br>13<br>5<br>15<br>7<br>17<br>9 | 1<br>6<br>2<br>7<br>3<br>8<br>4<br>9<br>5 | 85<br>87<br>89<br>91<br>93<br>95<br>97<br>99<br>101 | | | | . . . . . . . . . | | | | | . . . . . . . . . |
| TETE #7 | 2<br>12<br>4<br>14<br>6<br>16<br>8<br>18<br>10 | 1<br>11<br>3<br>13<br>5<br>15<br>7<br>17<br>9 | 1<br>6<br>2<br>7<br>3<br>8<br>4<br>9<br>5 | 105<br>107<br>109<br>111<br>113<br>115<br>117<br>119<br>121 | ·122 | ·121<br>·123 | ·122<br>·124 | . . . . . . . . . | ·121 | ·122 | ·121 | ·122 | . . . . . . . . . |
| TETE #7 PROLONG | 2<br>12<br>4<br>14<br>6<br>16<br>8<br>18<br>10 | 1<br>11<br>3<br>13<br>5<br>15<br>7<br>17<br>9 | 1<br>6<br>2<br>7<br>3<br>8<br>4<br>5<br>5 | 125<br>127<br>129<br>131<br>ƀ | ·126<br>·128<br>·130<br>·132<br>ƀ | ·127<br>·129<br>·131<br>ƀ | ·128<br>·130<br>·132<br>ƀ | . . . . . . . . . | ·129<br>·131<br>ƀ | ·130<br>·132<br>ƀ | ·131<br>ƀ | ·132<br>ƀ | . . . . . . . . . |

FIG. 14C

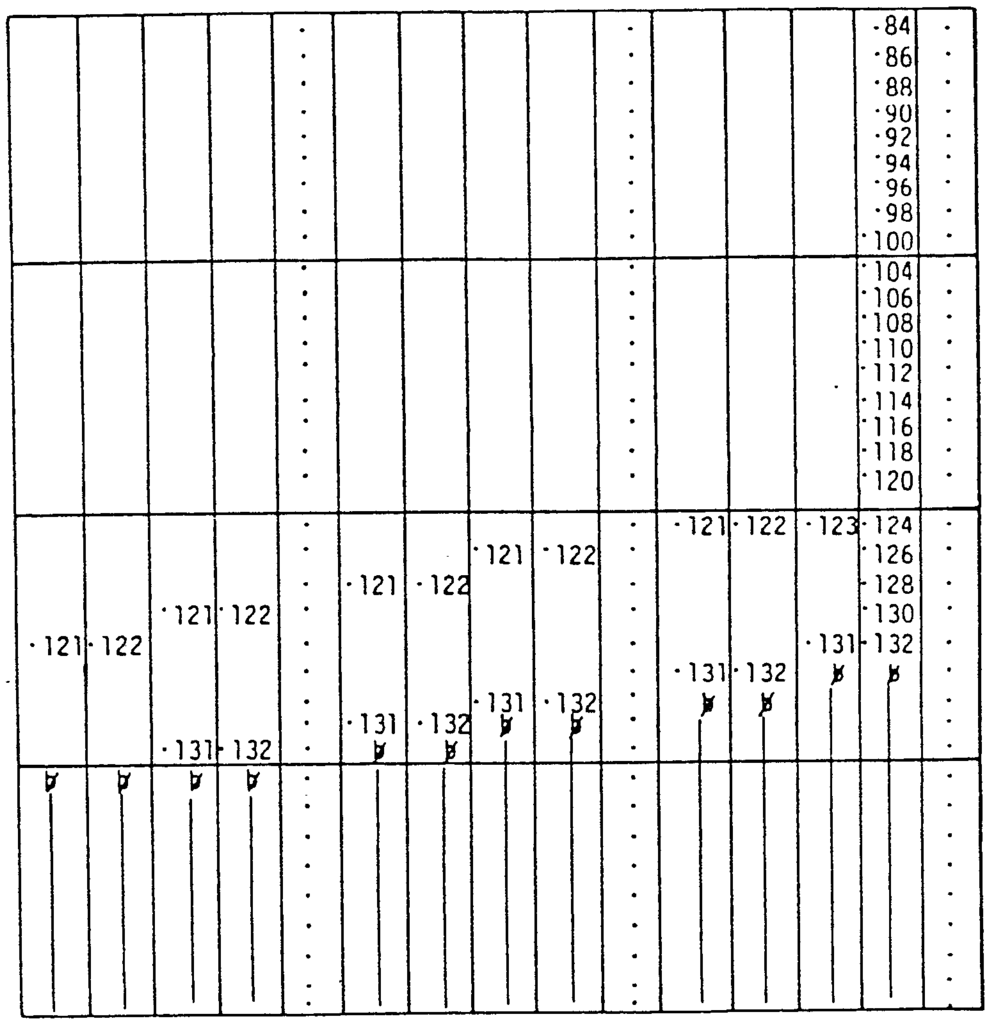
84
86
88
90
92
94
96
98
100
104
106
108
110
112
114
116
118
120
121
122
123
124
126
128
130
131
132

FIG. 14D

| TETE | TRANCHE 2 | TRANCHE 1 | FIL | 1 | 2 | | 3 | 4 | 5 | 6 | 7 | | 8 | 9 | 10 | 11 | | 12 | 13 | 14 | 15 | | 16 |
|---|---|---|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 14 | 15 | 16 | 17 | 18 | 19 | 20 |
| | | | | H8 | L2H6 | L4H4 | L6H2 | L8 | H8 | L2H6 | L4H4 | L6H2 | L8 | H8 | L2H6 | L4H4 | L6H2 | L8 | H8 | L2H6 | L4H4 | L6H2 | L8 |
| | | | | 000 | 02D | 05A | 087 | 0B4 | 0E1 | 10E | 13B | 168 | 195 | 1C2 | 1EF | 21C | 249 | 276 | 2A3 | 2D0 | 2ED | 32A | 357 |
| TETE #1 | 2 | 1 | 1 | ƀ | ƀ | ƀ | ƀ | · | ƀ | ƀ | ƀ | ƀ | · | ƀ | ƀ | ƀ | ƀ | · | ƀ | ƀ | ƀ | ƀ | · |
| | 12 | 11 | 6 | │ | │ | │ | │ | · | │ | │ | │ | │ | · | │ | │ | │ | │ | · | ƀ | ·ƀ | ·1 | ·2 | · |
| | 4 | 3 | 2 | │ | │ | │ | │ | · | │ | │ | │ | │ | · | │ | │ | ƀ | ƀ | · | 1 | ·2 | ·3 | 4 | · |
| | 14 | 13 | 7 | │ | │ | │ | │ | · | │ | │ | │ | │ | · | ƀ | ƀ | ·1 | ·2 | · | 3 | ·4 | 5 | 6 | · |
| | 6 | 5 | 3 | │ | │ | │ | │ | · | │ | │ | ƀ | ƀ | · | 1 | ·2 | ·3 | ·4 | · | 5 | ·6 | ·7 | ·8 | · |
| | 16 | 15 | 8 | │ | │ | │ | │ | · | ƀ | ƀ | ·1 | ·2 | · | 3 | ·4 | ·5 | ·6 | · | 7 | 8 | ·9 | ·10 | · |
| | 8 | 7 | 4 | │ | │ | ƀ | ƀ | · | 1 | ·2 | ·3 | ·4 | · | 5 | ·6 | ·7 | ·8 | · | 9 | ·10 | 11 | 12 | · |
| | 18 | 17 | 9 | ƀ | ƀ | ·1 | ·2 | · | 3 | ·4 | ·5 | ·6 | · | 7 | ·8 | ·9 | ·10 | · | 11 | 12 | 13 | 14 | · |
| | 10 | 9 | 5 | 1 | ·2 | ·3 | ·4 | · | 5 | ·6 | ·7 | ·8 | · | 9 | ·10 | ·11 | ·12 | · | 13 | 14 | 15 | ·16 | · |
| TETE #2 | 2 | 1 | 1 | 20 | · | | | · | | | | | · | | | | | | | | | ·35 | · |
| | 12 | 11 | 6 | 22 | · | | | · | | | | | · | | | | | · | | ·35 | 36 | | · |
| | 4 | 3 | 2 | 24 | · | | | · | | | | | · | | | | ·35 | · | 36 | | | | · |
| | 14 | 13 | 7 | 26 | | | | · | | | | | · | | ·35 | ·36 | | · | | | | | · |
| | 6 | 5 | 3 | 28 | | | | · | | | | ·35 | · | 36 | | | | · | | | | | |
| | 16 | 15 | 8 | 30 | | | | · | | ·35 | ·36 | | · | | | | | · | | | | | |
| | 8 | 7 | 4 | 32 | | | ·35 | · | 36 | | | | · | | | | | · | | | | ·47 | · |
| | 18 | 17 | 9 | 34 | ·35 | ·36 | | · | | | | | · | | | | | · | | ·47 | ·48 | | |
| | 10 | 9 | 5 | 36 | | | | · | | | | | · | | | | ·47 | · | 48 | | | | · |

FIG.15A

| CARACTERES | 17 | 18 | | 19 | 20 | 21 | 22 | | 23 | 24 | 25 | 26 | | 27 | 28 | 29 | 30 | 31 | | 32 | 33 | 34 | 35 | | |
|---|---|---|---|---|---|---|---|---|---|---|---|---|---|---|---|---|---|---|---|---|---|---|---|---|---|
| MULTIPLETS | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | |
| BITS | H8 | L2H6 | L4H4 | L6H2 | L8 | H8 | L2H6 | L4H4 | L6H2 | L8 | H8 | L2H6 | L4H4 | L6H2 | L8 | H8 | L2H6 | L4H4 | L6H2 | L8 | H8 | L2H6 | L4H4 | L6 | ƀ |
| ADRESSE | 384 | 3B1 | 3DE | 40B | 438 | 465 | 482 | 4BF | 4EC | 519 | 546 | 573 | 5A0 | 5CD | 5FA | 627 | 654 | 681 | 6AE | 6DB | 708 | 735 | 762 | 78F | ƀ |
| | 1 | ·2 | ·3 | ·4 | · | 5 | ·6 | ·7 | ·8 | · | 9 | ·10 | ·11 | ·12 | · | 13 | ·14 | ·15 | 16 | · | 17 | ·18 | 19 | · | ƀ |
| | 3 | ·4 | ·5 | ·6 | · | 7 | ·8 | ·9 | ·10 | · | 11 | ·12 | ·13 | ·14 | · | 15 | ·16 | ·17 | ·18 | · | 19 | 20 | ·21 | · | ƀ |
| | 5 | ·6 | ·7 | ·8 | · | 9 | ·10 | ·11 | ·12 | · | 13 | ·14 | ·15 | ·16 | · | 17 | ·18 | ·19 | ·20 | · | | | ·23 | · | ƀ |
| | 7 | ·8 | ·9 | ·10 | · | 11 | ·12 | ·13 | ·14 | · | 15 | ·16 | ·17 | ·18 | · | 19 | ·20 | | | · | | | ·25 | · | ƀ |
| | 9 | ·10 | ·11 | ·12 | · | 13 | ·14 | ·15 | ·16 | · | 17 | ·18 | ·19 | ·20 | · | | | | | · | | | 27 | · | ƀ |
| | 11 | 12 | ·13 | 14 | · | 15 | ·16 | ·17 | ·18 | · | 19 | ·20 | | | · | | | | | · | | | 29 | · | ƀ |
| | 13 | ·14 | ·15 | ·16 | · | 17 | ·18 | ·19 | ·20 | · | | | | | · | | | | | · | | | ·31 | · | ƀ |
| | 15 | ·16 | ·17 | ·18 | · | 19 | ·20 | | | · | | | | | · | | | | | · | | | 33 | · | ƀ |
| | 17 | ·18 | ·19 | ·20 | · | | | | | · | | | | | · | | | | | · | | | 35 | · | ƀ |
| | 36 | | | | · | | | | | · | | | | ·47 | · | 48 | | | | · | | | ·54 | · | ƀ |
| | | | | | · | | | | | · | | ·47 | ·48 | | · | | | | | · | | | ·56 | · | ƀ |
| | | | | | · | | | | ·47 | · | 48 | | | | · | | | | | · | | | 58 | | ƀ |
| | | | | | · | | ·47 | ·48 | | · | | | | | · | | | | | · | | | ·60 | | ƀ |
| | | | | ·47 | · | 48 | | | | · | | | | | · | | | | | · | | | ·62 | | ƀ |
| | | ·47 | ·48 | | · | | | | | · | | | | | · | | | | | · | | | ·64 | · | ƀ |
| | 48 | | | | · | | | | | · | | | | | · | | | | | · | | | ·66 | · | ƀ |
| | | | | | · | | | | | · | | | | | · | | | | | · | | | ·68 | · | ƀ |
| | | | | | · | | | | | · | | | | | · | | | | | | | | ·70 | · | ƀ |

FIG.15B

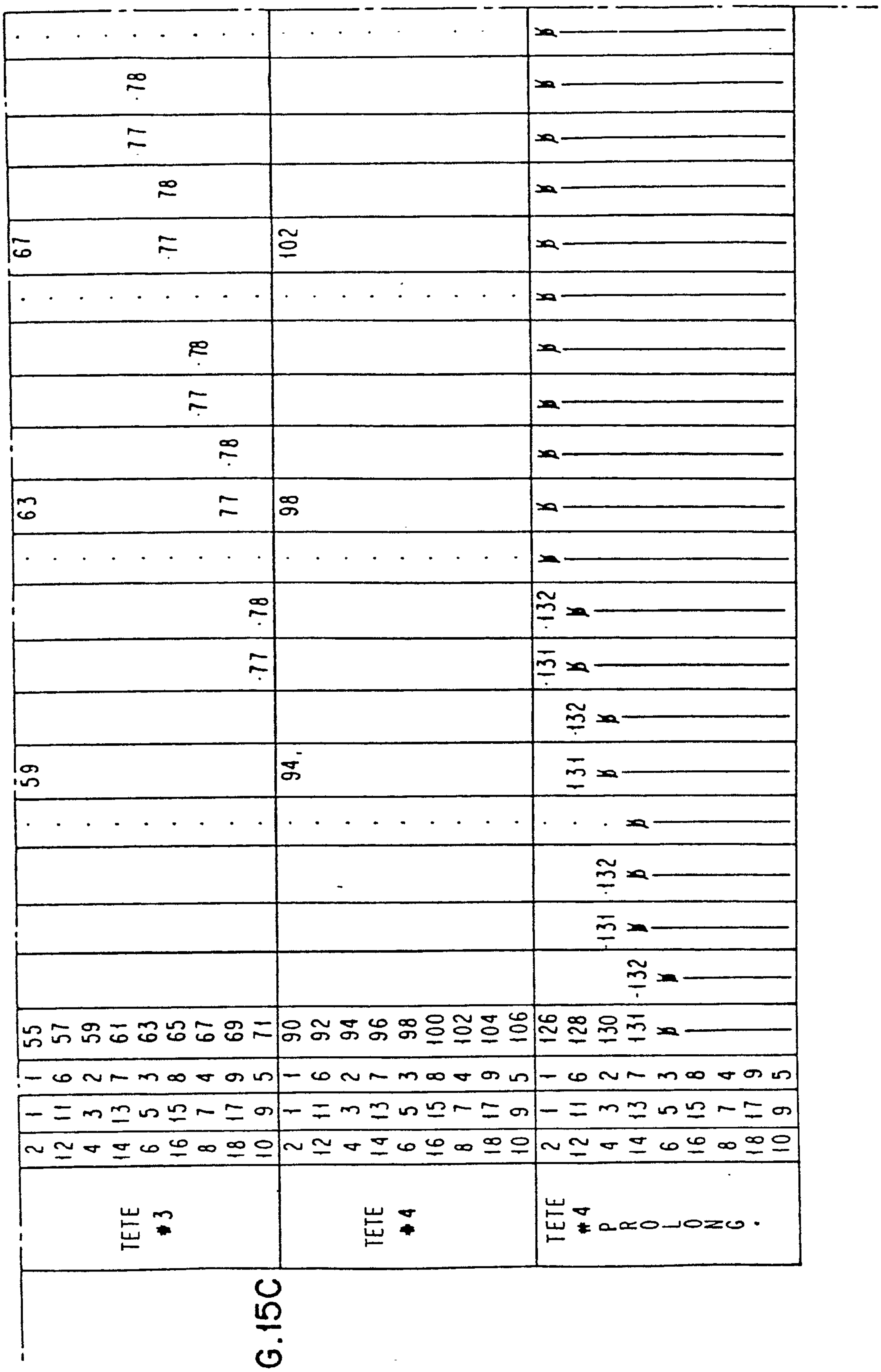


FIG.15C

FIG.15D